# EUROPEAN PATENT SPECIFICATION

(11) **EP 3 246 377 B1**
(45) Date of publication and mention of the grant of the patent: **27.02.2019**
(21) Application number: 17170967.8
(22) Date of filing: 15.05.2017
(51) Int. Cl.: C09K 19/54, G02F 1/1337, G02F 1/1333, C09K 19/44, C09K 19/12, C09K 19/30

(54) **LIQUID-CRYSTAL MEDIUM**
FLÜSSIGKRISTALLMEDIUM
SUPPORT À CRISTAUX LIQUIDES

(30) Priority: 18.05.2016 EP 16170155
(43) Date of publication of application: 22.11.2017
(73) Proprietor: Merck Patent GmbH, 64293 Darmstadt (DE)
(72) Inventor: Lee, Eun-Kyu, PYEONGTAEK-SI, GYEONGGI-DO, 17931 (KR); Jeong, Ji-Won, GIMPO-SI, GYEONGGI-DO 10073 (KR); Jin, Min-Ok, GUNPO-SI, GYEONGGI-DO 15824 (KR); Yun, Yong-Kuk, HWASEONG 18477 (KR)

(56) References cited:
- EP-A1- 3 127 991
- EP-A2- 2 514 800
- EP-A2- 2 722 380

## Description

The invention relates to a liquid-crystalline medium, in particular based on a mixture of polar compounds, and to the use thereof for an active-matrix display, in particular based on the VA, PSA, PS-VA, PA-VA, PALC, FFS, PS-FFS, IPS or PS-IPS effect.

Media of this type can be used, in particular, for electro-optical displays having active-matrix addressing based on the ECB effect and for IPS (in-plane switching) displays or FFS (fringe field switching) displays.

The principle of electrically controlled birefringence, the ECB effect or also DAP (deformation of aligned phases) effect, was described for the first time in 1971 (M.F. Schieckel and K. Fahrenschon, "Deformation of nematic liquid crystals with vertical orientation in electrical fields", Appl. Phys. Lett. 19 (1971), 3912). This was followed by papers by J.F. Kahn (Appl. Phys. Lett. 20 (1972), 1193) and G. Labrunie and J. Robert (J. Appl. Phys. 44 (1973), 4869).

The papers by J. Robert and F. Clerc (SID 80 Digest Techn. Papers (1980), 30), J. Duchene (Displays 7 (1986), 3) and H. Schad (SID 82 Digest Techn. Papers (1982), 244) showed that liquid-crystalline phases must have high values for the ratio of the elastic constants K₃/K₁, high values for the optical anisotropy Δn and values for the dielectric anisotropy of Δε ≤ -0.5 in order to be suitable for use in high-information display elements based on the ECB effect. Electro-optical display elements based on the ECB effect have a homeotropic edge alignment (VA technology = vertically aligned). Dielectrically negative liquid-crystal media can also be used in displays which use the so-called IPS or FFS effect.

Displays which use the ECB effect, as so-called VAN (vertically aligned nematic) displays, for example in the MVA (multi-domain vertical alignment, for example: Yoshide, H. et al., paper 3.1: "MVA LCD for Notebook or Mobile PCs ...", SID 2004 International Symposium, Digest of Technical Papers, XXXV, Book I, pp. 6 to 9, and Liu, C.T. et al., paper 15.1: "A 46-inch TFT-LCD HDTV Technology ...", SID 2004 International Symposium, Digest of Technical Papers, XXXV, Book II, pp. 750 to 753), PVA (patterned vertical alignment, for example: Kim, Sang Soo, paper 15.4: "Super PVA Sets New State-of-the-Art for LCD-TV", SID 2004 International Symposium, Digest of Technical Papers, XXXV, Book II, pp. 760 to 763), ASV (advanced super view, for example: Shigeta, Mitzuhiro and Fukuoka, Hirofumi, paper 15.2: "Development of High Quality LCDTV", SID 2004 International Symposium, Digest of Technical Papers, XXXV, Book II, pp. 754 to 757) modes, have established themselves as one of the three more recent types of liquid-crystal display that are currently the most important, in particular for television applications, besides IPS (in-plane switching) displays (for example: Yeo, S.D., paper 15.3: "An LC Display for the TV Application", SID 2004 International Symposium, Digest of Technical Papers, XXXV, Book II, pp. 758 & 759) and the long-known TN (twisted nematic) displays. The technologies are compared in general form, for example, in Souk, Jun, SID Seminar 2004, seminar M-6: "Recent Advances in LCD Technology", Seminar Lecture Notes, M-6/1 to M-6/26, and Miller, Ian, SID Seminar 2004, seminar M-7: "LCD-Television", Seminar Lecture Notes, M-7/1 to M-7/32. Although the response times of modern ECB displays have already been significantly improved by addressing methods with overdrive, for example: Kim, Hyeon Kyeong et al., paper 9.1: "A 57-in. Wide UXGA TFT-LCD for HDTV Application", SID 2004 International Symposium, Digest of Technical Papers, XXXV, Book I, pp. 106 to 109, the achievement of video-compatible response times, in particular on switching of grey shades, is still a problem which has not yet been satisfactorily solved.

Industrial application of this effect in electro-optical display elements requires LC phases, which have to satisfy a multiplicity of requirements. Particularly important here are chemical resistance to moisture, air and physical influences, such as heat, infrared, visible and ultraviolet radiation and direct and alternating electric fields.

Furthermore, industrially usable LC phases are required to have a liquid-crystalline mesophase in a suitable temperature range and low viscosity.

None of the hitherto-disclosed series of compounds having a liquid-crystalline mesophase includes a single compound which meets all these requirements.

Mixtures of two to 25, preferably three to 18, compounds are therefore generally prepared in order to obtain substances which can be used as LC phases. However, it has not been possible to prepare optimum phases easily in this way since no liquid-crystal materials having significantly negative dielectric anisotropy and adequate long-term stability were hitherto available.

Matrix liquid-crystal displays (MLC displays) are known. Non-linear elements which can be used for individual switching of the individual pixels are, for example, active elements (i.e. transistors). The term "active matrix" is then used, where a distinction can be made between two types:
1. MOS (metal oxide semiconductor) transistors on a silicon wafer as substrate
2. thin-film transistors (TFTs) on a glass plate as substrate.

In the case of type 1, the electro-optical effect used is usually dynamic scattering or the guest-host effect. The use of single-crystal silicon as substrate material restricts the display size, since even modular assembly of various part-displays results in problems at the joints.

In the case of the more promising type 2, which is preferred, the electro-optical effect used is usually the TN effect.

A distinction is made between two technologies: TFTs comprising compound semiconductors, such as, for example, CdSe, or TFTs based on polycrystalline or amorphous silicon. The latter technology is being worked on intensively worldwide.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The term MLC displays here covers any matrix display with integrated non-linear elements, i.e. besides the active matrix, also displays with passive elements, such as varistors or diodes (MIM = metal-insulator-metal).

MLC displays of this type are particularly suitable for TV applications (for example pocket TVs) or for high-information displays in automobile or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, pp. 141 ff., Paris; STROMER, M., Proc. Eurodisplay 84, Sept. 1984: Design of Thin Film Transistors for Matrix Addressing of Television Liquid Crystal Displays, pp. 145 ff., Paris]. With decreasing resistance, the contrast of an MLC display deteriorates. Since the specific resistance of the liquid-crystal mixture generally drops over the life of an MLC display owing to interaction with the inside surfaces of the display, a high (initial) resistance is very important for displays that have to have acceptable resistance values over a long operating period.

There thus continues to be a great demand for MLC displays having very high specific resistance at the same time as a large working-temperature range, short response times and a low threshold voltage with the aid of which various grey shades can be produced.

The disadvantage of the frequently-used MLC-TN displays is due to their comparatively low contrast, the relatively high viewing-angle dependence and the difficulty of generating grey shades in these displays.

VA displays have significantly better viewing-angle dependencies and are therefore principally used for televisions and monitors. However, there continues to be a need here to improve the response times, in particular with respect to the use of televisions having frame rates (image change frequency/repetition rates) of greater than 60 Hz. At the same time, however, the properties, such as, for example, the low-temperature stability, must not be impaired.

LC media with negative dielectric anisotropy and the use thereof in liquid-crystal displays which use the ECB (electrically controlled birefringence) or IPS (in-plane switching) effect are disclosed in EP 2 722 380 A2 or EP 2 514 800 A2, for instance.

The invention is based on the object of providing liquid-crystal mixtures, in particular for monitor and TV applications, which are based on the ECB effect or on the IPS or FFS effect, which do not have the above-mentioned disadvantages or only do so to a reduced extent. In particular, it must be ensured for monitors and televisions that they also operate at extremely high and extremely low temperatures and at the same time have short response times and at the same time have improved reliability behaviour, in particular have no or significantly reduced image sticking after long operating times.

It was surprisingly that it is possible to improve the rotational viscosities, and the ratio of rotational viscosity and elastic constants, and thus the response times, while maintaining a high reliability and high VHR values, when using a liquid-crystal mixture as disclosed and claimed hereinafter, which contains an alkenyl compound of formula AN1, a quaterphenyl compound of formula Q, a stabiliser of formula S and one or more compounds selected from the group of compounds of the formulae RM-1 to RM-121 as described below, in particular an LC mixture having negative dielectric anisotropy, preferably in LC displays of the VA or FFS mode.

The use of an LC mixture as disclosed and claimed hereinafter having negative dielectric anisotropy surprisingly results in very low rotational viscosities and in a reduction in the ratio of rotational viscosity and elastic constants, while maintaining a high reliability and high VHR values also after UV exposure. Liquid-crystal mixtures, preferably VA, PS (= polymer stabilised)-VA, PA (= photo alignment)-VA, IPS, PS-IPS, PS-FFS, FFS mixtures, in particular UB-FFS (ultra brightness fringe field switching) mixtures, which have short response times, at the same time good phase properties and good low-temperature behaviour can therefore be prepared.

### Summary of the Invention

The invention relates to a liquid crystal (LC) medium with negative dielectric anisotropy, comprising one or more compounds of formula Q, one or more compounds of formula AN, one or more compounds of formula S and one or more compounds selected from the group of compounds of the formulae RM-1 to RM-121 as described below 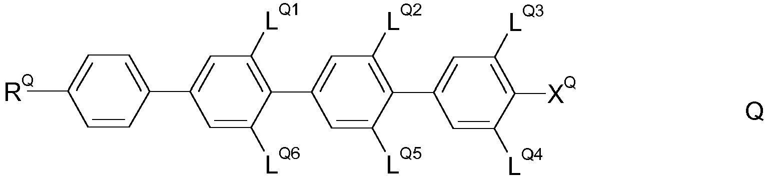 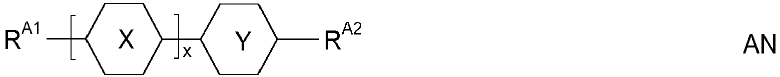 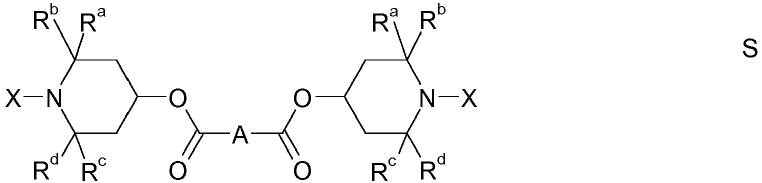 in which the individual radicals, on each occurrence identically or differently, and each, independently of one another, have the following meaning: 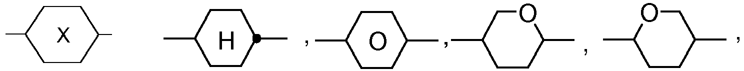 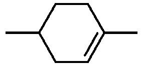 or 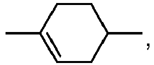 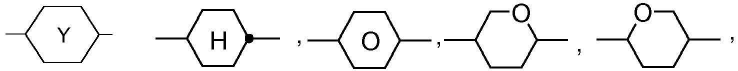 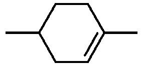 or 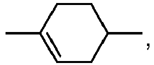
- R^{Q}: alkyl, alkoxy, oxaalkyl or alkoxyalkyl having 1 to 9 C atoms or alkenyl or alkenyloxy having 2 to 9 C atoms, all of which are optionally fluorinated,
- X^{Q}: F, Cl, halogenated alkyl or alkoxy having 1 to 6 C atoms or halogenated alkenyl or alkenyloxy having 2 to 6 C atoms,
- L^{Q1} to L^{Q6}: H or F, with at least one of L^{Q1} to L^{Q6} being F,
- R^{A1}: alkenyl having 2 to 9 C atoms or, if at least one of the rings X and Y denotes cyclohexenyl, also one of the meanings of R^{A2},
- R^{A2}: alkyl having 1 to 12 C atoms, in which, in addition, one or two non-adjacent CH₂ groups may be replaced by -O-, -CH=CH-,-CO-, -OCO- or -COO- in such a way that O atoms are not linked directly to one another,
- x: 1 or 2,
- R^{a-d}: are independently of each other straight chain or branched alkyl with 1 to 10 C atoms, preferably with 1 to 6 C atoms, very preferably with 1 to 4 C atoms, most preferably methyl,
- X: H, CH₃, OH or O•,
- A: straight-chain, branched or cyclic alkylene with 1 to 20 C-atoms which is optionally substituted.

The invention relates to an LC medium, which comprises one or more compounds of formula Q, one or more compounds of formula AN, one or more compounds of formula S, and one or more compounds selected from the group of compounds of the formulae RM-1 to RM-121 as described below.

The invention furthermore relates to an LC medium or LC display as described above and below, wherein the polymerisable compounds are polymerised.

The invention furthermore relates to a process for preparing an LC medium as described above and below, comprising the steps of mixing one or more compounds of formula AN with one or more compounds of formula Q and one or more compounds of formula S, and optionally with further LC compounds and/or additives.

The invention further relates to the use of LC medium in LC displays.

The invention furthermore relates to an LC display comprising one or more compounds of formula I or an LC medium according to the invention, in particular a VA, PS-VA, PA-VA, IPS, PS-IPS, PS-FFS or FFS display, in particular an UB-FFS display, comprising an LC medium as described above and below.

The mixtures according to the invention preferably exhibit very broad nematic phase ranges having clearing points ≥ 70°C, preferably ≥ 75°C, in particular ≥ 80°C, very favourable values for the capacitive threshold, relatively high values for the holding ratio and at the same time very good low-temperature stabilities at -20°C and -30°C, as well as very low rotational viscosities and short response times.

The mixtures according to the invention are furthermore distinguished by the fact that, in addition to the improvement in the rotational viscosity γ₁, high reliability and high VHR values, even after UV exposure, can be achieved.

The mixtures according to the invention are furthermore distinguished by the fact that, in addition to the improvement in the rotational viscosity γ₁, relatively high values of the elastic constant K₃ for improving the response times can be observed. In particular, the mixtures according to the invention have a particularly low value for the ratio γ₁/K₃ of rotational viscosity γ₁ and elastic constant K₃, which is an indicator of a fast response time.

Preferred compounds of formula AN are those wherein R^{A2} is selected from ethenyl, propenyl, butenyl, pentenyl, hexenyl and heptenyl.

Further preferred compounds of formula AN are those wherein R^{A1} and/or R^{A2} is selected from CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Preferred compounds of formula AN are selected from the following formulae: 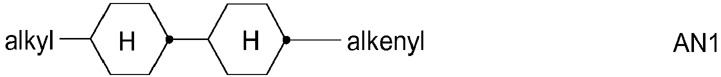 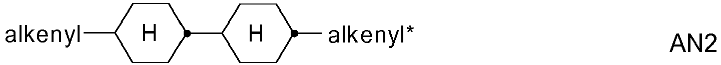 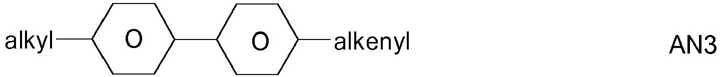 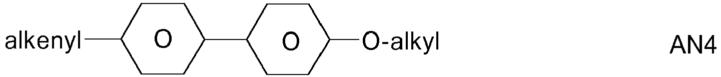 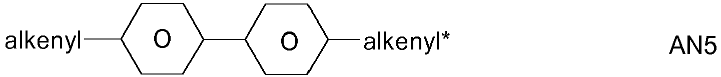 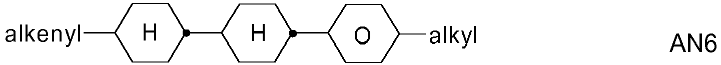 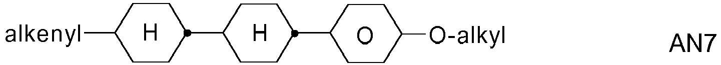 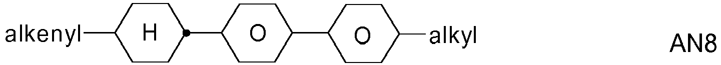 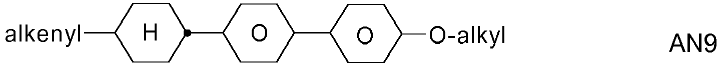 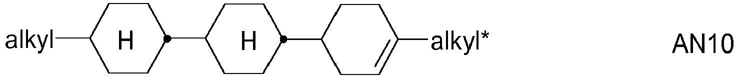 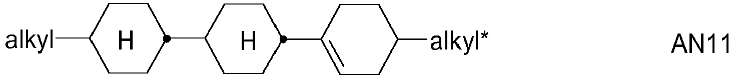 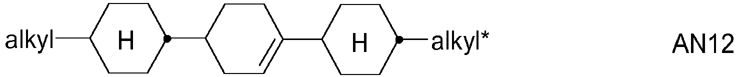 in which alkyl and alkyl* each, independently of one another, denote a straight-chain alkyl radical having 1-6 C atoms, and alkenyl and alkenyl* each, independently of one another, denote a straight-chain alkenyl radical having 2-7 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred are compounds of formula A1, A3 and A6.

Further preferred compounds of formula AN are selected from the following subformulae: 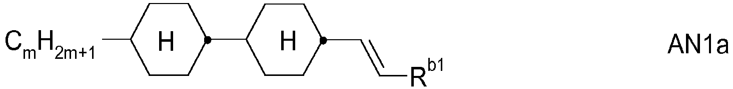 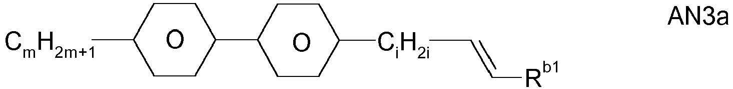 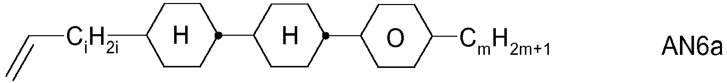 in which m denotes 1, 2, 3, 4, 5 or 6, i denotes 0, 1, 2 or 3, and R^{b1} denotes H, CH₃ or C₂H₅.

Very preferred compounds of formula AN are selected from the following subformulae:

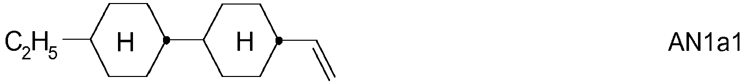

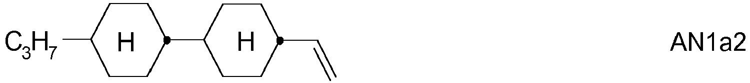

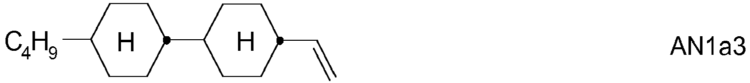

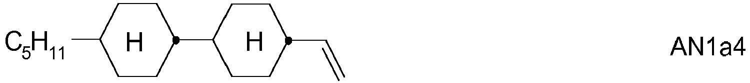

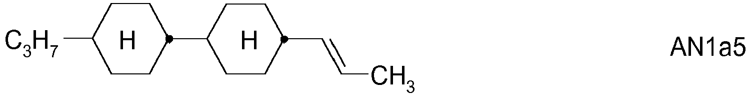

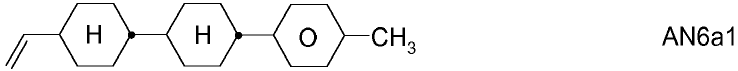

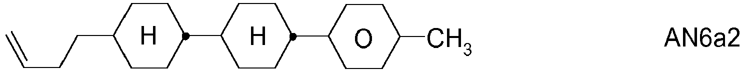

Most preferred are compounds of formula AN1a2, AN1a5, AN6a1 and AN6a2, in particular the compound of formula AN1a2.

Preferably the proportion of compounds of formula AN in the LC medium is from 2 to 60%, very preferably from 5 to 55%, most preferably from 10 to 50%.

Preferably the LC medium contains 1 to 5, preferably 1, 2 or 3 compounds of formula AN.

In order to achieve a faster response time, a low rotational viscosity γ₁ of the LC media and a low cell gap are required. LC media of prior art often use alkenyl and terphenyl compounds to satisfy these requirements. However, these LC media of control problems due to reduced reliability and a drop of the VHR after UV stress. It was surprisingly found that these problems could be reduced when using a quaterphenyl compound of formula Q in the LC medium.

Thus, in addition to the compounds of formula AN, the LC medium according to the present invention comprises one or more quaterphenyl compounds of formula Q.

Preferred compounds of formula Q are those wherein R^{Q} denotes straight-chain alkyl with 2 to 6 C-atoms, very preferably ethyl, n-propyl or n-butyl.

Preferred compounds of formula Q are those wherein L^{Q3} and L^{Q4} are F. Further preferred compounds of formula Q are those wherein L^{Q3}, L^{Q4} and one or two of L^{Q1} and L^{Q2} are F.

Preferred compounds of formula Q are those wherein X^{Q} denotes F or OCF₃, very preferably F.

The compounds of formula Q are preferably selected from the following subformulae 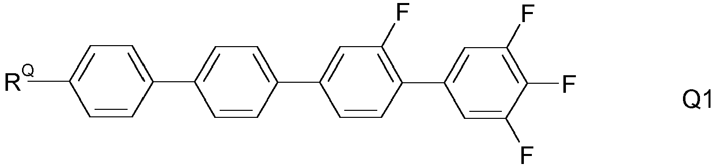 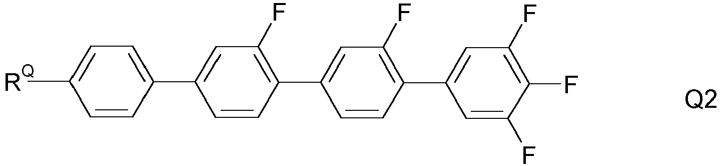 wherein R^{Q} has one of the meanings of formula I or one of its preferred meanings given above and below, and is preferably ethyl, n-propyl or n-butyl.

Especially preferred are compounds of formula Q1, in particular those wherein R^{Q} is n-propyl.

Preferably the proportion of compounds of formula Q in the LC medium is from 0.1 to 5%, very preferably from 0.1 to 2%, most preferably from 0.2 to 1.5%. Higher concentrations of compounds of formula Q can negatively affect the solubility.

Preferably the LC medium contains 1 to 5, preferably 1 or 2 compounds of formula Q.

By using quaterphenyl compound of formula Q and its subformulae it is also possible to at least partially replace terphenyl compounds in the LC host mixture. Thereby it is possible to reduce ODF mura, whilst maintaining high UV absorption and enabling quick and complete polymerisation and strong tilt angle generation

Thus, in a preferred embodiment of the present invention the LC medium does not contain more than 20% of a terphenyl compound.

In the compounds of formula S, R^{a-d} denote preferably methyl or ethyl, very preferably methyl.

In the compounds of formula S, A preferably denotes straight-chain alkylene with 1 to 20 C-atoms, branched alkylene with 2 to 20 C atoms, or cyclic alkylene with 3 to 20 C atoms, all of which are optionally substituted by one or more groups L^{A}.

In the compounds of formula S, A very preferably denotes straight-chain alkylene with 1 to 20 C-atoms or branched alkylene with 2 to 20 C atoms, all of which are optionally substituted by one or more groups L^{A}.

Preferred substituents L^{A} are selected from F, and straight-chain or branched alkyl, alkoxy, alkylcarbonyl, alkoxycarbonyl, alkylcarbonyloxy and alkoxycarbonyloxy, each having 1 to 12 C atoms and in which one or more H atoms may optionally be replaced by F or Cl.

Preferred compounds of formula S are selected from the following subformulae 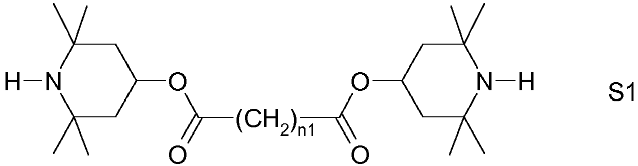 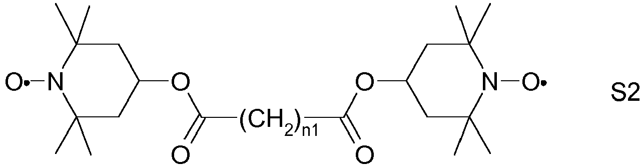 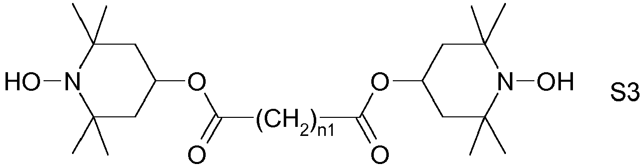 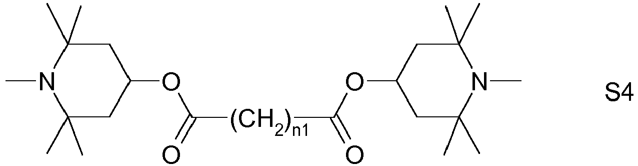 wherein n1 is an integer from 2 to 12 and wherein one or more H-atoms in the radical (CH₂)ₙ₁ are optionally replaced by a methyl, ethyl, propyl, butyl, pentyl or hexyl group.

Very preferred compounds of formula S are selected from the following subformulae

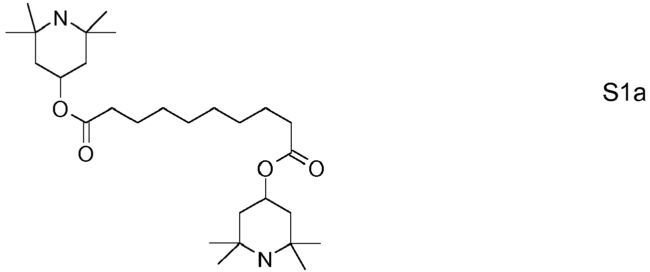

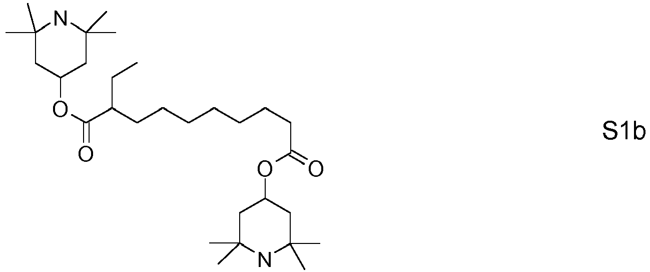

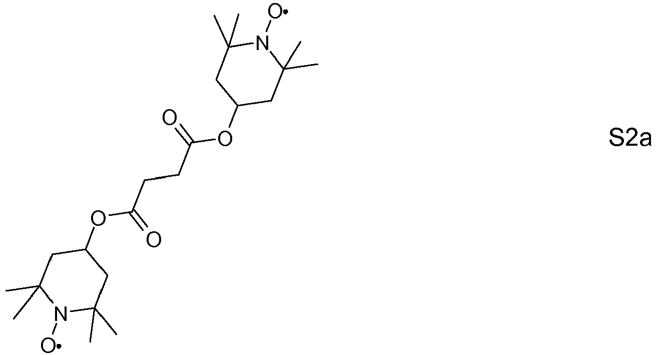

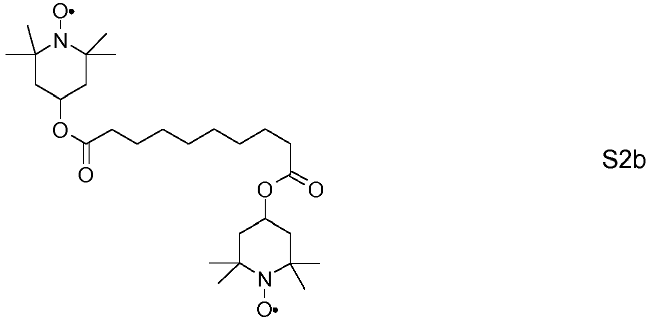

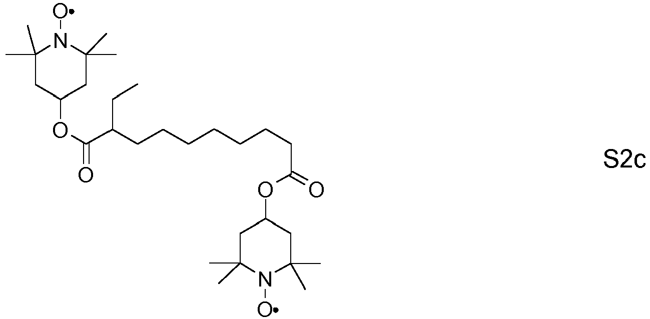

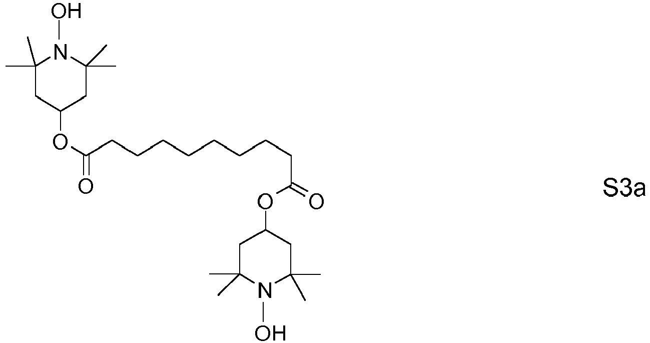

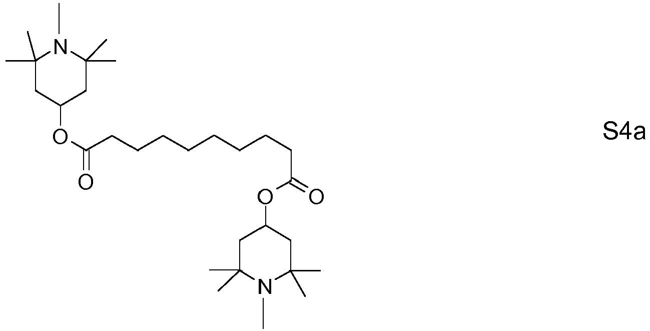

In a first preferred embodiment of the present invention, the compounds of formula S are selected from those wherein X is H or CH₃, preferably H. Preferred compounds of this first preferred embodiment are those of formula S1 and S4, and subformulae S1a, S1b and S4a above.

In a second preferred embodiment of the present invention, the compounds of formula S are selected from those wherein X is O• or OH, preferably O•. Preferred compounds of this second preferred embodiment are those of formula S2 and S3, preferably S2, and subformulae S2a, S2b, S2c and S3a above. Especially preferred are compounds of formula S2a, S2b, S2c, most preferred those of formula S2a.

In a third preferred embodiment of the present invention, the compounds of formula S are selected from those wherein A is branched alkylene with 2 to 20 C atoms which is optionally substituted by one or more groups L^{A}. Preferred compounds of this second preferred embodiment are those of formula S5 below and those of subformulae S1b and S2c above. 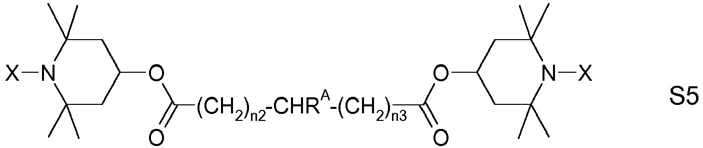 wherein
- X: is H, CH₃, OH or O•, preferably H or O•,
- R^{A}: is methyl, ethyl, propyl, butyl, pentyl or hexyl,
- n2: is 0 or an integer from 1 to 12, preferably 0,
- n3: is or an integer from 1 to 12.

Preferred compounds of formula S5 are those of subformulae S1b and S2c above.

Preferably the proportion of compounds of formula S or its subformulae in the LC medium is from 10 to 1000 ppm,very preferably from 20 to 500 ppm.

Preferably the LC medium contains 1 to 5, preferably 1, 2 or 3 compounds of formula S or its subformulae.

In another preferred embodiment of the present invention, in addition to the compounds of formula S, the LC medium contains one or more further stabilisers, preferably selected from the following formula 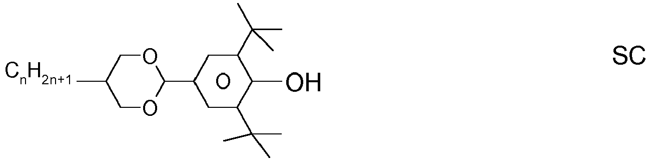 wherein n is an integer from 1 to 6, preferably 3.

Preferably the proportion of additional stabilisers, like those of formula SC, in the LC medium is from 10 to 500 ppm,very preferably from 20 to 100 ppm.

In another preferred embodiment of the present invention the LC medium addtitionally contains one or more compounds selected from formula AY 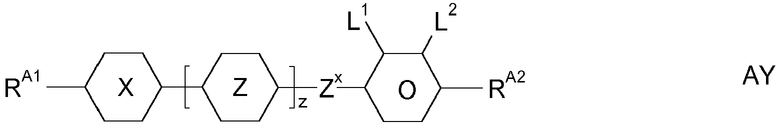 in which the individual radicals, on each occurrence identically or differently, and each, independently of one another, have the following meaning: 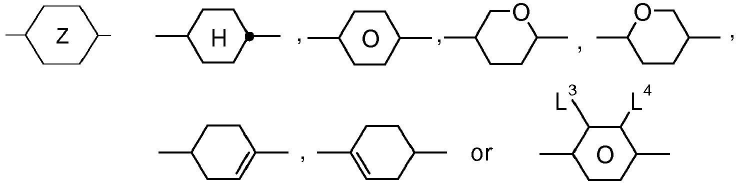
- R^{A1}: alkenyl having 2 to 9 C atoms or, if at least one of the rings X and Z denotes cyclohexenyl, also one of the meanings of R^{A2},
- R^{A2}: alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
- Z^{x}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond, preferably a single bond,
- L¹⁻⁴: H, F, Cl, OCF₃, CF₃, CH₃, CH₂F or CHF₂H, preferably H, F or Cl,
- z: 0 or 1.

Preferred compounds of formula AY selected from the following sub-formulae: 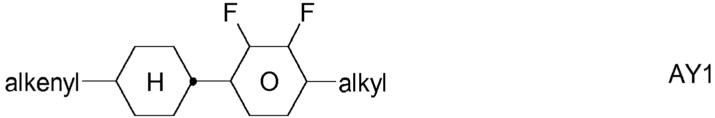 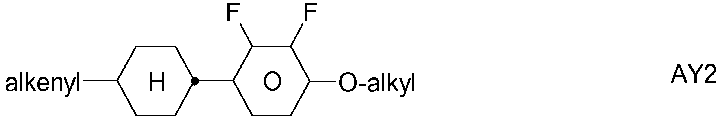 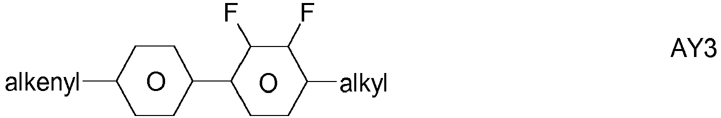 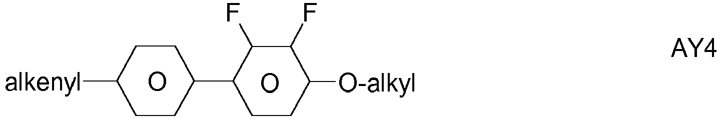 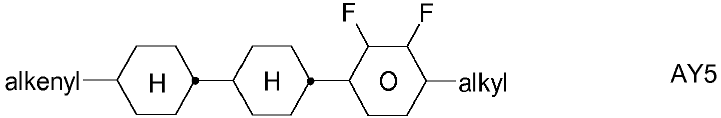 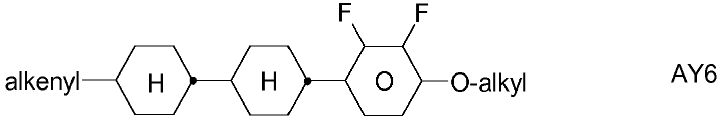 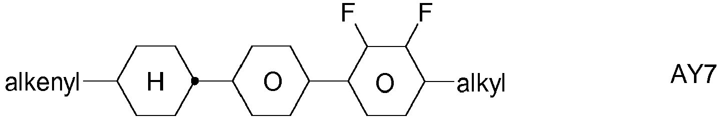 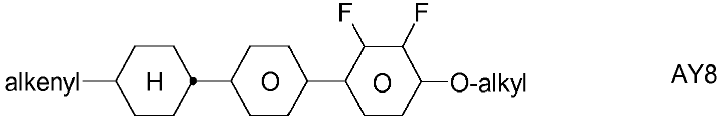 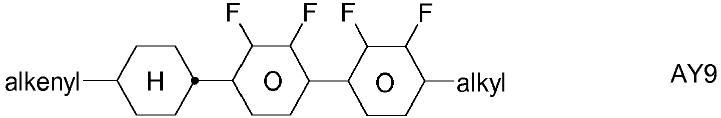 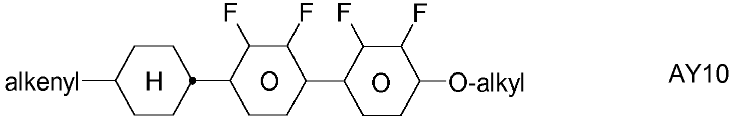 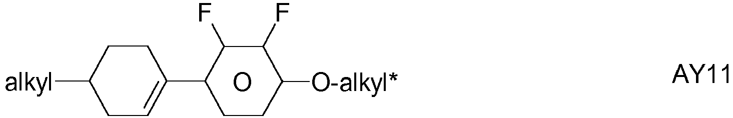 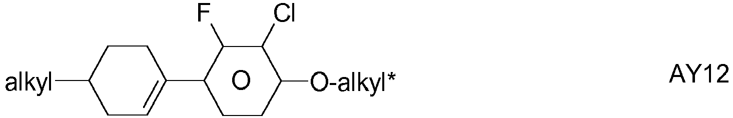 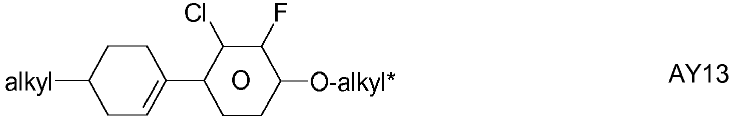 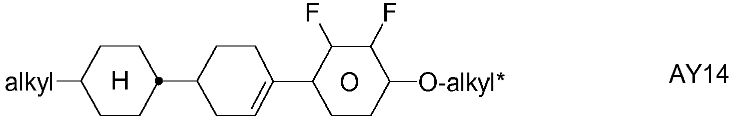 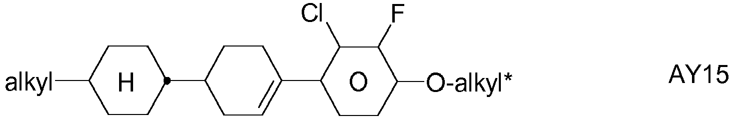 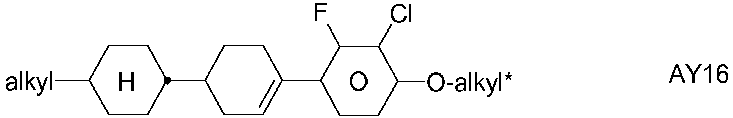 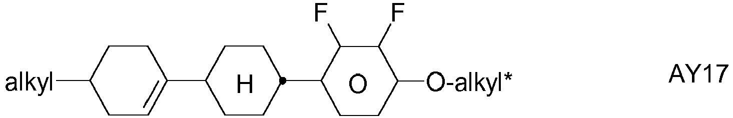 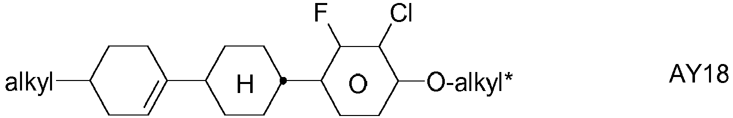 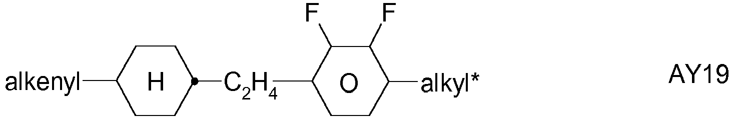 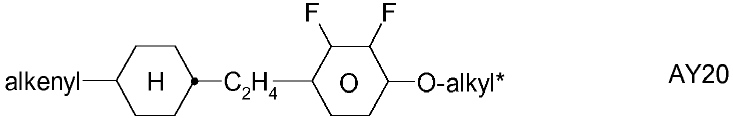 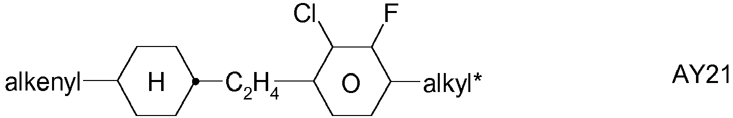 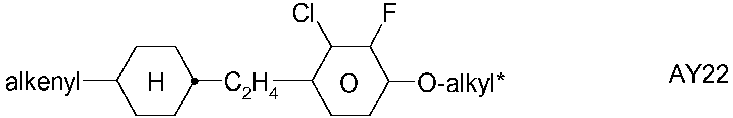 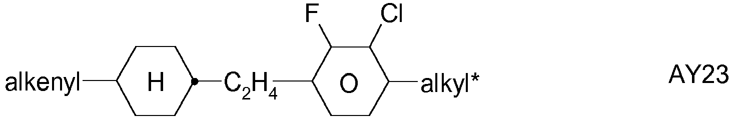 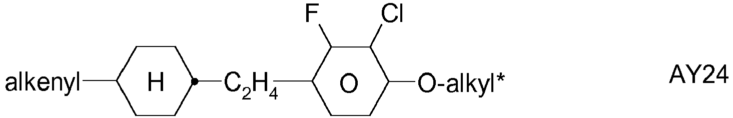 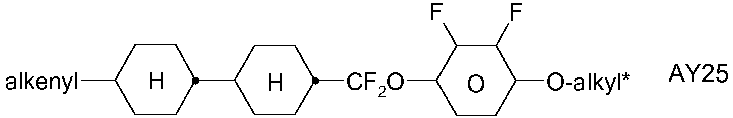 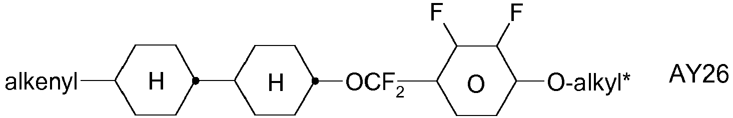 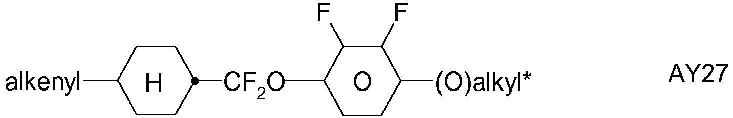 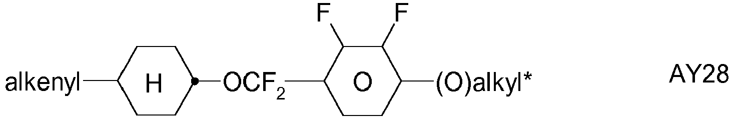 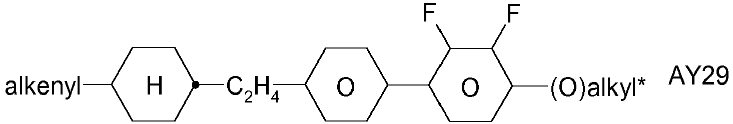 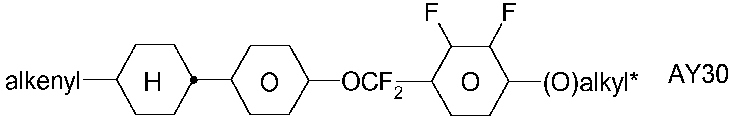 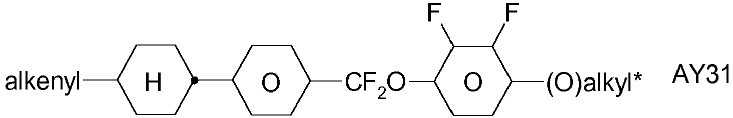 in which alkyl and alkyl* each, independently of one another, denote a straight-chain alkyl radical having 1-6 C atoms, and alkenyl and alkenyl* each, independently of one another, denote a straight-chain alkenyl radical having 2-7 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

In another preferred embodiment the LC medium comprises one or more compounds of formula AY selected from the following sub-formulae: 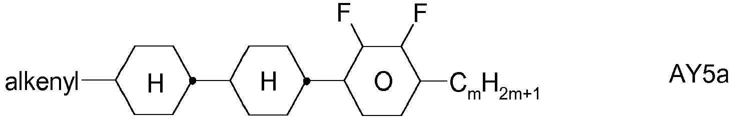 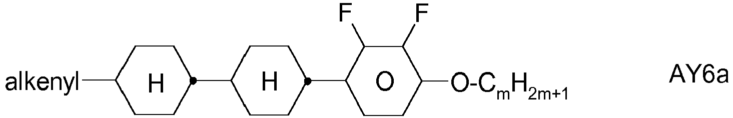 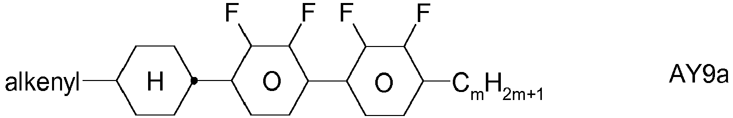 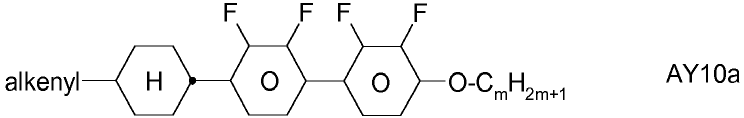 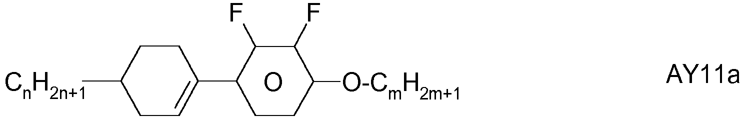 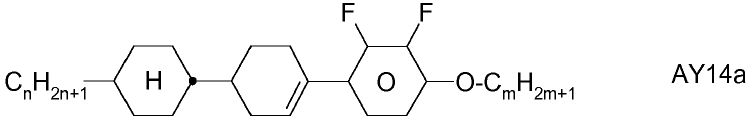 in which m and n each, independently of one another, denote 1, 2, 3, 4, 5 or 6, and alkenyl denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

The LC medium preferably comprises no compounds containing a terminal vinyloxy group (-O-CH=CH₂), in particular no compounds of the formula AN or AY in which R^{A1} or R^{A2} denotes or contains a terminal vinyloxy group. Some further preferred embodiments of the mixtures according to the invention are indicated below.
a) LC medium which additionally comprises one or more compounds of the formulae CY and/or PY: 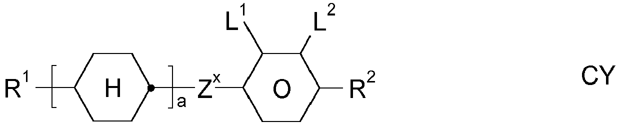 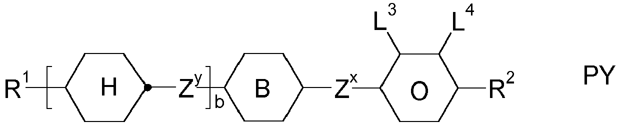 wherein
   - a: denotes 1 or 2,
   - b: denotes 0 or 1, 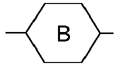
   denotes 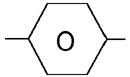 or 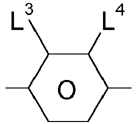
   - R¹ and R²: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
   - Z^{x} and Z^{y}: each, independently of one another, denote -CH₂CH₂-,-CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond,
   - L¹⁻⁴: each, independently of one another, denote F, CI, OCF₃, CF₃, CH₃, CH₂F, CHF₂.

   Preferably, both L¹ and L² denote F or one of L¹ and L² denotes F and the other denotes Cl, or both L³ and L⁴ denote F or one of L³ and L⁴ denotes F and the other denotes Cl.
   The compounds of the formula CY are preferably selected from the group consisting of the following sub-formulae: 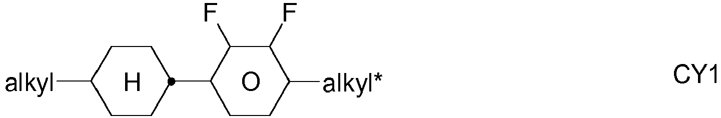 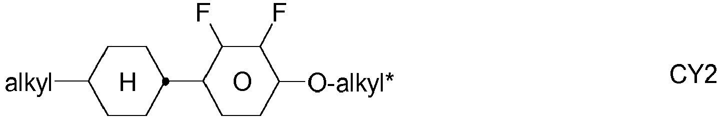 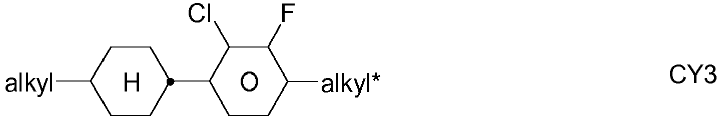 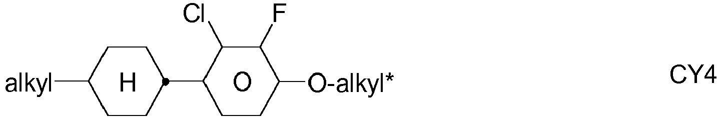 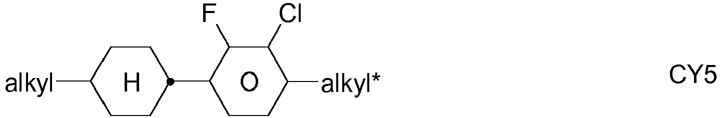 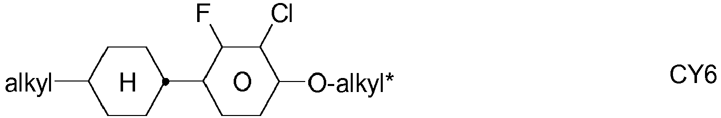 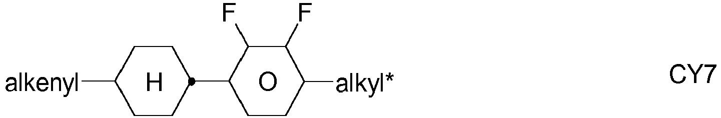 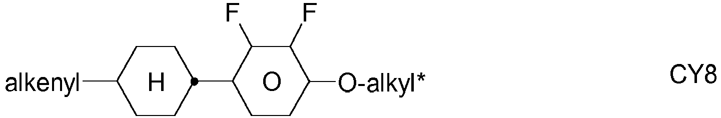 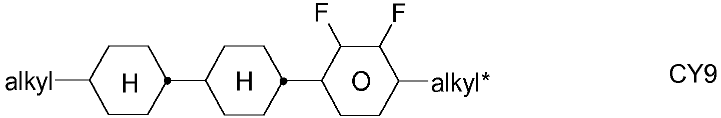 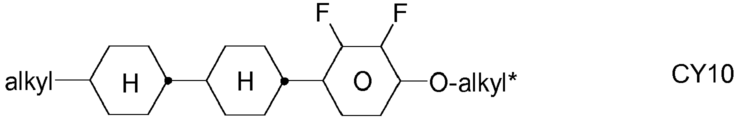 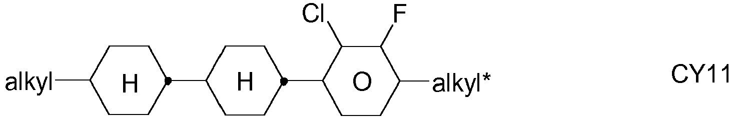 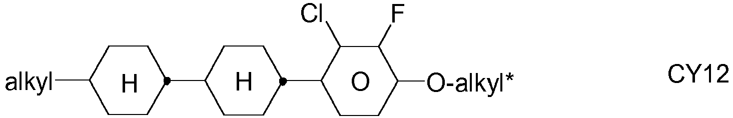 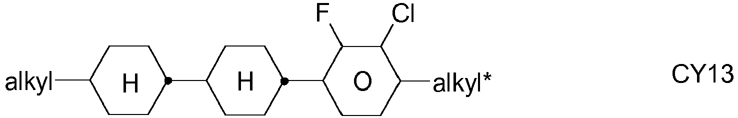 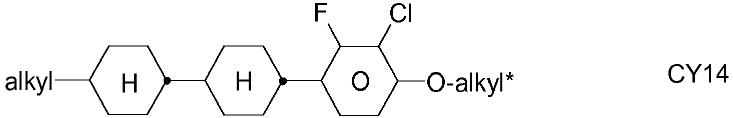 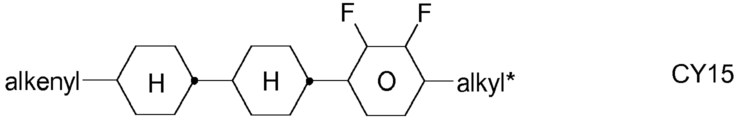 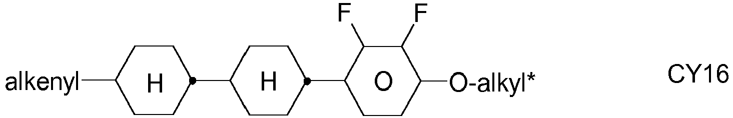 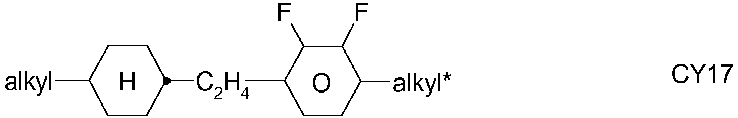 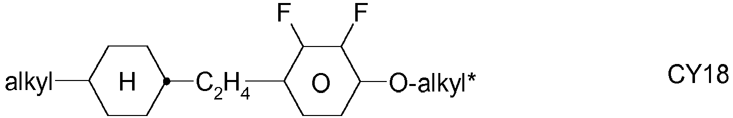 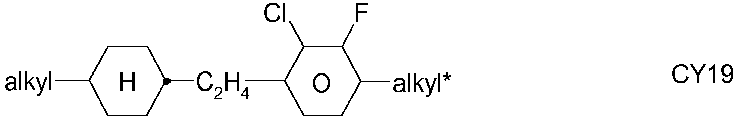 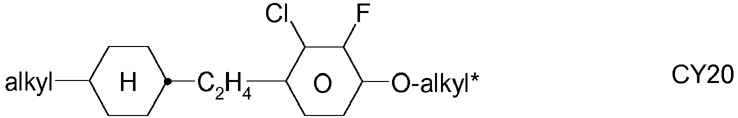 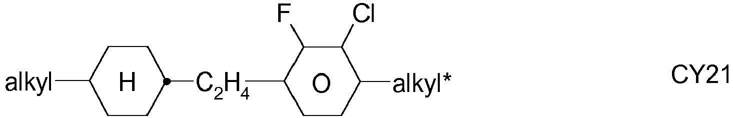 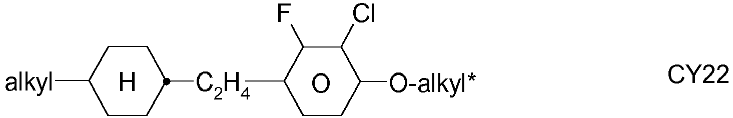 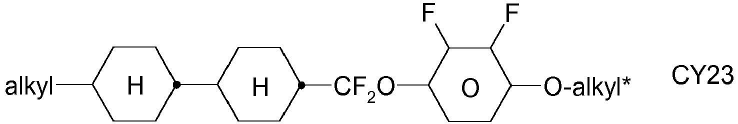 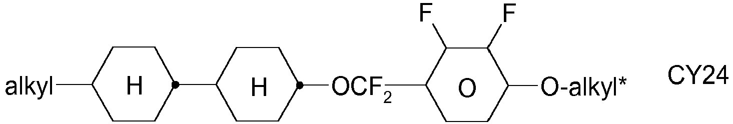 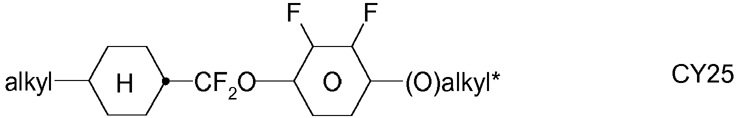 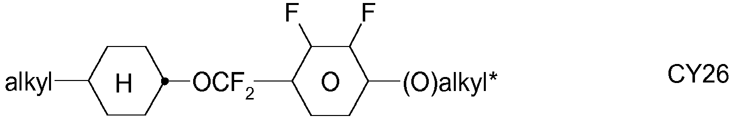 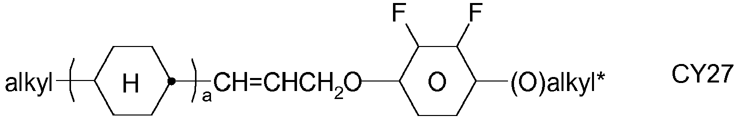 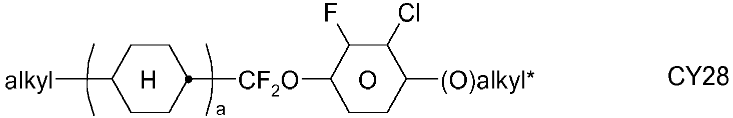 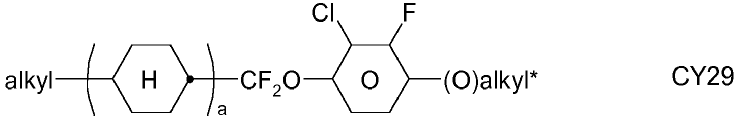 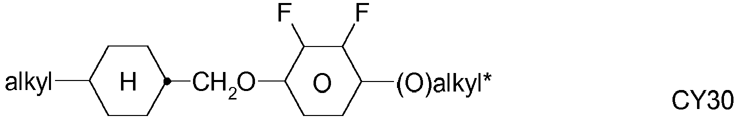 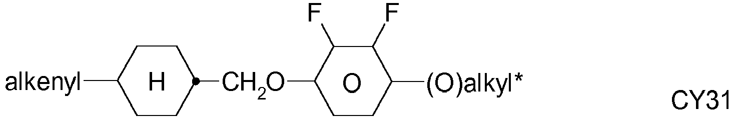 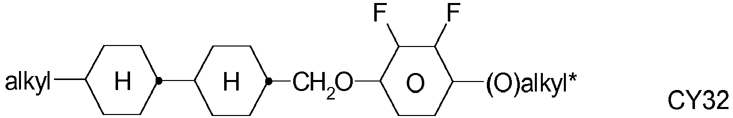 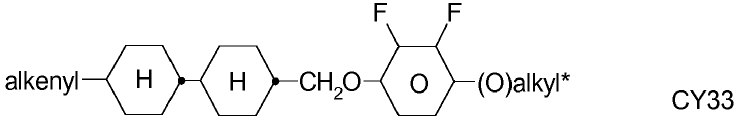 in which a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   The compounds of the formula PY are preferably selected from the group consisting of the following sub-formulae: 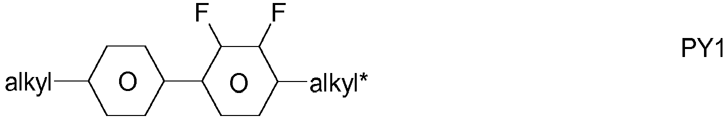 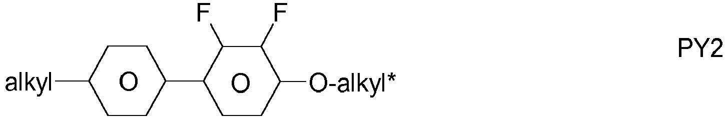 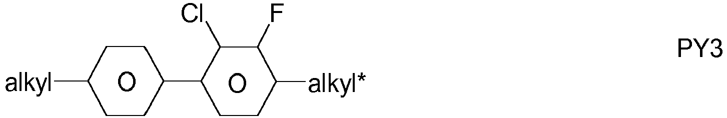 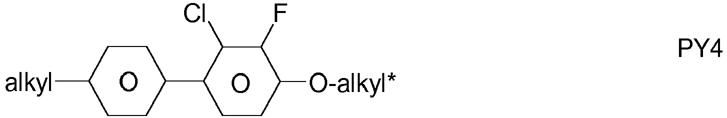 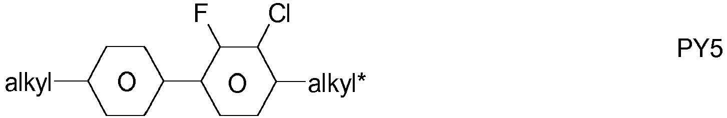 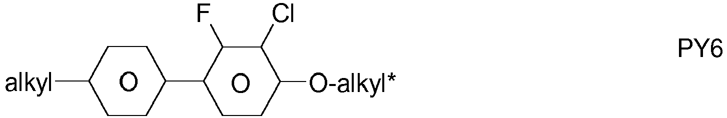 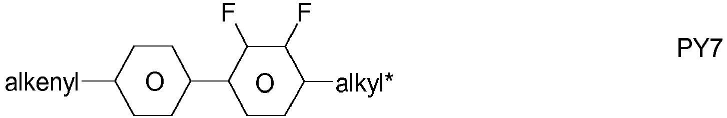 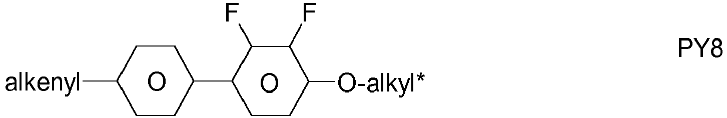 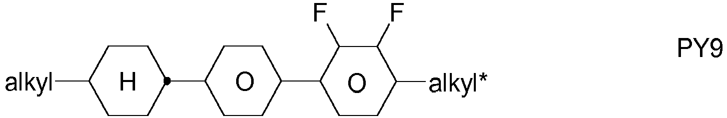 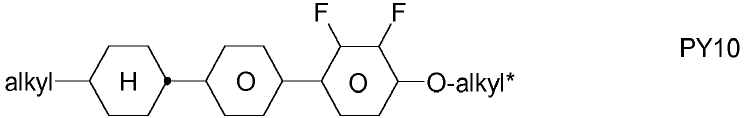 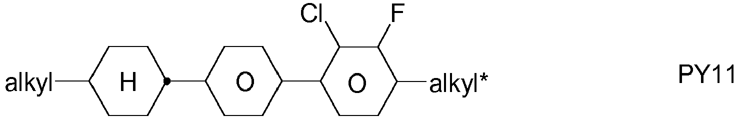 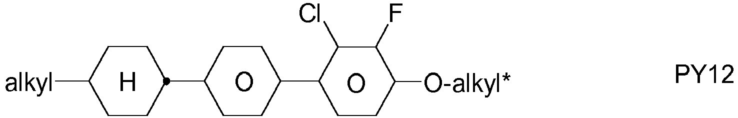 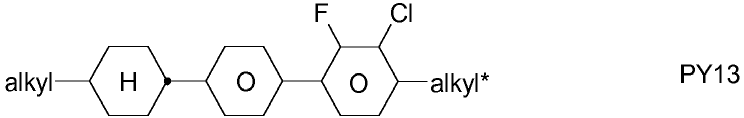 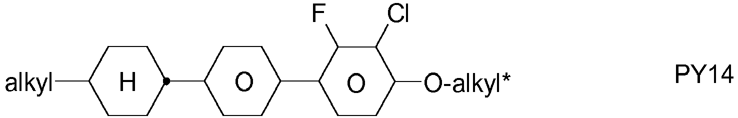 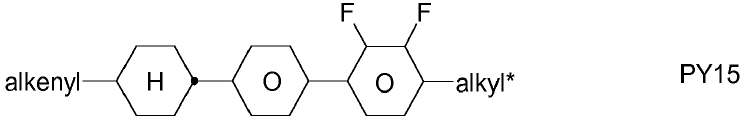 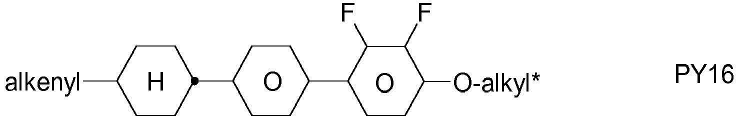 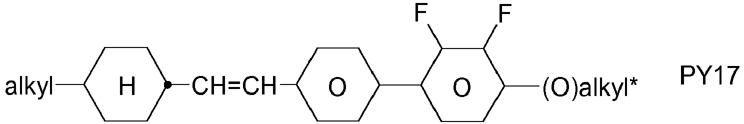 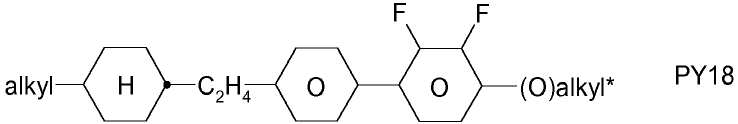 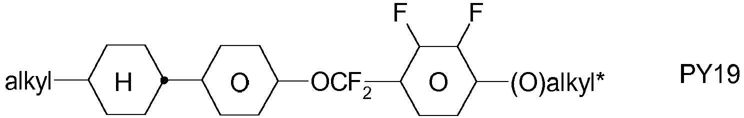 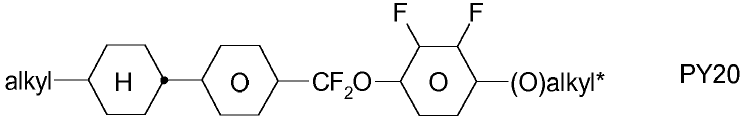 in which alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
b) LC medium which additionally comprises one or more compounds of the following formula: 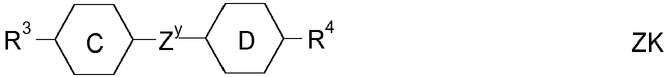 in which the individual radicals have the following meanings: 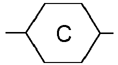 denotes 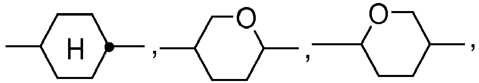 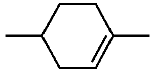 or 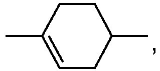 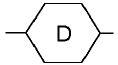 denotes 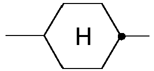 or 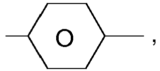
   - R³ and R⁴: each, independently of one another, denote alkyl having 1 to 12 C atoms, in which, in addition, one or two non-adjacent CH₂ groups may be replaced by -O-, -CH=CH-, -CO-, -O-CO- or -CO-O- in such a way that O atoms are not linked directly to one another,
   - Z^{y}: denotes -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond.

   The compounds of the formula ZK are preferably selected from the group consisting of the following sub-formulae: 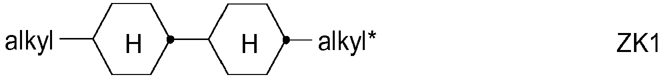 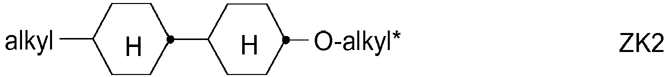 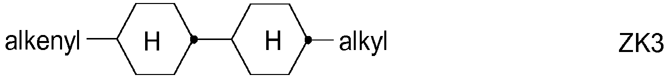 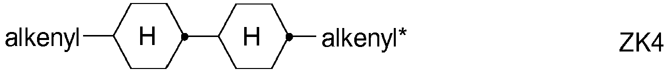 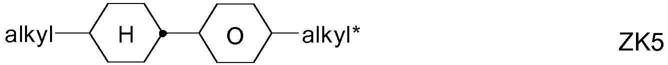 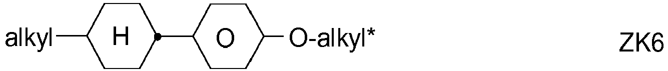 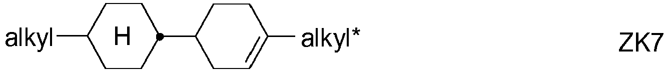 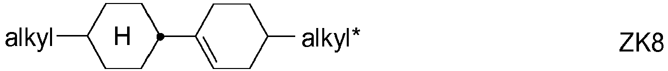 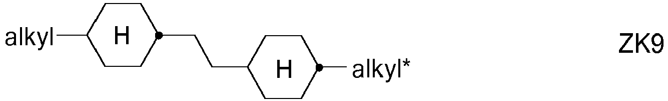 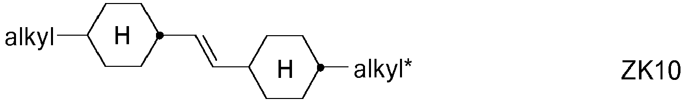 in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Especially preferred are compounds of formula ZK1.
   Particularly preferred compounds of formula ZK are selected from the following sub-formulae: 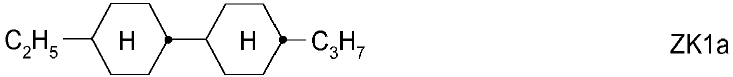 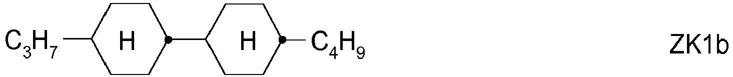 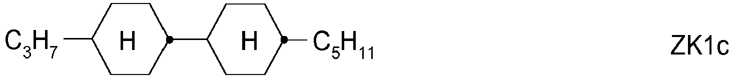 wherein the propyl, butyl and pentyl groups are straight-chain groups.
   Most preferred are compounds of formula ZK1a.
c) LC medium which additionally comprises one or more compounds of the following formula: 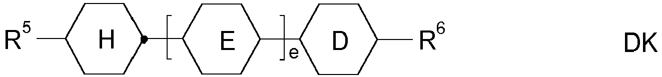 in which the individual radicals on each occurrence, identically or differently, have the following meanings:
   - R⁵ and R⁶: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms, 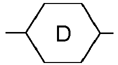
   denotes 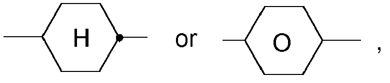 or 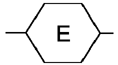 denotes 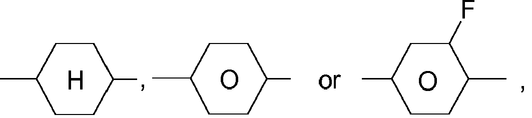 and
   - e: denotes 1 or 2.

   The compounds of the formula DK are preferably selected from the group consisting of the following sub-formulae: 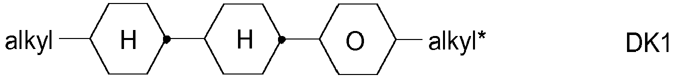 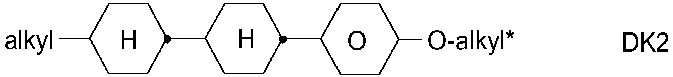 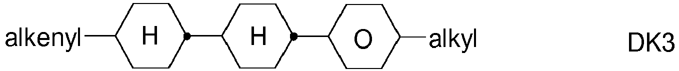 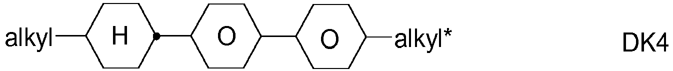 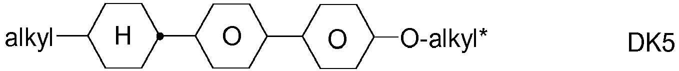 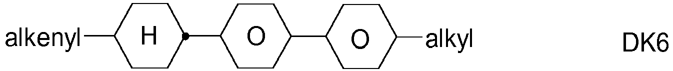 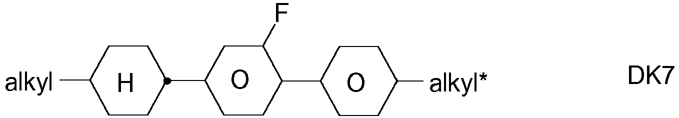 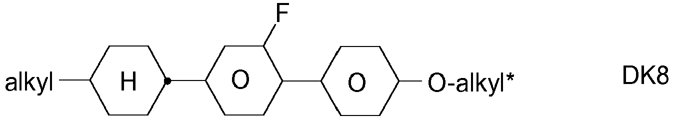 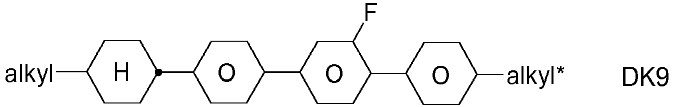 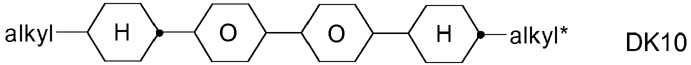 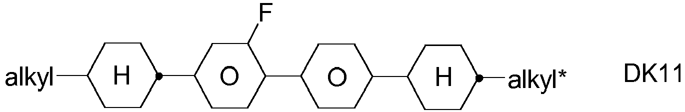 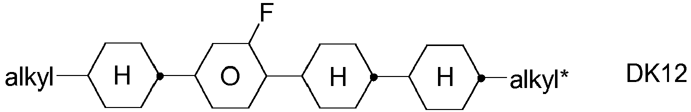 in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
d) LC medium which additionally comprises one or more compounds of the following formula: 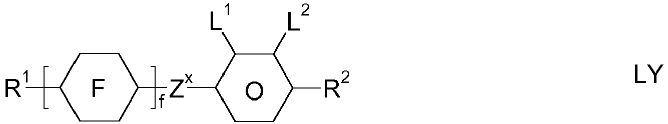 in which the individual radicals have the following meanings: 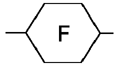 denotes 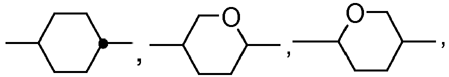 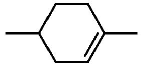 or 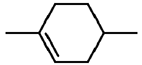 with at least one ring F being different from cyclohexylene,
   - f: denotes 1 or 2,
   - R¹ and R²: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another,
   - Z^{x}: denotes -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond,
   - L¹ and L²: each, independently of one another, denote F, CI, OCF₃, CF₃, CH₃, CH₂F, CHF₂.

   Preferably, both radicals L¹ and L² denote F or one of the radicals L¹ and L² denotes F and the other denotes Cl.
   The compounds of the formula LY are preferably selected from the group consisting of the following sub-formulae: 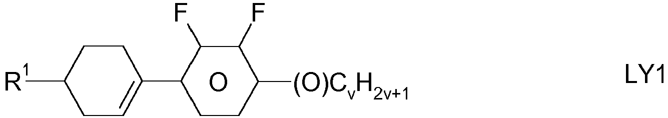 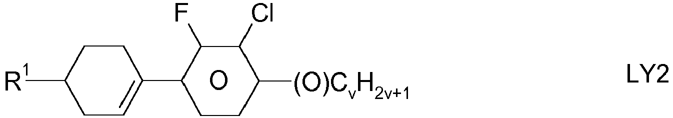 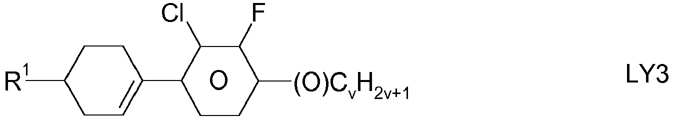 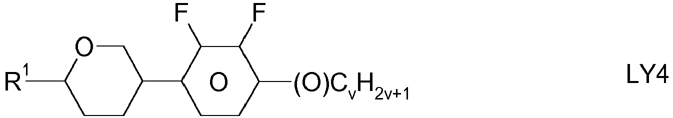 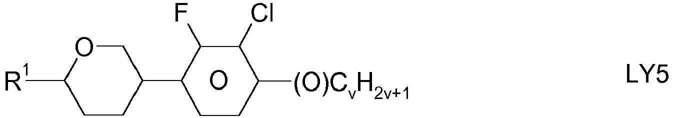 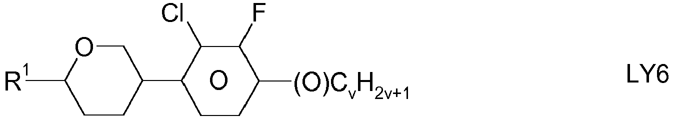 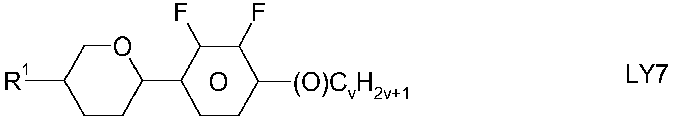 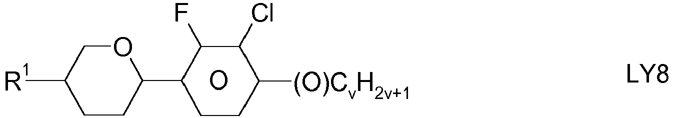 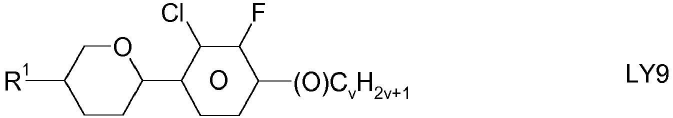 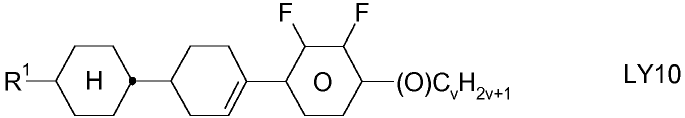 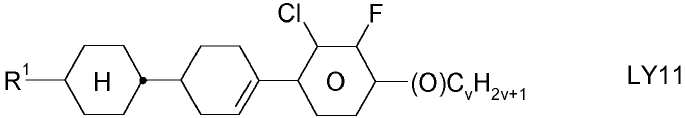 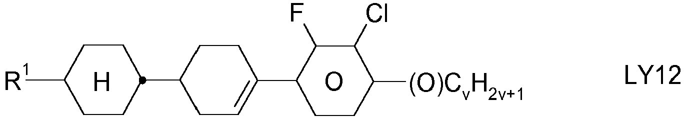 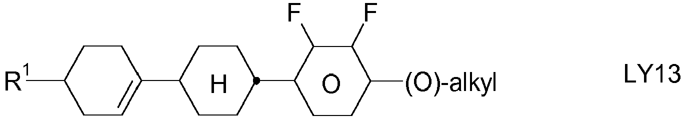 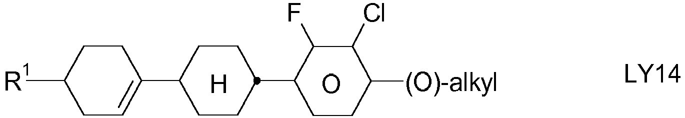 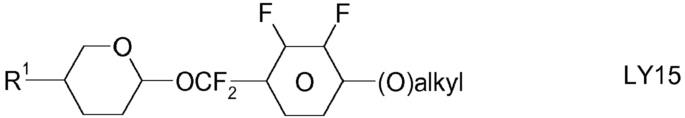 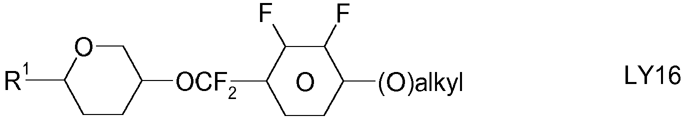 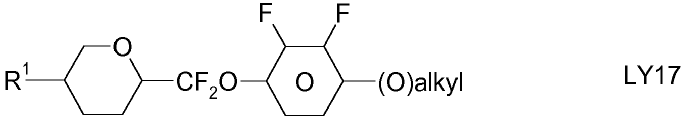 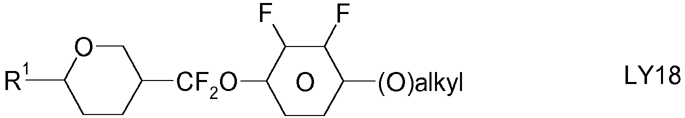 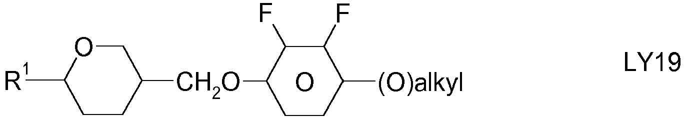 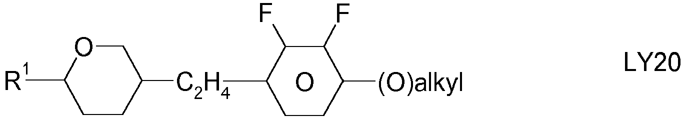 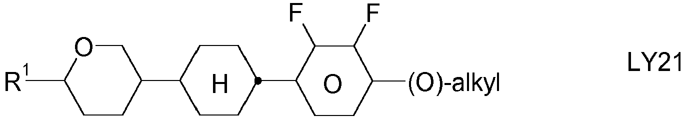 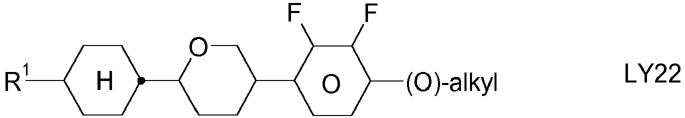 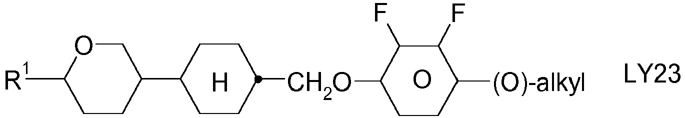 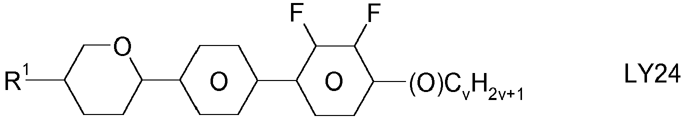 in which R¹ has the meaning indicated above, alkyl denotes a straight-chain alkyl radical having 1-6 C atoms, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH- , CH₃-(CH₂)₂-CH=CH-, CH₃-(CH₂)₃-CH=CH- or CH₃-CH=CH-(CH₂)₂-.
e) LC medium which additionally comprises one or more compounds selected from the group consisting of the following formulae: 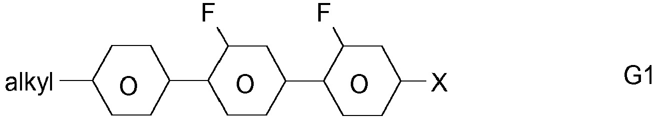 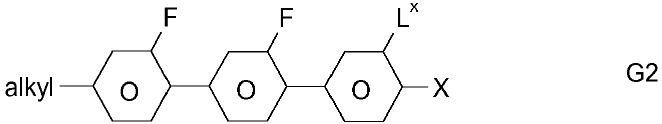 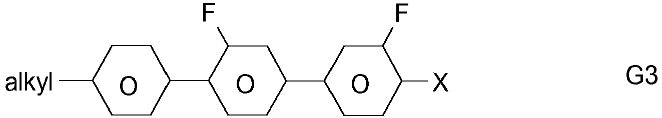 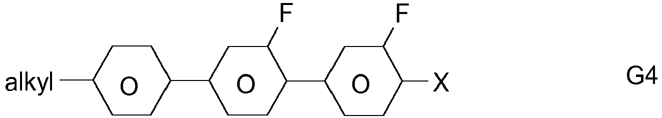 in which alkyl denotes C₁₋₆-alkyl, L^{x} denotes H or F, and X denotes F, CI, OCF₃, OCHF₂ or OCH=CF₂. Particular preference is given to compounds of the formula G1 in which X denotes F.
f) LC medium which additionally comprises one or more compounds selected from the group consisting of the following formulae: 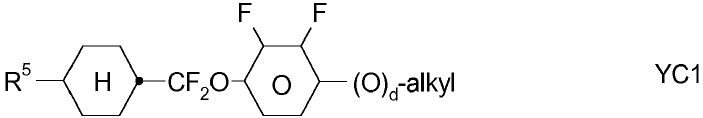 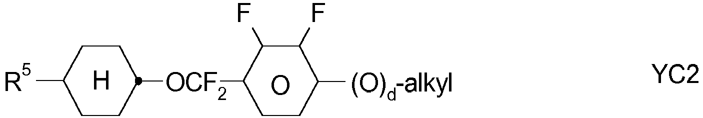 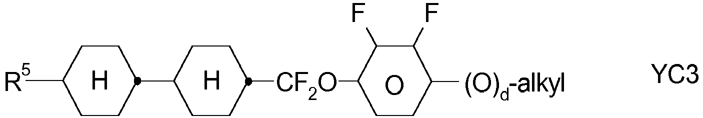 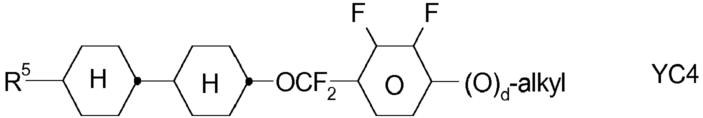 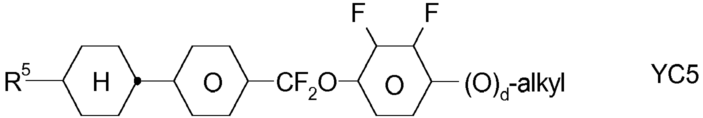 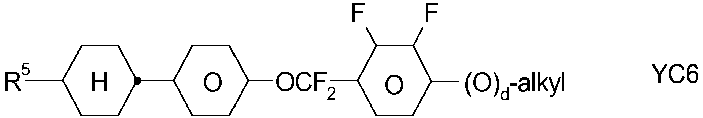 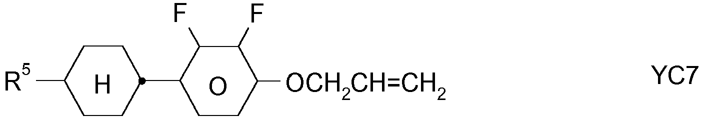 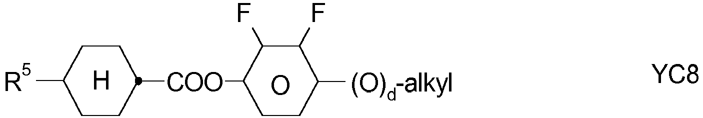 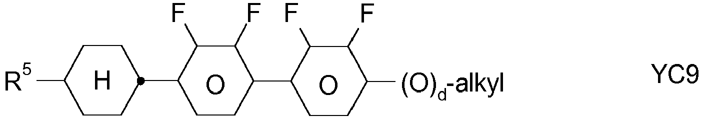 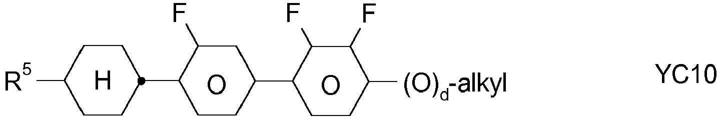 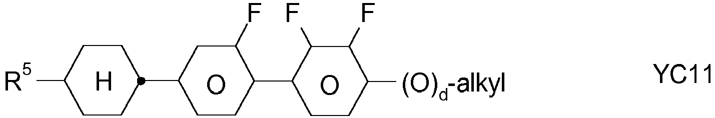 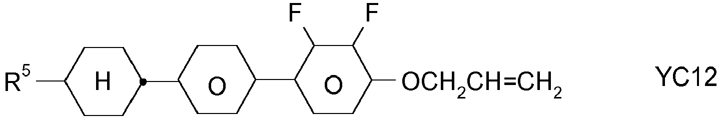 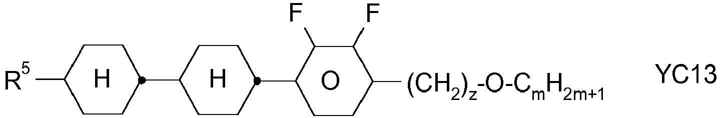 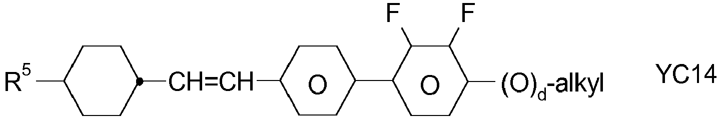 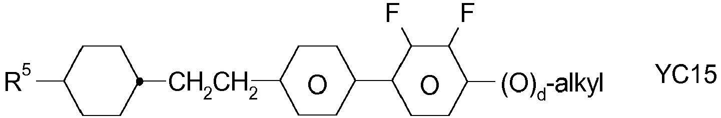 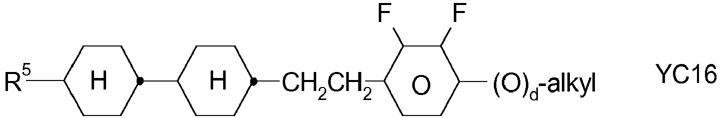 in which R⁵ has one of the meanings indicated above for R¹, alkyl denotes C₁₋₆-alkyl, d denotes 0 or 1, and z and m each, independently of one another, denote an integer from 1 to 6. R⁵ in these compounds is particularly preferably C₁₋₆-alkyl or -alkoxy or C₂₋₆-alkenyl, d is preferably 1. The LC medium according to the invention preferably comprises one or more compounds of the above-mentioned formulae in amounts of ≥ 5% by weight.
g) LC medium which additionally comprises one or more biphenyl compounds selected from the group consisting of the following formulae: 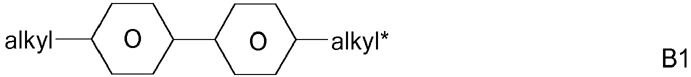 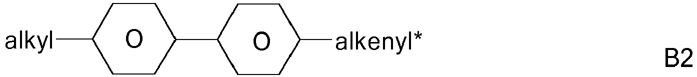 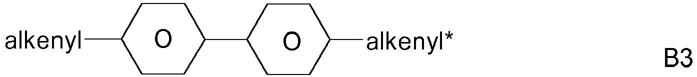 in which alkyl and alkyl* each, independently of one another, denote a straight-chain alkyl radical having 1-6 C atoms, and alkenyl and alkenyl* each, independently of one another, denote a straight-chain alkenyl radical having 2-6 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   The proportion of the biphenyls of the formulae B1 to B3 in the LC mixture is preferably at least 3% by weight, in particular ≥ 5% by weight.
   The compounds of the formula B2 are particularly preferred.
   The compounds of the formulae B1 to B3 are preferably selected from the group consisting of the following sub-formulae: 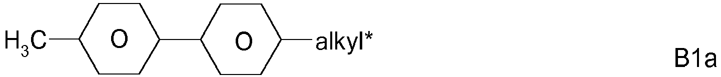 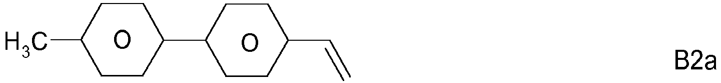 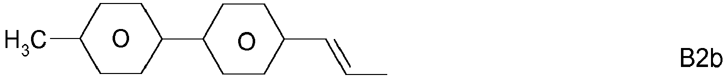 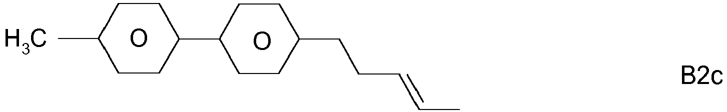 in which alkyl* denotes an alkyl radical having 1-6 C atoms. The medium according to the invention particularly preferably comprises one or more compounds of the formulae B1a and/or B2c.
h) LC medium which additionally comprises one or more terphenyl compounds of the following formula: 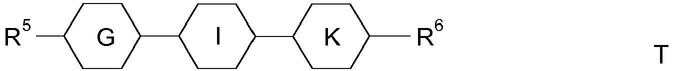 in which R⁵ and R⁶ each, independently of one another, have one of the meanings indicated above, and 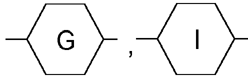 and 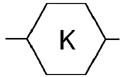 each, independently of one another, denote 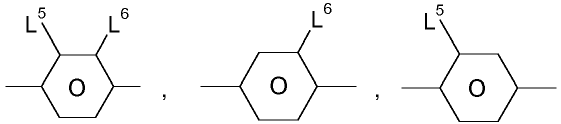 or 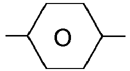 in which L⁵ denotes F or CI, preferably F, and L⁶ denotes F, CI, OCF₃, CF₃, CH₃, CH₂F or CHF₂, preferably F.
   The compounds of the formula T are preferably selected from the group consisting of the following sub-formulae: 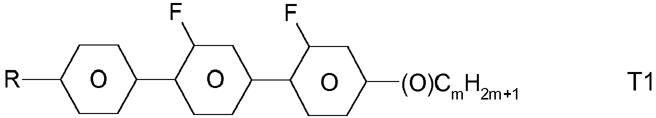 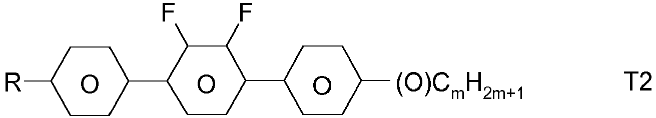 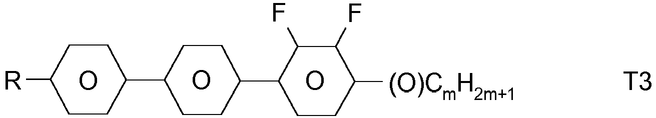 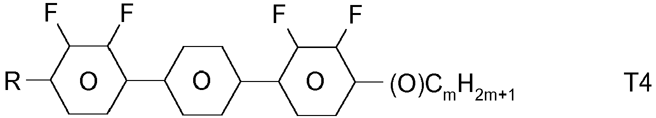 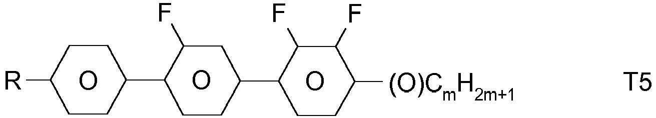 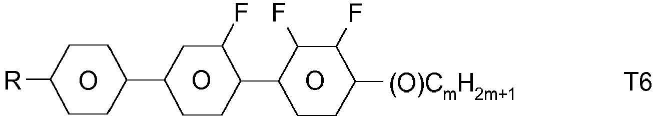 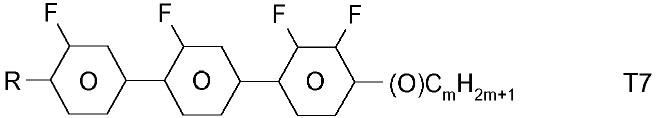 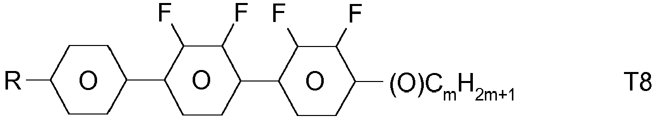 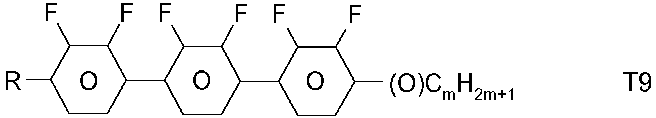 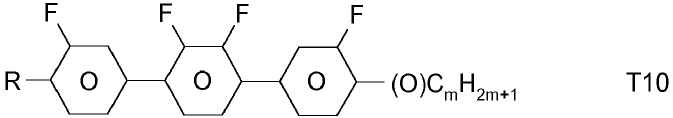 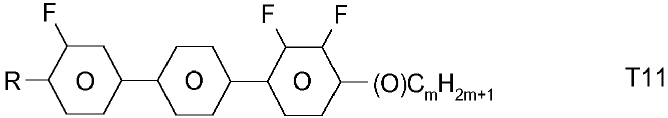 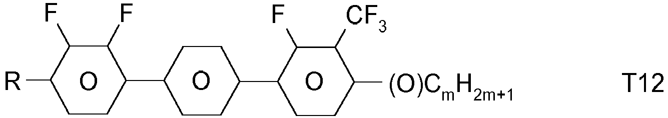 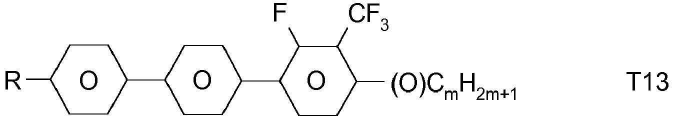 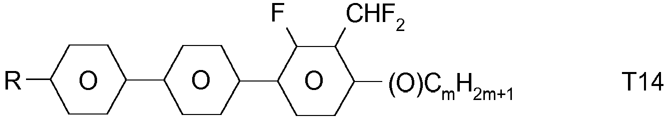 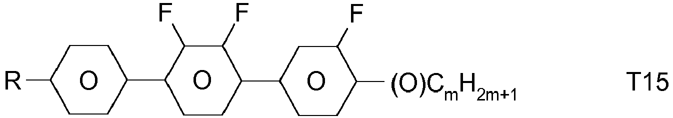 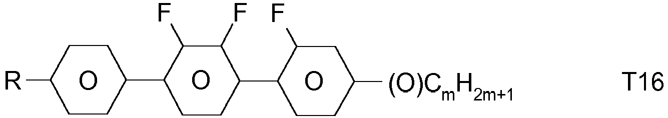 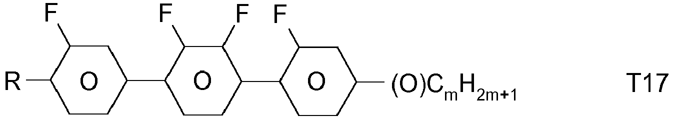 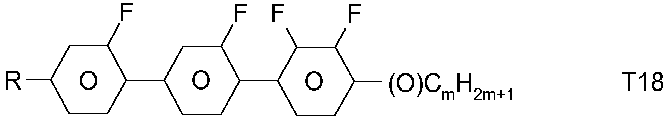 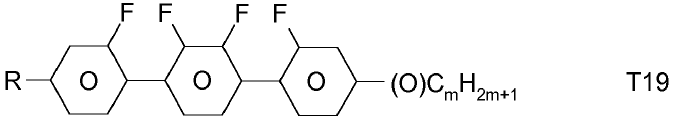 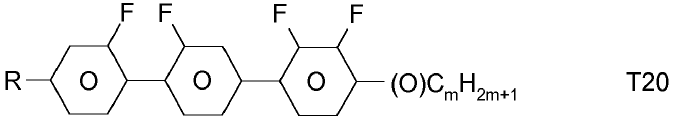 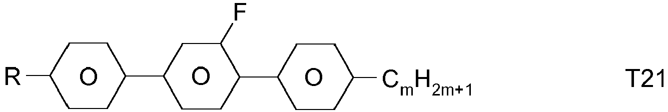 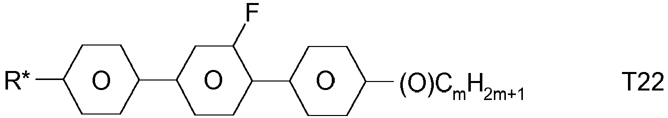 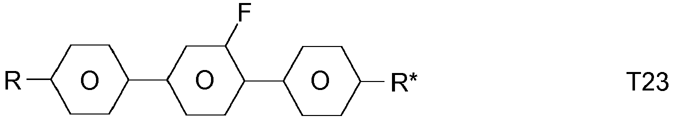 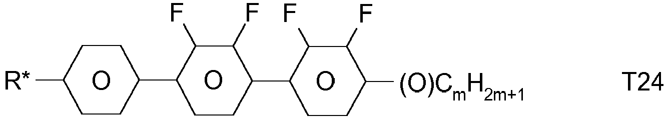 in which R denotes a straight-chain alkyl or alkoxy radical having 1-7 C atoms, R* denotes a straight-chain alkenyl radical having 2-7 C atoms, (O) denotes an oxygen atom or a single bond, and m denotes an integer from 1 to 6. R* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   R preferably denotes methyl, ethyl, propyl, butyl, pentyl, hexyl, methoxy, ethoxy, propoxy, butoxy or pentoxy.
   Preferred are compounds of formulae T1, T2, T3, T21 and T23, wherein R is preferably alkyl or alkoxy having 1-5 C atoms and R* is preferably CH₂=CH-, CH₂=CHCH₂CH₂-, CH₃-CH=CH- or CH₃-CH₂-CH=CH-, .
   Preferably the LC component B) of the LC medium does not contain more than 20% of a terphenyl compound of formula T or any other compound with a terphenyl group.
i) LC medium which additionally comprises one or more compounds selected from the group consisting of the following formulae: 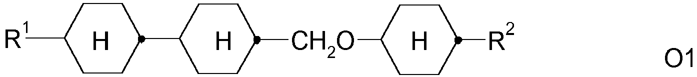 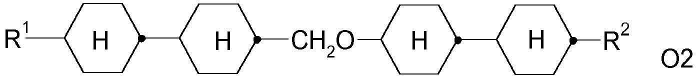 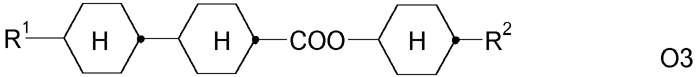 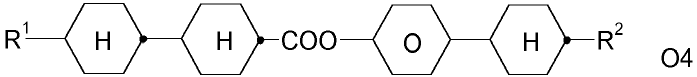 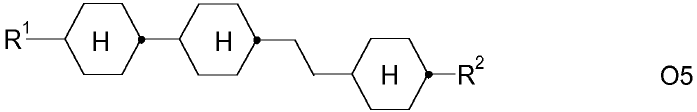 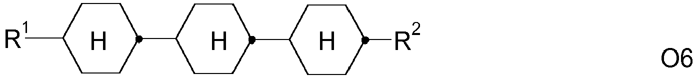 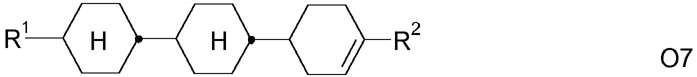 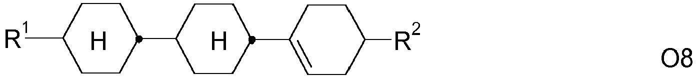 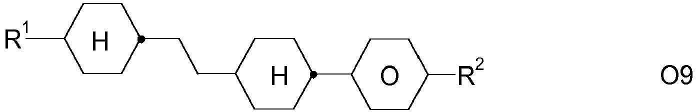 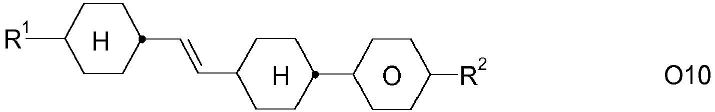 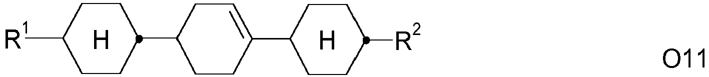 in which R¹ and R² have the meanings indicated above and preferably each, independently of one another, denote straight-chain alkyl having 1 to 6 C atoms or straight-chain alkenyl having 2 to 6 C atoms.
   Preferred media comprise one or more compounds selected from the formulae O1, O3 and O4.
k) LC medium which additionally comprises one or more compounds of the following formula: 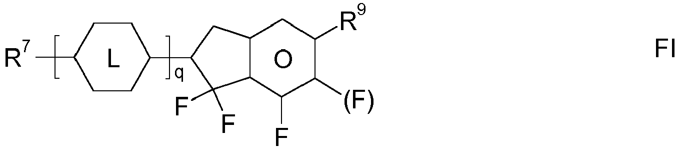 in which 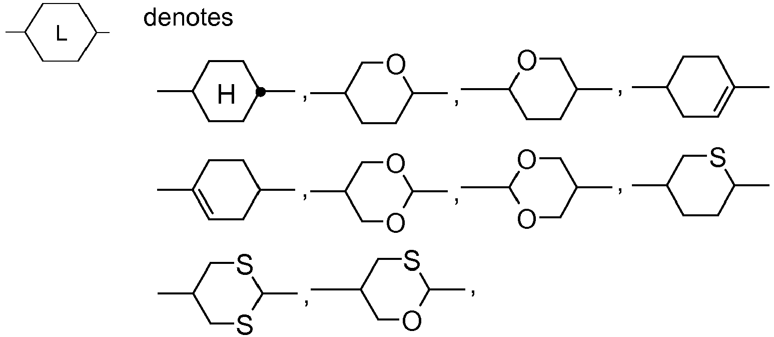 R⁹ denotes H, CH₃, C₂H₅ or n-C₃H₇, (F) denotes an optional fluorine substituent, and q denotes 1, 2 or 3, and R⁷ has one of the meanings indicated for R¹, preferably in amounts of > 3% by weight, in particular ≥ 5% by weight and very particularly preferably 5-30% by weight.
   Particularly preferred compounds of the formula FI are selected from the group consisting of the following sub-formulae: 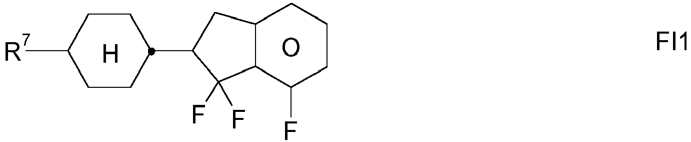 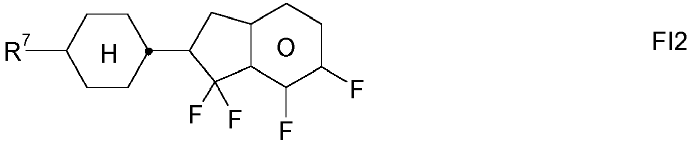 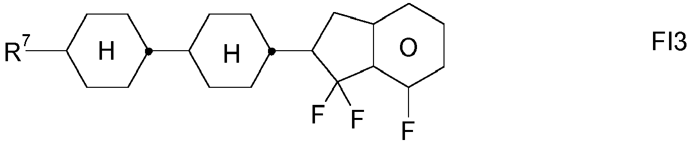 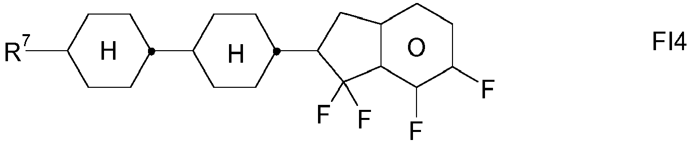 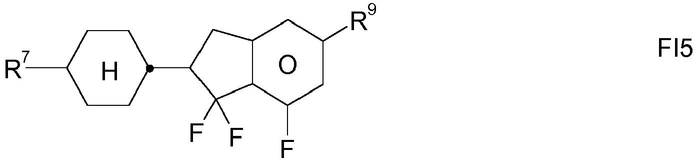 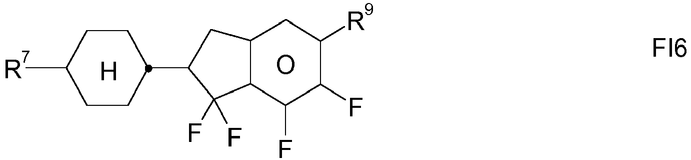 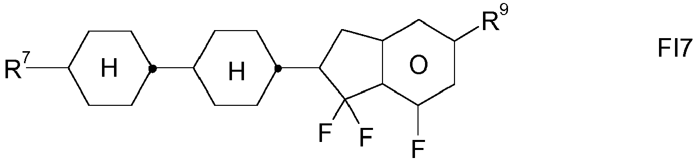 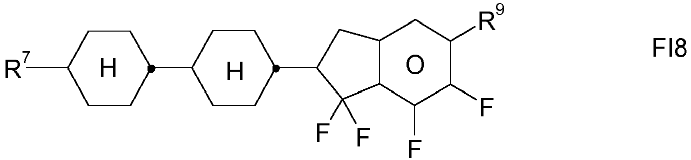 in which R⁷ preferably denotes straight-chain alkyl, and R⁹ denotes CH₃, C₂H₅ or n-C₃H₇. Particular preference is given to the compounds of the formulae FI1, FI2 and FI3.
l) LC medium which additionally comprises one or more compounds selected from the group consisting of the following formulae: 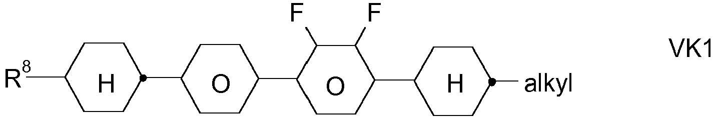 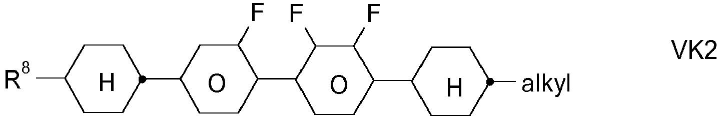 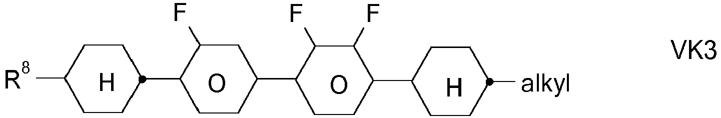 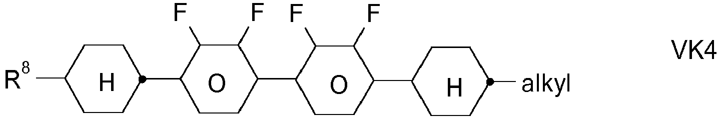 in which R⁸ has the meaning indicated for R¹, and alkyl denotes a straight-chain alkyl radical having 1-6 C atoms.
m) LC medium which additionally comprises one or more compounds which contain a tetrahydronaphthyl or naphthyl unit, such as, for example, the compounds selected from the group consisting of the following formulae: 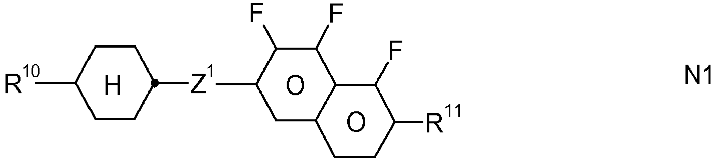 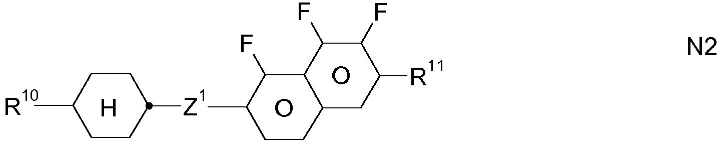 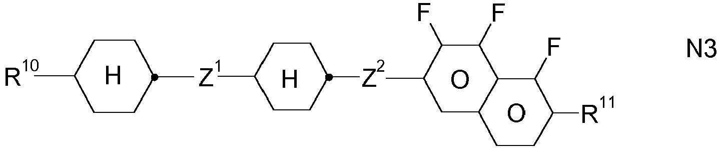 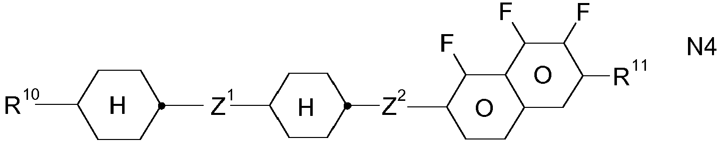 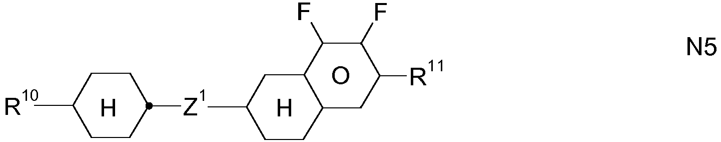 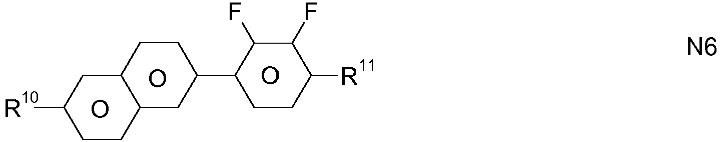 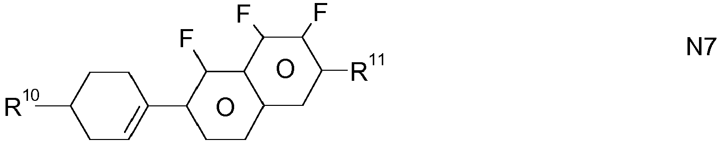 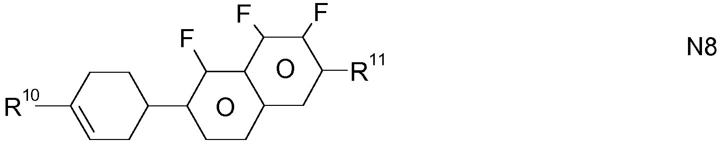 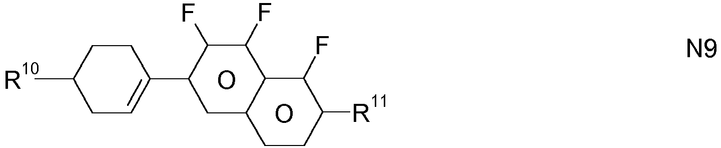 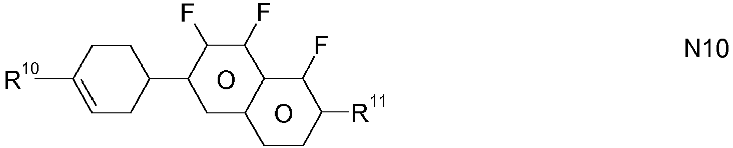 in which
   - R¹⁰ and R¹¹: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
   - and R¹⁰ and R¹¹: preferably denote straight-chain alkyl or alkoxy having 1 to 6 C atoms or straight-chain alkenyl having 2 to 6 C atoms, and
   - Z¹ and Z²: each, independently of one another, denote -C₂H₄-, -CH=CH-, -(CH₂)₄-, -(CH₂)₃O-, -O(CH₂)₃-, -CH=CH-CH₂CH₂-, -CH₂CH₂CH=CH-, -CH₂O-, -OCH₂-, -CO-O-, -O-CO-, -C₂F₄-, -CF=CF-, -CF=CH-, -CH=CF-, -CH₂- or a single bond.
n) LC medium which additionally comprises one or more difluorodibenzo-chromans and/or chromans of the following formulae: 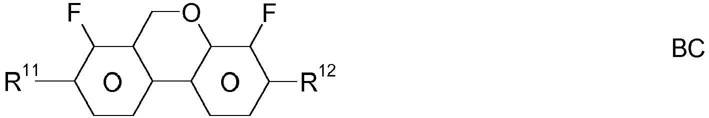 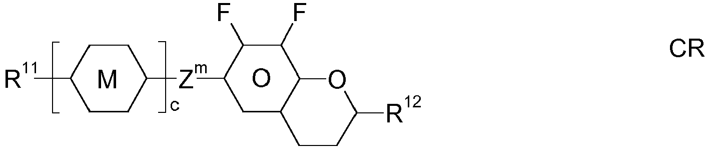 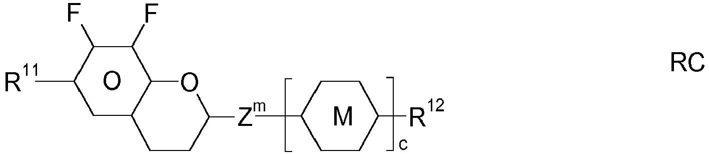 in which
   - R¹¹ and R¹²: each, independently of one another, have one of the meanings indicated above for R¹¹,
   - ring M: is trans-1,4-cyclohexylene or 1,4-phenylene,
   - Z^{m}: -C₂H₄-, -CH₂O-, -OCH₂-, -CO-O- or -O-CO-,
   - c: is 0, 1 or 2,
   preferably in amounts of 3 to 20% by weight, in particular in amounts of 3 to 15% by weight.
   Particularly preferred compounds of the formulae BC, CR and RC are selected from the group consisting of the following sub-formulae: 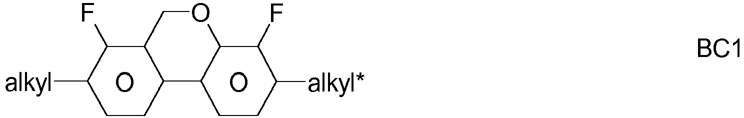 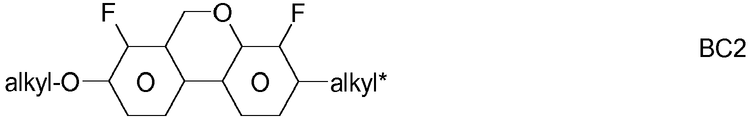 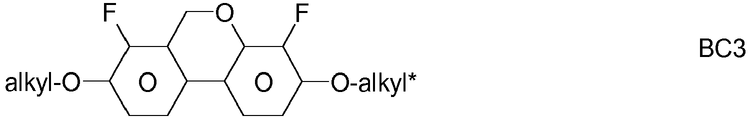 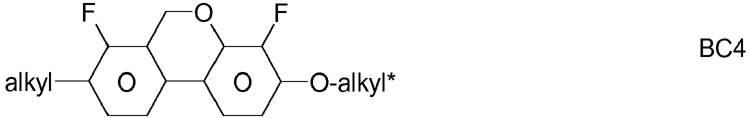 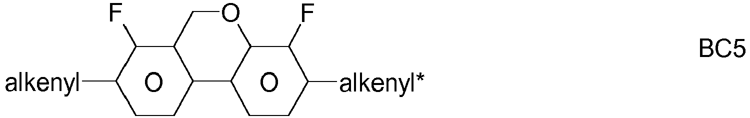 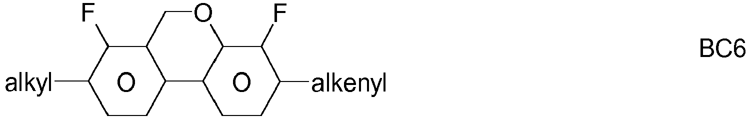 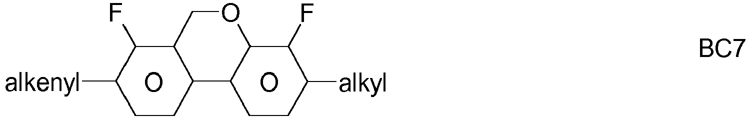 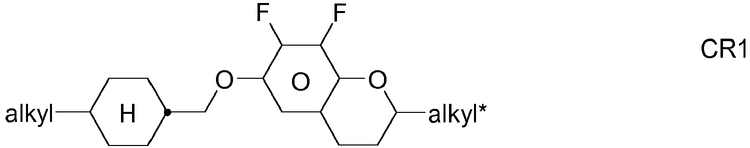 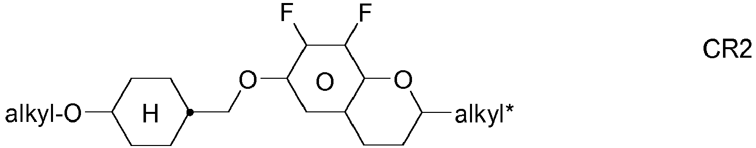 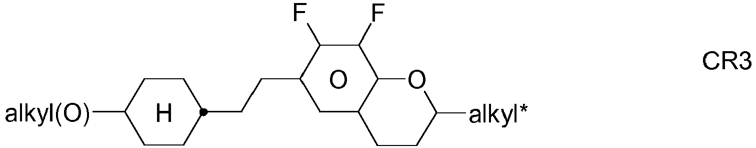 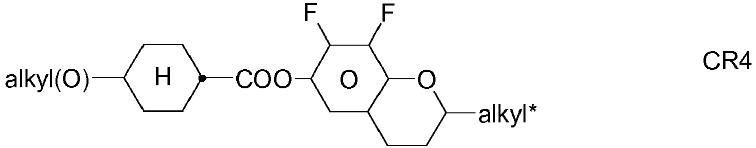 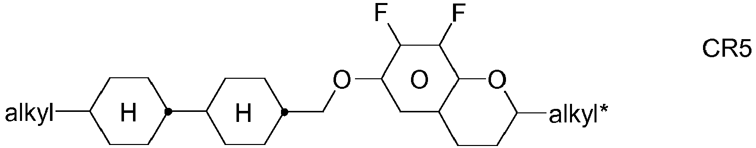 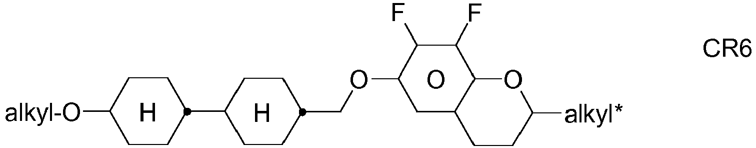 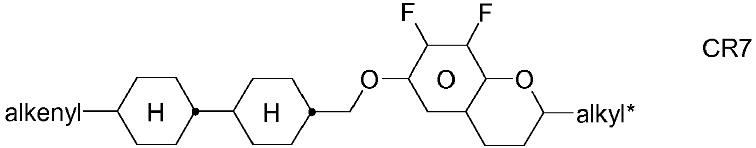 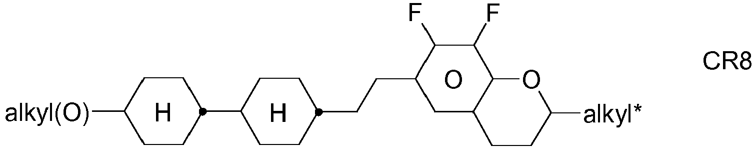 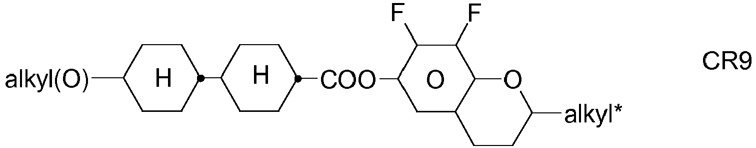 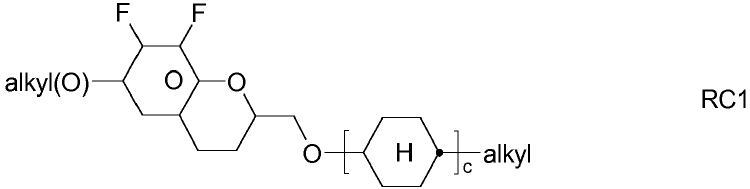 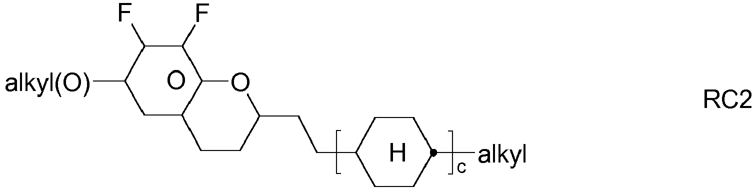 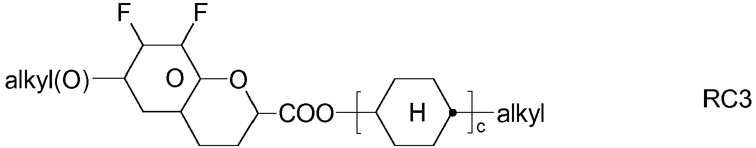 in which alkyl and alkyl* each, independently of one another, denote a straight-chain alkyl radical having 1-6 C atoms, (O) denotes an oxygen atom or a single bond, c is 1 or 2, and alkenyl and alkenyl* each, independently of one another, denote a straight-chain alkenyl radical having 2-6 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Very particular preference is given to mixtures comprising one, two or three compounds of the formula BC-2.
o) LC medium which additionally comprises one or more fluorinated phenanthrenes and/or dibenzofurans of the following formulae: 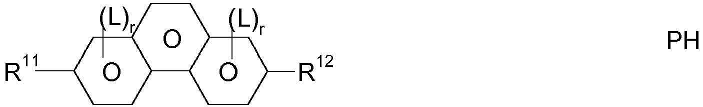 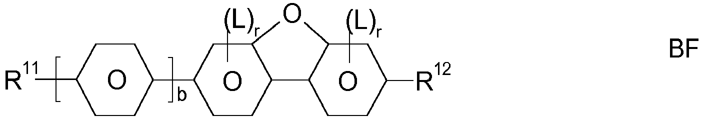 in which R¹¹ and R¹² each, independently of one another, have one of the meanings indicated above for R¹¹, b denotes 0 or 1, L denotes F, and r denotes 1, 2 or 3.
   Particularly preferred compounds of the formulae PH and BF are selected from the group consisting of the following sub-formulae: 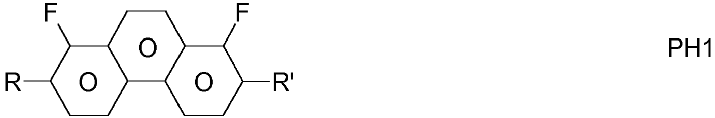 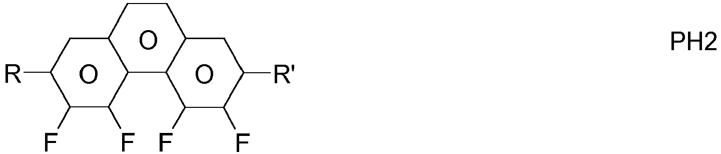 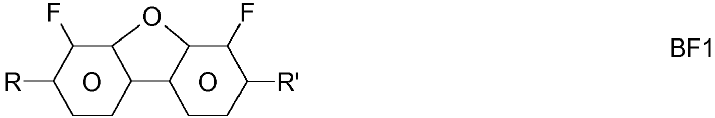 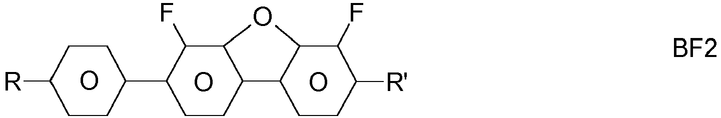 in which R and R' each, independently of one another, denote a straight-chain alkyl or alkoxy radical having 1-7 C atoms.
p) LC medium which additionally comprises one or more monocyclic compounds of the following formula 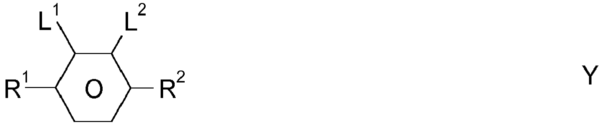 wherein
   - R¹ and R²: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
   - L¹ and L²: each, independently of one another, denote F, Cl, OCF₃, CF₃, CH₃, CH₂F, CHF₂.

   Preferably, both L¹ and L² denote F or one of L¹ and L² denotes F and the other denotes Cl,
   The compounds of the formula Y are preferably selected from the group consisting of the following sub-formulae: 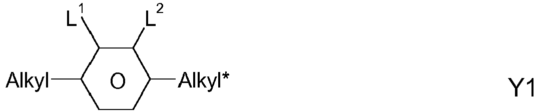 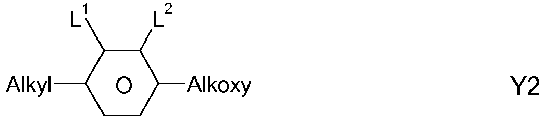 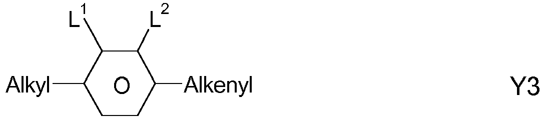 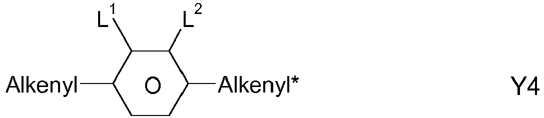 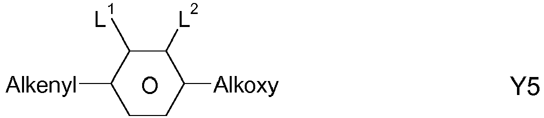 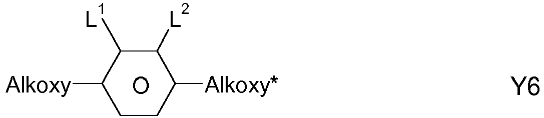 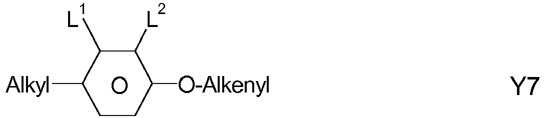 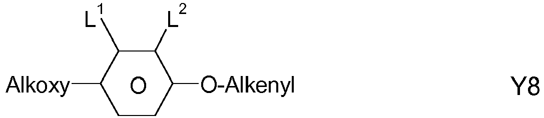 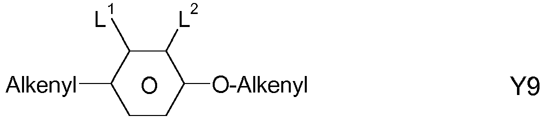 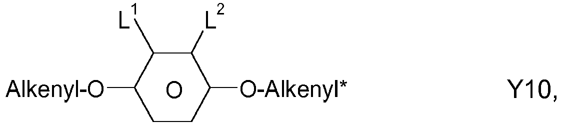 in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms. Alkenyl and Alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Particularly preferred compounds of the formula Y are selected from the group consisting of the following sub-formulae: 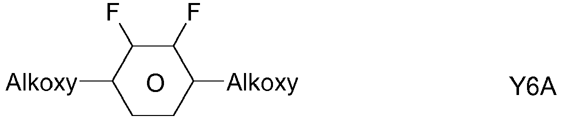 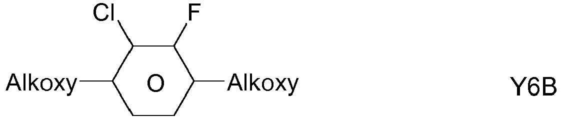 wherein Alkoxy preferably denotes straight-chain alkoxy with 3, 4, or 5 C atoms.
q) LC medium which, apart from the polymerisable compounds according to the invention, in particular of the formula I or sub-formulae thereof and the comonomers, comprises no compounds which contain a terminal vinyloxy group (-O-CH=CH₂).
r) LC medium which comprises 1 to 5, preferably 1, 2 or 3, polymerisable compounds, preferably selected from polymerisable compounds according to the invention, in particular of the formula I or sub-formulae thereof.
s) LC medium in which the proportion of polymerisable compounds, in particular of the formula I or sub-formulae thereof, in the mixture as a whole is 0.05 to 5%, preferably 0.1 to 1%.
t) LC medium which comprises 1 to 8, preferably 1 to 5, compounds of the formulae CY1, CY2, PY1 and/or PY2. The proportion of these compounds in the mixture as a whole is preferably 5 to 60%, particularly preferably 10 to 35%. The content of these individual compounds is preferably in each case 2 to 20%.
u) LC medium which comprises 1 to 8, preferably 1 to 5, compounds of the formulae CY9, CY10, PY9 and/or PY10. The proportion of these compounds in the mixture as a whole is preferably 5 to 60%, particularly preferably 10 to 35%. The content of these individual compounds is preferably in each case 2 to 20%.
v) LC medium which comprises 1 to 10, preferably 1 to 8, compounds of the formula ZK, in particular compounds of the formulae ZK1, ZK2 and/or ZK6. The proportion of these compounds in the mixture as a whole is preferably 3 to 25%, particularly preferably 5 to 45%. The content of these individual compounds is preferably in each case 2 to 20%.
w) LC medium in which the proportion of compounds of the formulae CY, PY and ZK in the mixture as a whole is greater than 70%, preferably greater than 80%.
x) LC medium in which the LC host mixture contains one or more compounds containing an alkenyl group, preferably selected from the group consisting of formula CY, PY and LY, wherein one or both of R¹ and R² denote straight-chain alkenyl having 2-6 C atoms, formula ZK and DK, wherein one or both of R³ and R⁴ or one or both of R⁵ and R⁶ denote straight-chain alkenyl having 2-6 C atoms, and formula B2 and B3, very preferably selected from formulae CY15, CY16, CY24, CY32, PY15, PY16, ZK3, ZK4, DK3, DK6, B2 and B3, most preferably selected from formulae ZK3, ZK4, B2 and B3. The concentration of these compounds in the LC host mixture is preferably from 2 to 70%, very preferably from 3 to 55%.
y) LC medium which contains one or more, preferably 1 to 5, compounds selected of formula PY1-PY8, very preferably of formula PY2. The proportion of these compounds in the mixture as a whole is preferably 1 to 30%, particularly preferably 2 to 20%. The content of these individual compounds is preferably in each case 1 to 20%.
z) LC medium which contains one or more, preferably 1, 2 or 3, compounds of formula T2. The content of these compounds in the mixture as a whole is preferably 1 to 20%.

The LC medium of the invention comprises one or more polymerisable compounds RM-1 to RM 121 seleted from the Table D below.

Particular preference is given to LC media comprising one, two or three polymerisable compounds of formulae RM-1 to RM-121.

Preferably the proportion of polymerisable compounds of formulae RM-1 to RM-121 in the LC medium is from 0.01 to 5%, very preferably from 0.05 to 1%, most preferably from 0.1 to 0.5%.

It was observed that, the combination of polymerisable compounds of formulae RM-1 to RM-121 with the alkenyl compound of formula AN1a and the quaterphenyl compound of formula Q leads to advantageous behaviour of the LC medium, where a quick and complete polymerisation, the quick generation of a low pretilt angle which is stable after UV exposure, at the same time a high reliability and high VHR value after UV exposure can be achieved together with a high birefringence. Besides, the LC medium shows high absorption at longer UV wavelengths, so that it is possible to use such longer UV wavelengths for polymerisation, which is advantageous for the display manufacturing process.

For the production of PSA displays, the polymerisable compounds contained in the LC medium are polymerised or crosslinked (if one compound contains two or more polymerisable groups) by in-situ polymerisation in the LC medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

Preferably the proportion of the polymerisable compounds in the LC medium is from > 0 to < 5%, very preferably from > 0 to < 1%, most preferably from 0.01 to 0.5%.

Preference is given to LC media which have a nematic LC phase, and preferably have no chiral liquid crystal phase.

The combination of compounds of the preferred embodiments mentioned above with the polymerised compounds described above causes low threshold voltages, low rotational viscosities and very good low-temperature stabilities in the LC media according to the invention at the same time as constantly high clearing points and high VHR values.

The use of LC media containing polymerisable compounds allows the rapid establishment of a particularly low pretilt angle in PSA displays. In particular, the LC media exhibit significantly shortened response times, in particular also the grey-shade response times, in PSA displays compared with the media from the prior art.

The LC media and LC host mixtures of the present invention preferably have a nematic phase range of at least 80 K, particularly preferably at least 100 K, and a rotational viscosity ≤ 250 mPa·s, preferably ≤ 200 mPa·s, at 20°C.

In the VA-type displays according to the invention, the molecules in the layer of the LC medium in the switched-off state are aligned perpendicular to the electrode surfaces (homeotropically) or have a a tilted homeotropic alignment. On application of an electrical voltage to the electrodes, a realignment of the LC molecules takes place with the longitudinal molecular axes parallel to the electrode surfaces.

The LC media according to the invention are preferably based on compounds with negative dielectric anisotropy, are in particular suitable for use in displays of the PS-VA and PS-UB-FFS type, and preferably have a negative dielectric anisotropy Δε, very preferably from -0.5 to -10, most preferably from -2.5 to -7.5, at 20°C and 1 kHz.

The birefringence Δn in LC media according to the invention, especially for use in displays of the PS-VA and PS-UB-FFS type, is preferably below 0.16, particularly preferably from 0.06 to 0.14, very particularly preferably from 0.07 to 0,12.

The LC media according to the invention may also comprise further additives which are known to the person skilled in the art and are described in the literature, such as, for example, polymerisation initiators, inhibitors, stabilisers, surface-active substances or chiral dopants. These may be polymerisable or non-polymerisable.

In a preferred embodiment the LC media contain one or more chiral dopants, preferably in a concentration from 0.01 to 1%, very preferably from 0.05 to 0.5%. The chiral dopants are preferably selected from the group consisting of compounds from Table B below, very preferably from the group consisting of R- or S-1011, R- or S-2011, R- or S-3011, R- or S-4011, and R- or S-5011.

In another preferred embodiment the LC media contain a racemate of one or more chiral dopants, which are preferably selected from the chiral dopants mentioned in the previous paragraph.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

The individual components of the preferred embodiments a)-z) of the LC media according to the invention are either known or methods for the preparation thereof can readily be derived from the prior art by the person skilled in the relevant art, since they are based on standard methods described in the literature. Corresponding compounds of the formula CY are described, for example, in EP-A-0 364 538. Corresponding compounds of the formula ZK are described, for example, in DE-A-26 36 684 and DE-A-33 21 373.

The LC media which can be used in accordance with the invention are prepared in a manner conventional per se, for example by mixing one or more of the above-mentioned compounds with one or more polymerisable compounds as defined above, and optionally with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing. The invention furthermore relates to the process for the preparation of the LC media according to the invention.

It goes without saying to the person skilled in the art that the LC media according to the invention may also comprise compounds in which, for example, H, N, O, Cl, F have been replaced by the corresponding isotopes like deuterium etc.

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

The following abbreviations are used:
(n, m, z: in each case, independently of one another, 1, 2, 3, 4, 5 or 6)

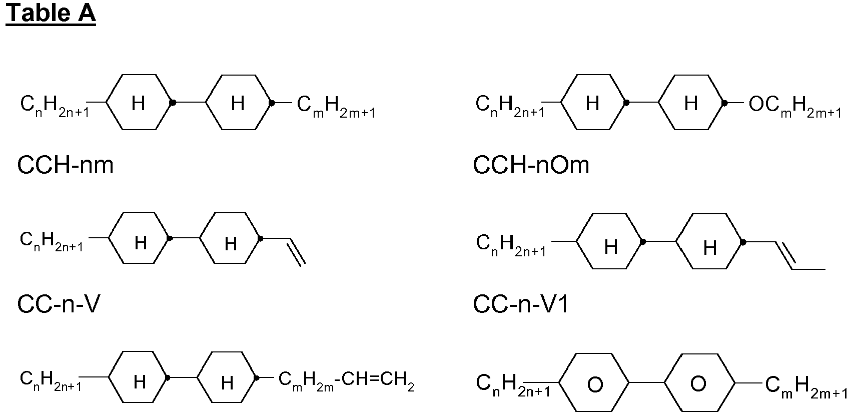

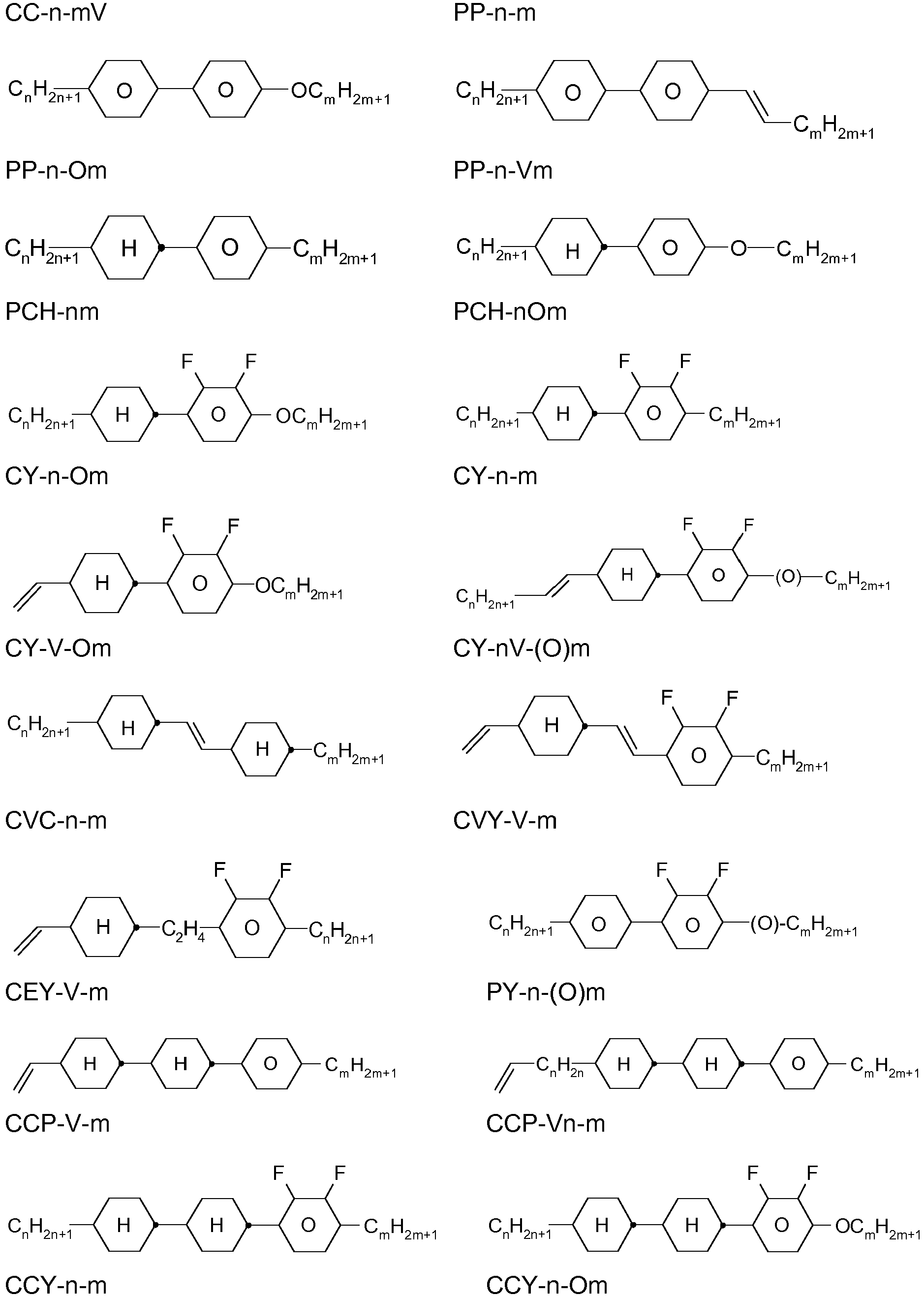

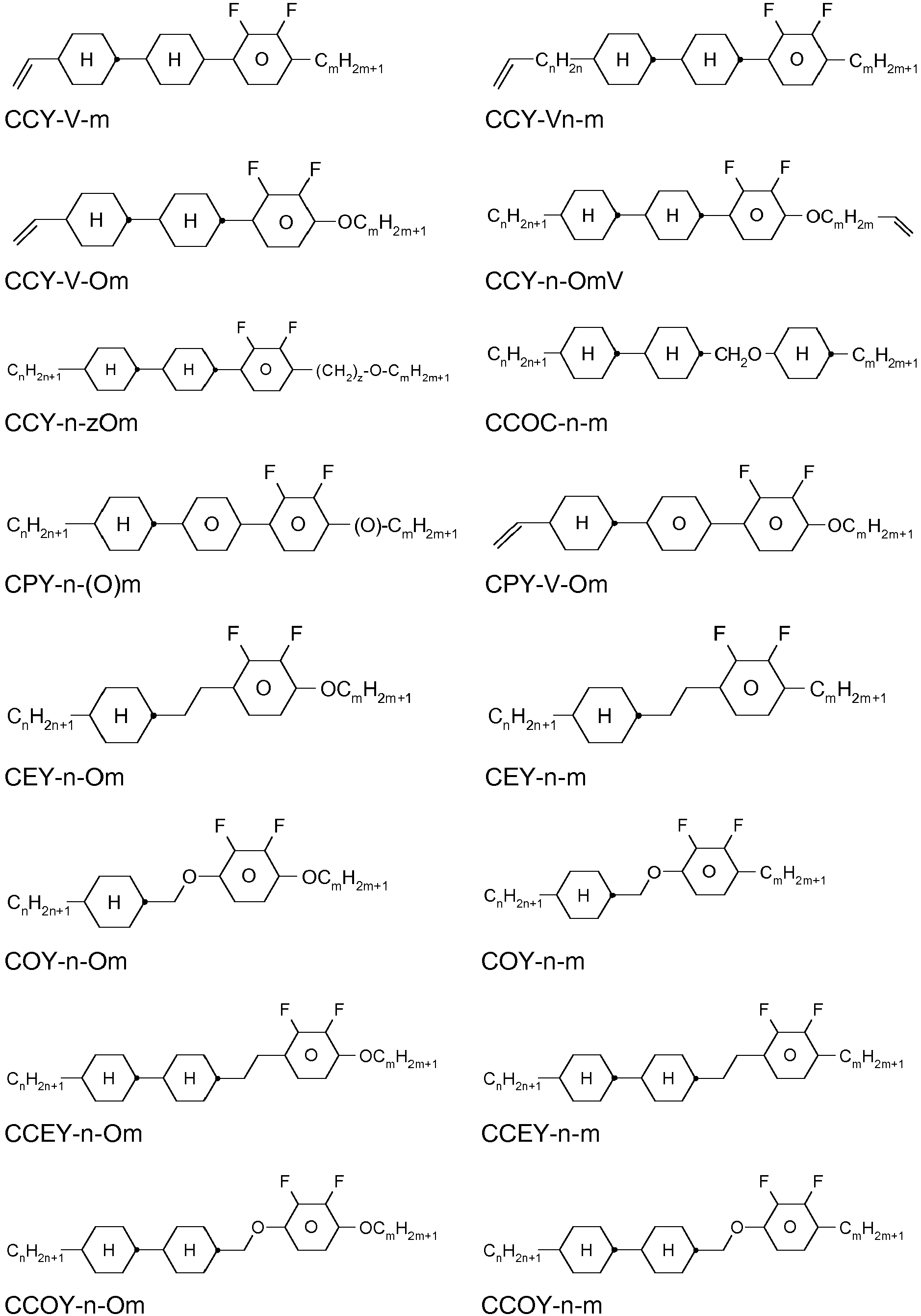

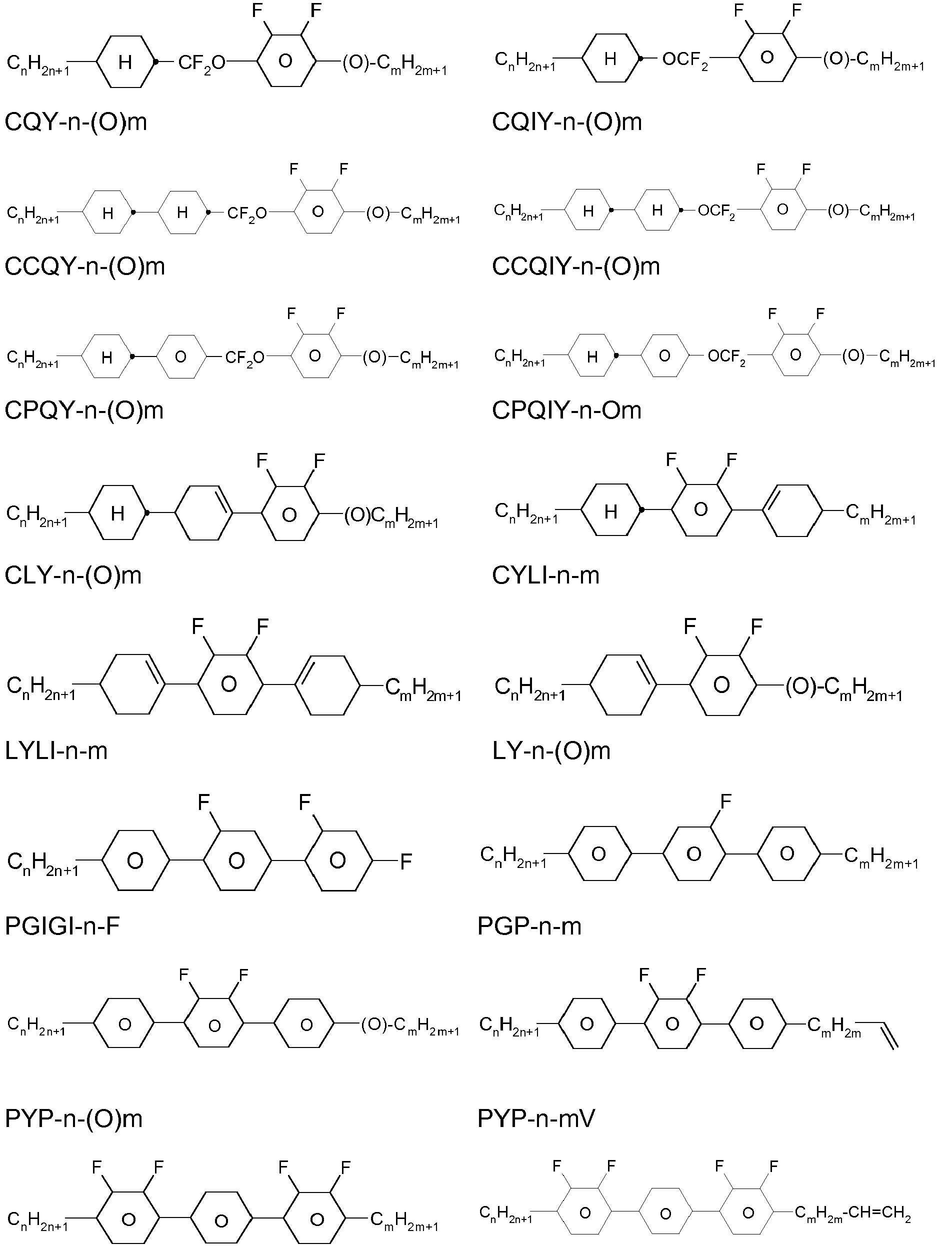

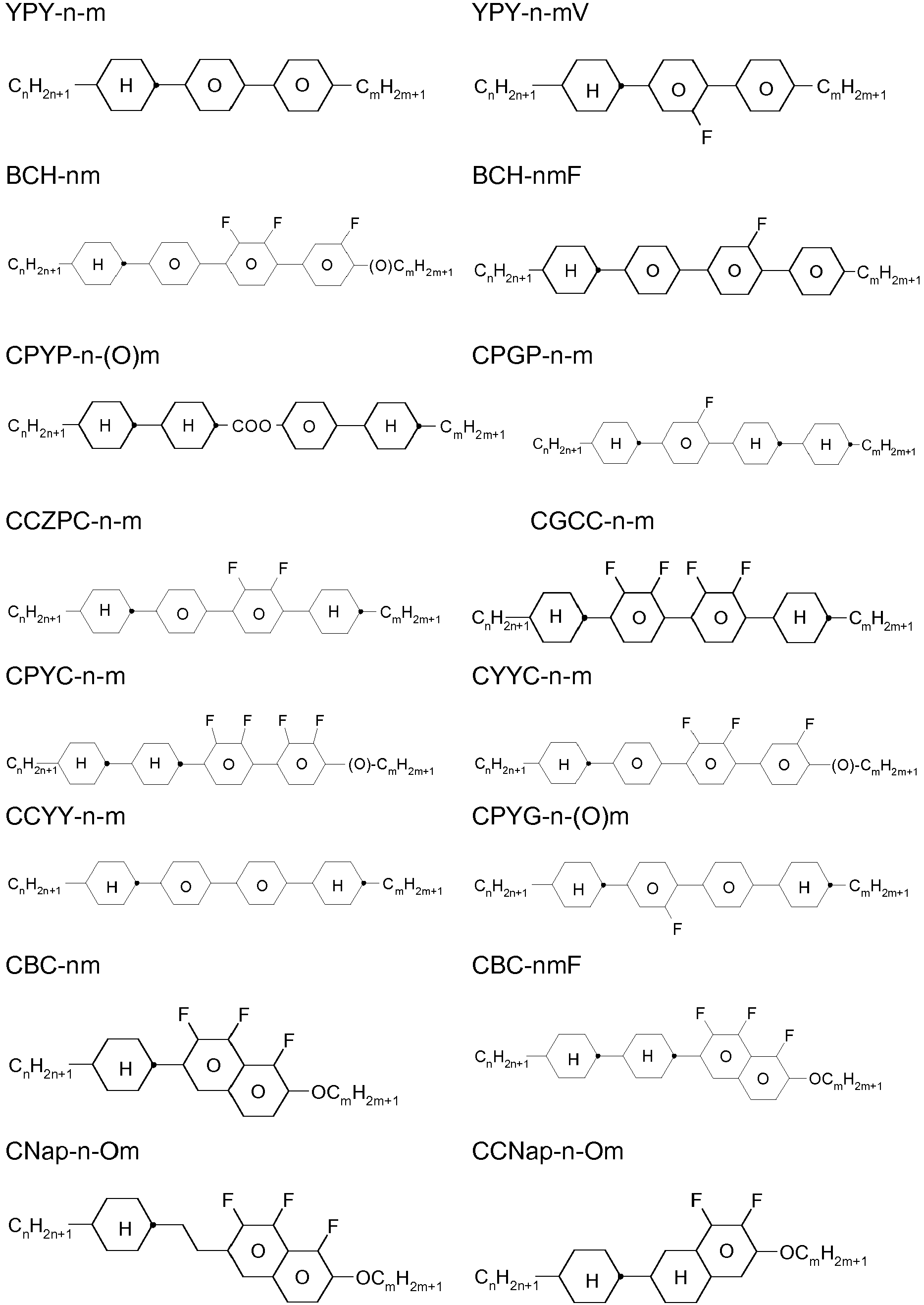

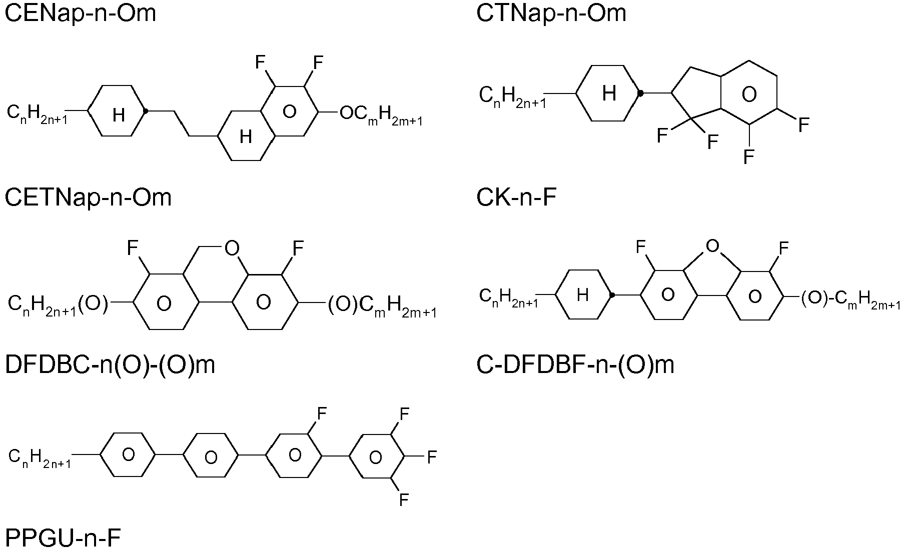

In a preferred embodiment of the present invention, the LC media according to the invention comprise one or more compounds selected from the group consisting of compounds from Table A.

**Table B**

| Table B shows possible chiral dopants which can be added to the LC media according to the invention. | |
|---|---|
| 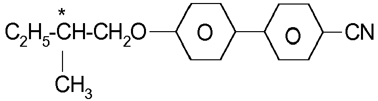 | 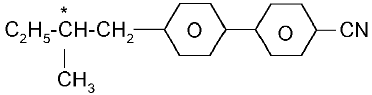 |
| **C 15** | **CB 15** |
| 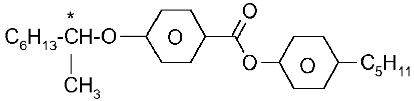 | 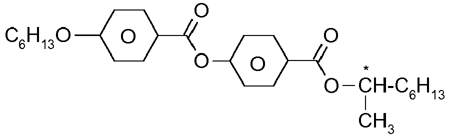 |
| **CM 21** | **R/S-811** |
| 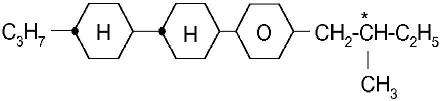 | 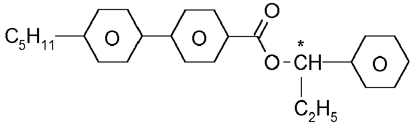 |
| **CM 44** | **CM 45** |
| 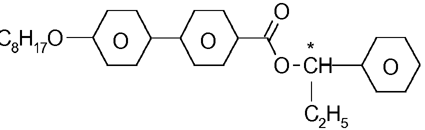 | 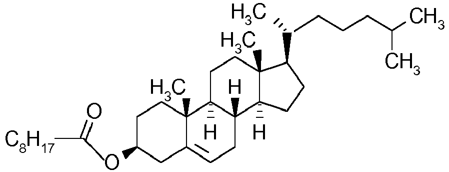 |
| **CM 47** | **CN** |
| 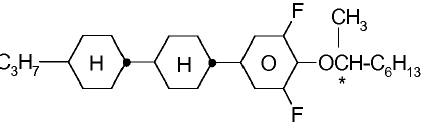 | 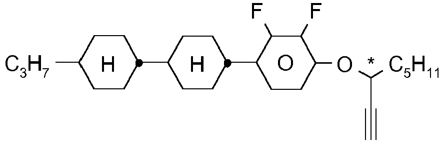 |
| **R/S-2011** | **R/S-3011** |
| 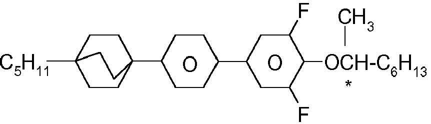 | 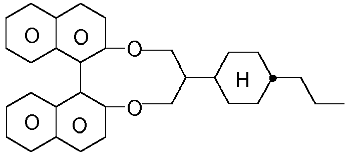 |
| **R/S-4011** | **R/S-5011** |
| 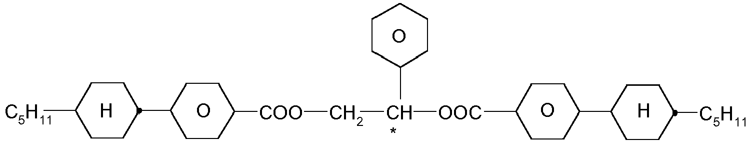 | |
| **R/S-1011** | |

The LC media preferably comprise 0 to 10% by weight, in particular 0.01 to 5% by weight, particularly preferably 0.1 to 3% by weight, of dopants. The LC media preferably comprise one or more dopants selected from the group consisting of compounds from Table B.

**Table C**

| Table C shows possible stabilisers which can be added to the LC media according to the invention. | |
|---|---|
| (n here denotes an integer from 1 to 12, preferably 1, 2, 3, 4, 5, 6, 7 or 8, terminal methyl groups are not shown). | |
| 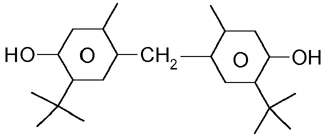 | 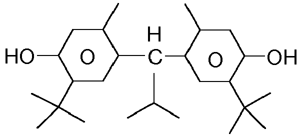 |
| 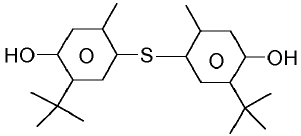 | 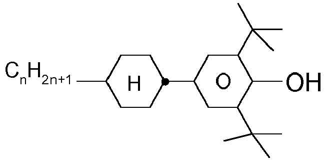 |
| 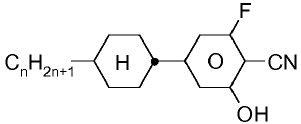 | 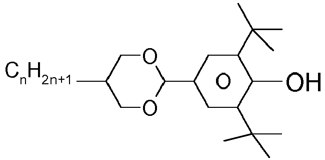 |
| 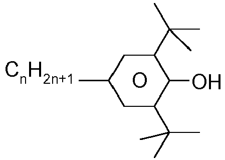 | 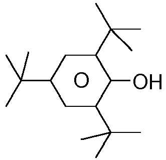 |
| 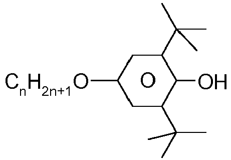 | 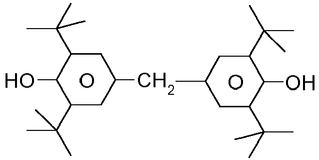 |
| 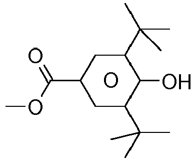 | 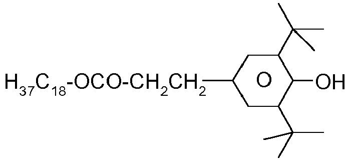 |
| 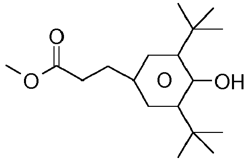 | 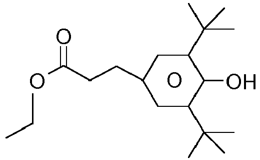 |
| 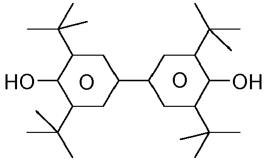 | 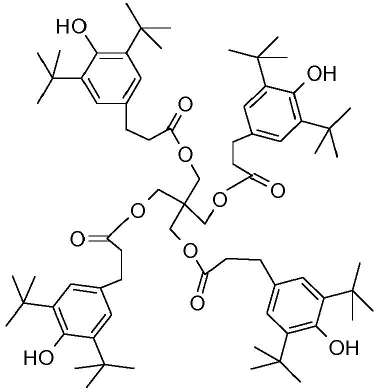 |
| 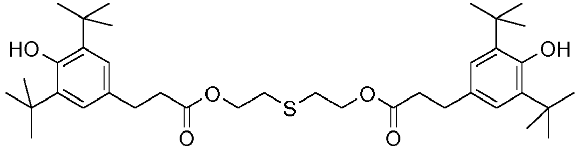 | |
| 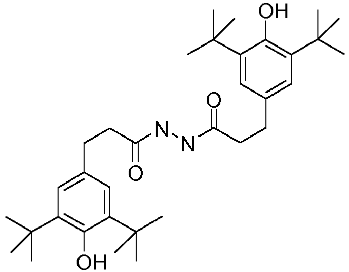 | 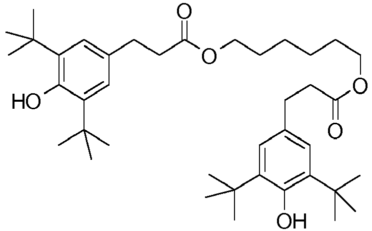 |
| 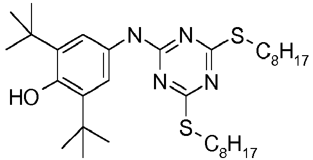 | 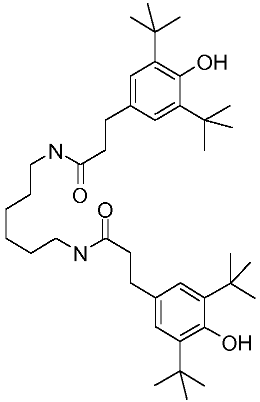 |
| 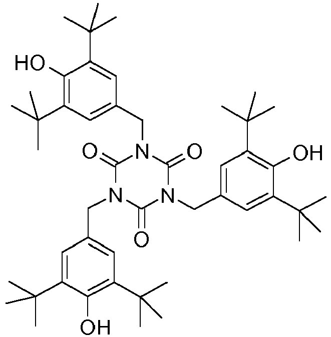 | 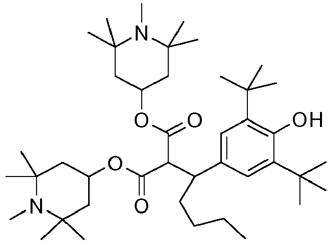 |
| 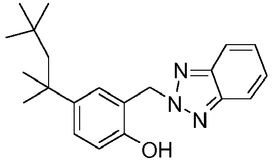 | 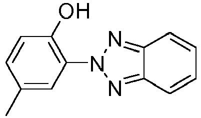 |
| 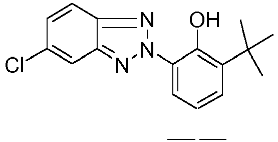 | 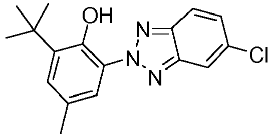 |
| 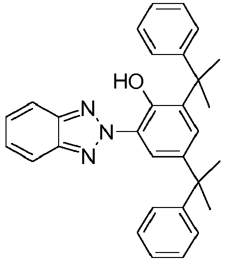 | 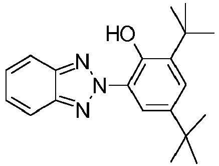 |
| 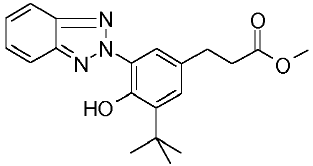 | 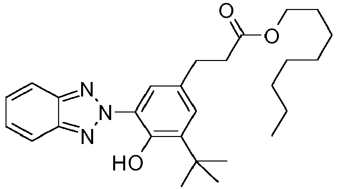 |
| 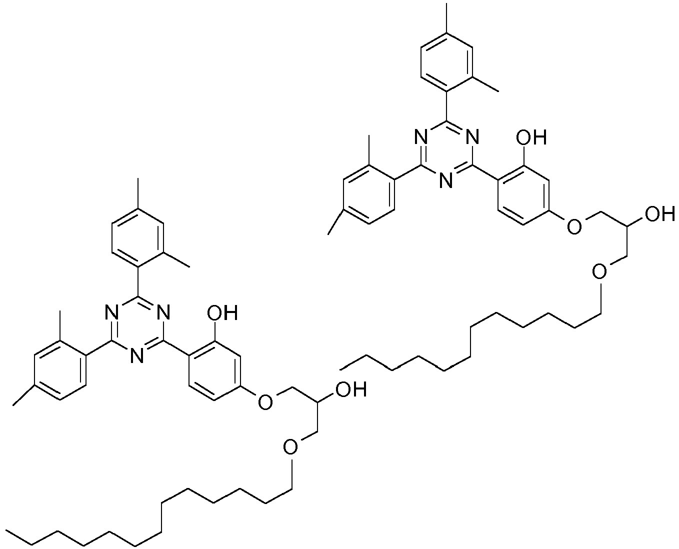 | |
| 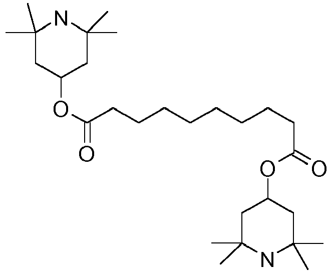 | 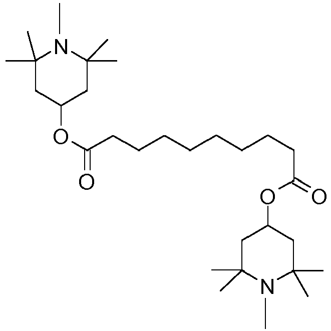 |
| 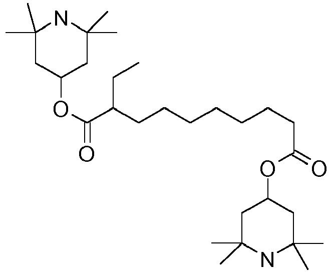 | 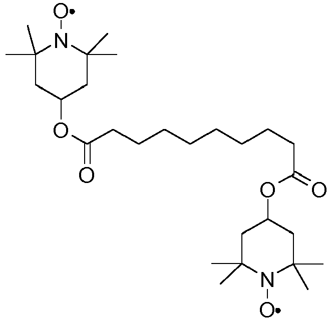 |
| 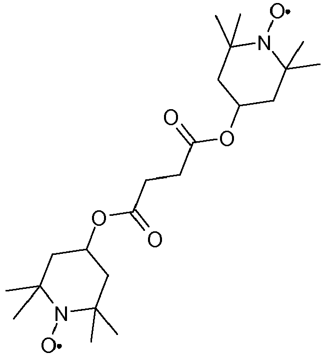 | 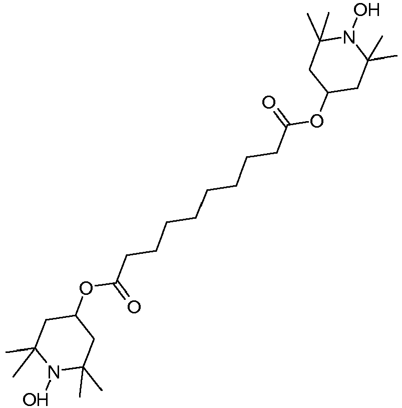 |

The LC media preferably comprise 0 to 10% by weight, in particular 1 ppm to 5% by weight, particularly preferably 1 ppm to 1% by weight, of stabilisers. The LC media preferably comprise one or more stabilisers selected from the group consisting of compounds from Table C.

**Table D**

| Table D shows illustrative compounds which are used in the LC media in accordance with the present invention, preferably as reactive mesogenic compounds. | |
|---|---|
| 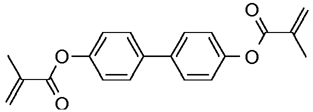 | RM-1 |
| 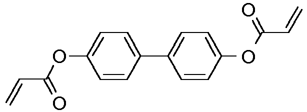 | RM-2 |
| 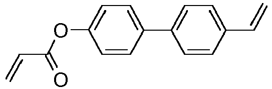 | RM-3 |
| 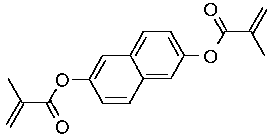 | RM-4 |
| 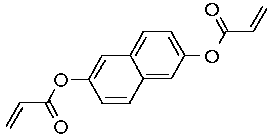 | RM-5 |
| 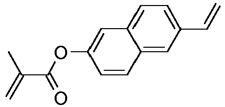 | RM-6 |
| 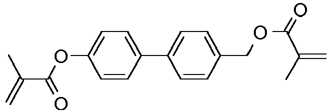 | RM-7 |
| 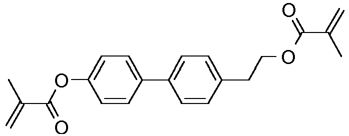 | RM-8 |
| 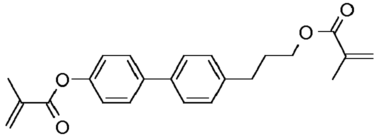 | RM-9 |
| 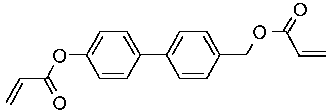 | RM-10 |
| 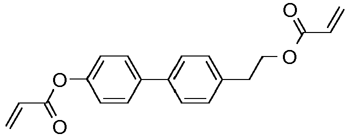 | RM-11 |
| 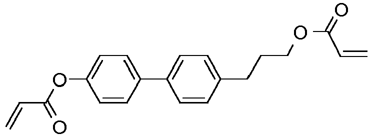 | RM-12 |
| 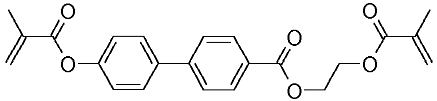 | RM-13 |
| 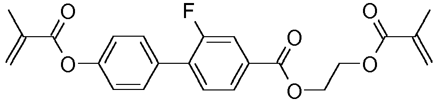 | RM-14 |
| 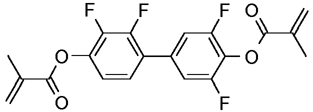 | RM-15 |
| 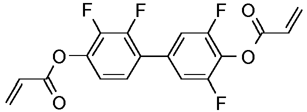 | RM-16 |
| 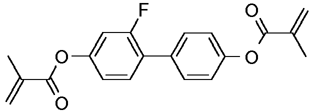 | RM-17 |
| 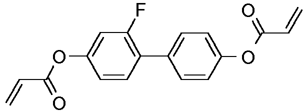 | RM-18 |
| 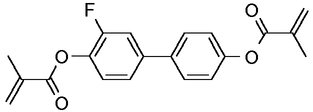 | RM-19 |
| 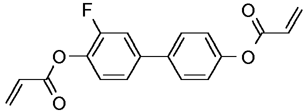 | RM-20 |
| 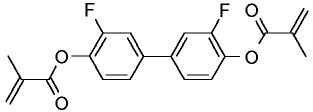 | RM-21 |
| 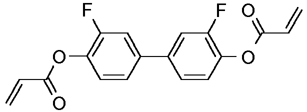 | RM-22 |
| 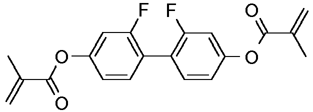 | RM-23 |
| 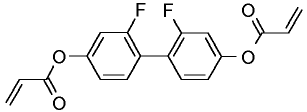 | RM-24 |
| 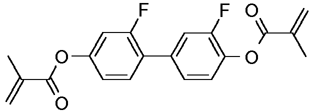 | RM-25 |
| 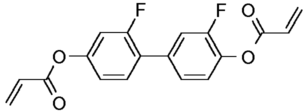 | RM-26 |
| 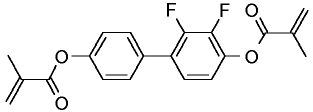 | RM-27 |
| 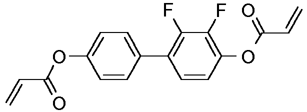 | RM-28 |
| 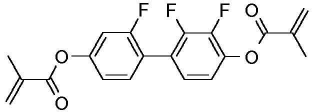 | RM-29 |
| 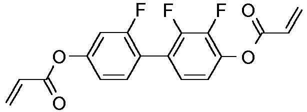 | RM-30 |
| 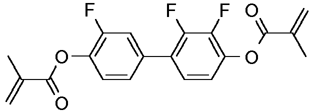 | RM-31 |
| 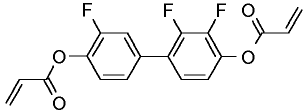 | RM-32 |
| 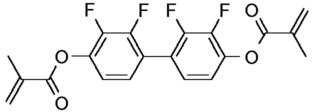 | RM-33 |
| 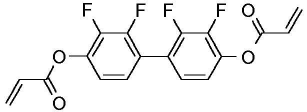 | RM-34 |
| 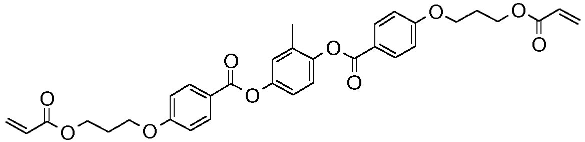 | RM-35 |
| 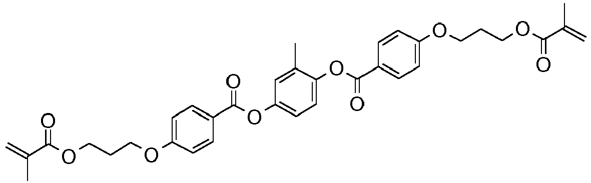 | RM-36 |
| 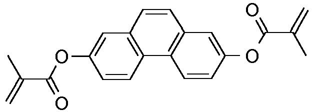 | RM-37 |
| 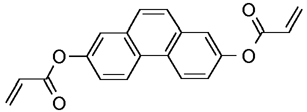 | RM-38 |
| 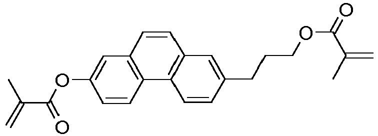 | RM-39 |
| 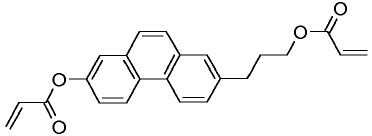 | RM-40 |
| 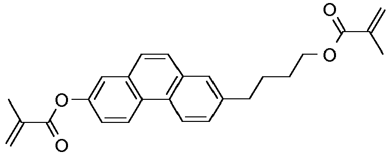 | RM-41 |
| 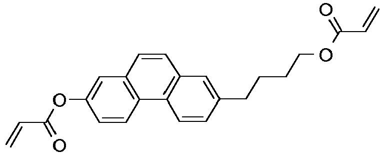 | RM-42 |
| 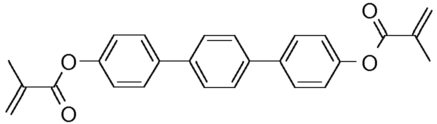 | RM-43 |
| 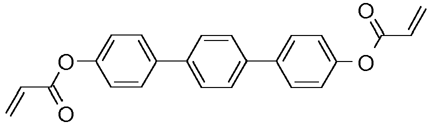 | RM-44 |
| 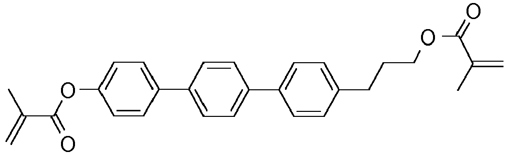 | RM-45 |
| 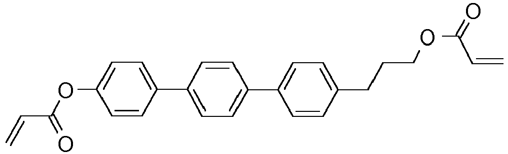 | RM-46 |
| 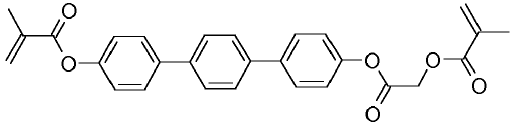 | RM-47 |
| 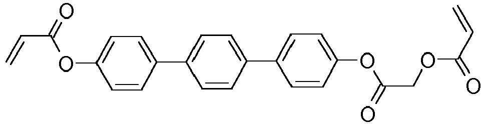 | RM-48 |
| 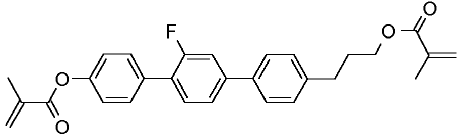 | RM-49 |
| 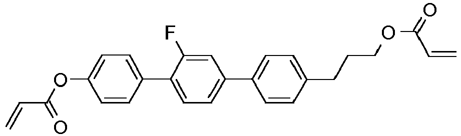 | RM-50 |
| 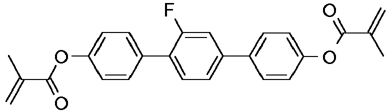 | RM-51 |
| 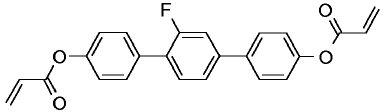 | RM-52 |
| 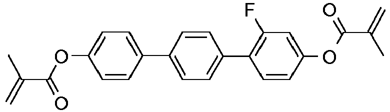 | RM-53 |
| 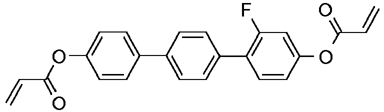 | RM-54 |
| 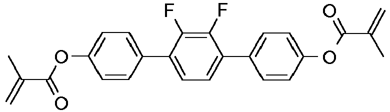 | RM-55 |
| 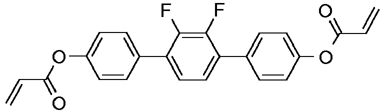 | RM-56 |
| 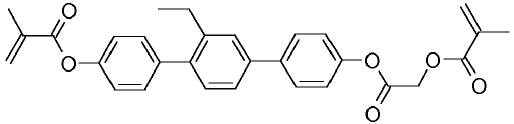 | RM-57 |
| 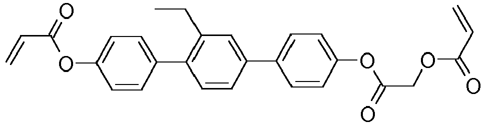 | RM-58 |
| 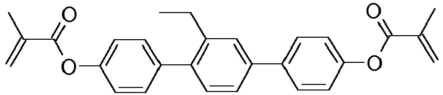 | RM-59 |
| 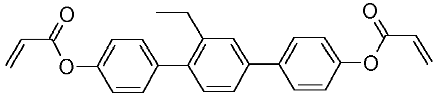 | RM-60 |
| 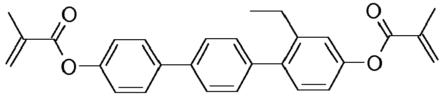 | RM-61 |
| 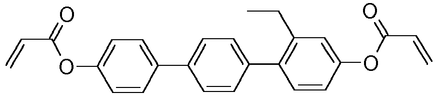 | RM-62 |
| 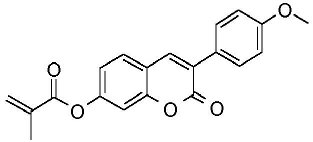 | RM-63 |
| 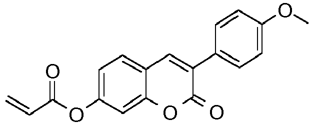 | RM-64 |
| 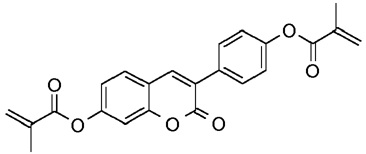 | RM-65 |
| 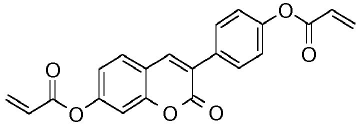 | RM-66 |
| 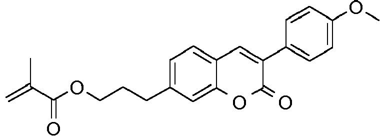 | RM-67 |
| 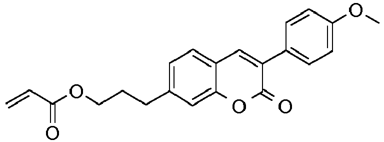 | RM-68 |
| 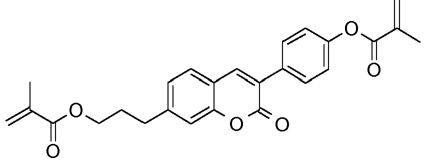 | RM-69 |
| 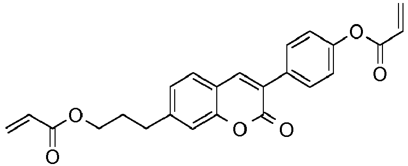 | RM-70 |
| 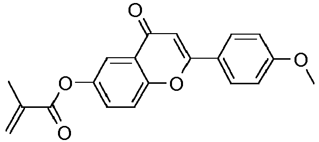 | RM-71 |
| 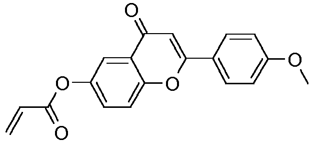 | RM-72 |
| 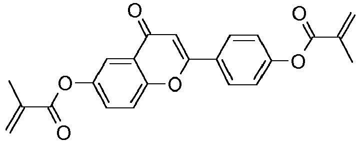 | RM-73 |
| 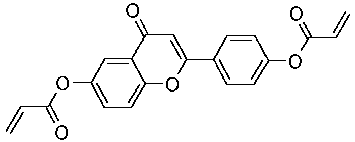 | RM-74 |
| 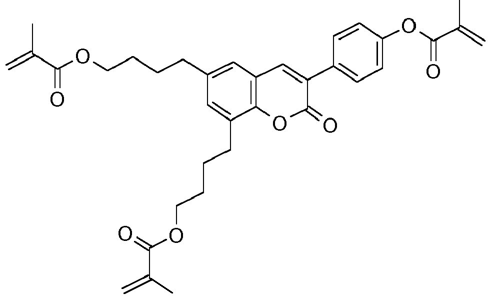 | RM-75 |
| 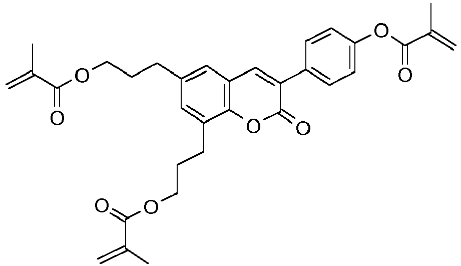 | RM-76 |
| 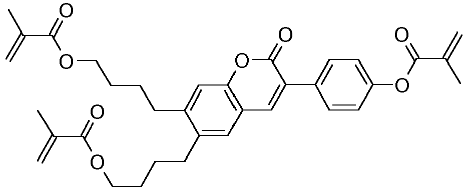 | RM-77 |
| 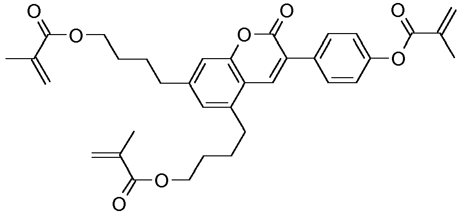 | RM-78 |
| 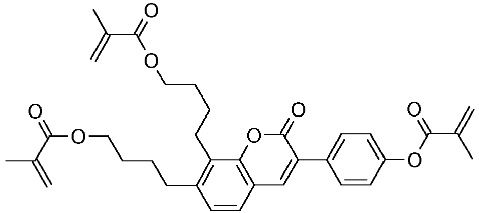 | RM-79 |
| 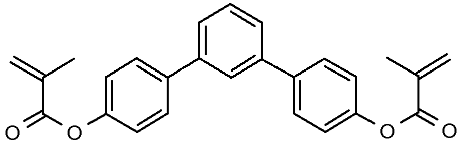 | RM-80 |
| 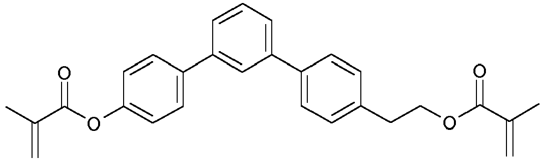 | RM-81 |
| 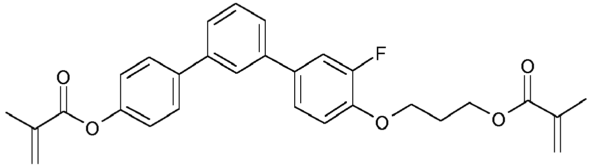 | RM-82 |
| 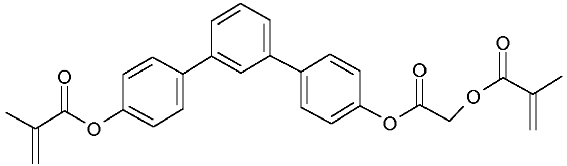 | RM-83 |
| 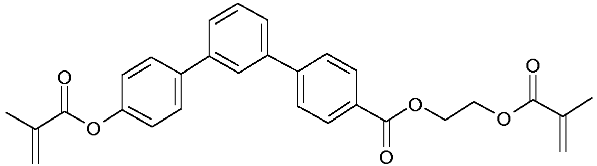 | RM-84 |
| 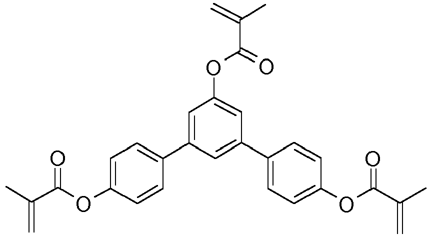 | RM-85 |
| 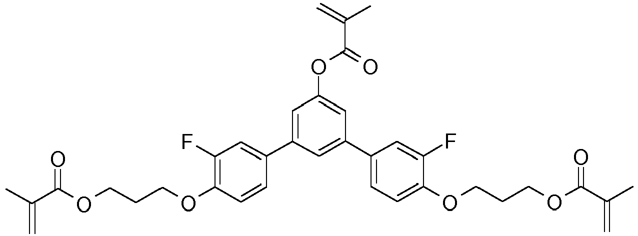 | RM-86 |
| 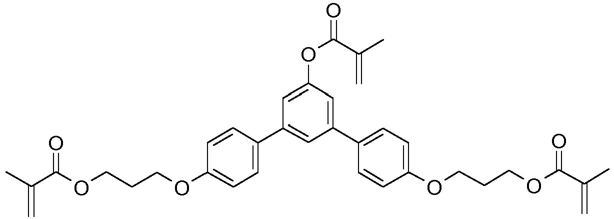 | RM-87 |
| 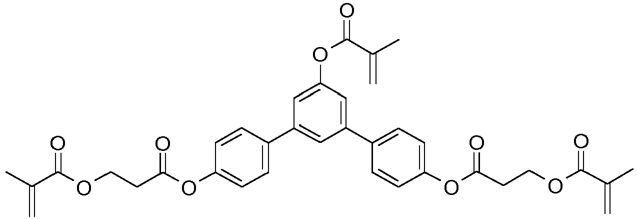 | RM-88 |
| 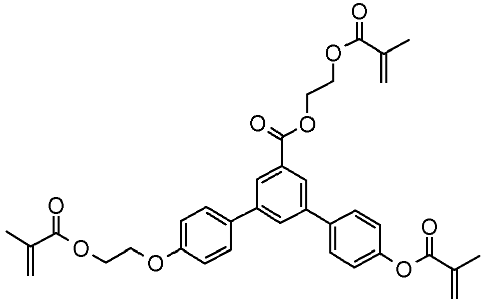 | RM-89 |
| 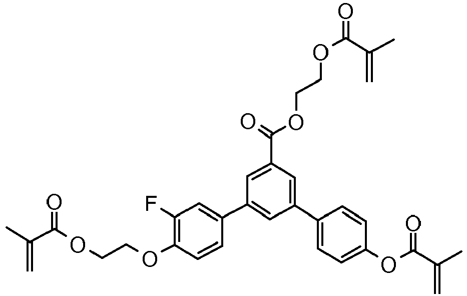 | RM-90 |
| 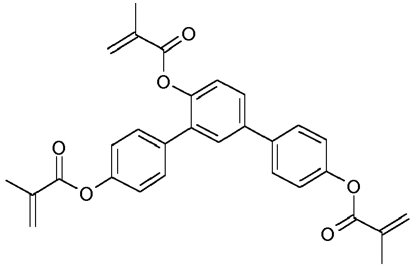 | RM-91 |
| 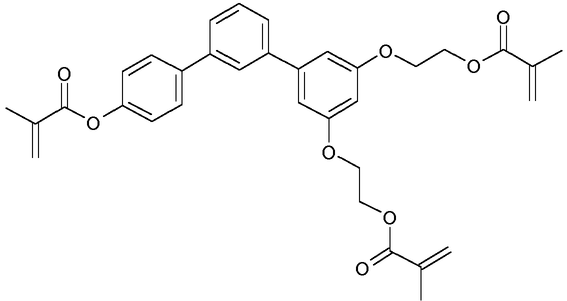 | RM-92 |
| 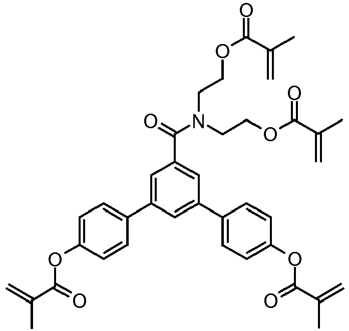 | RM-93 |
| 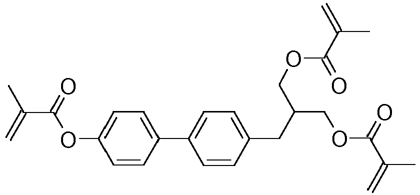 | RM-94 |
| 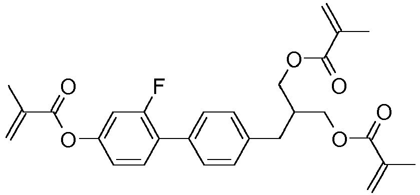 | RM-95 |
| 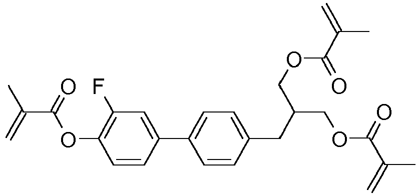 | RM-96 |
| 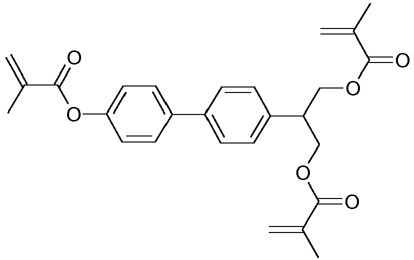 | RM-97 |
| 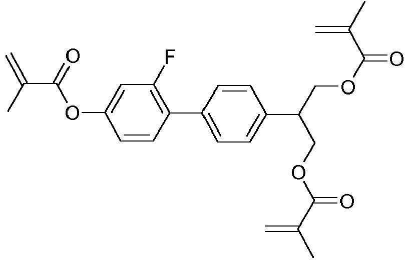 | RM-98 |
| 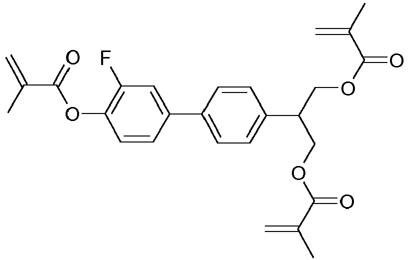 | RM-99 |
| 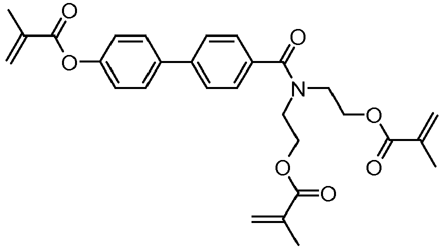 | RM-100 |
| 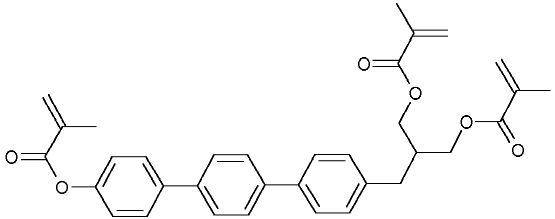 | RM-101 |
| 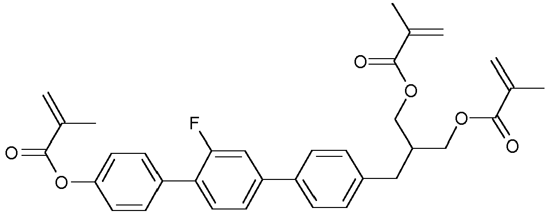 | RM-102 |
| 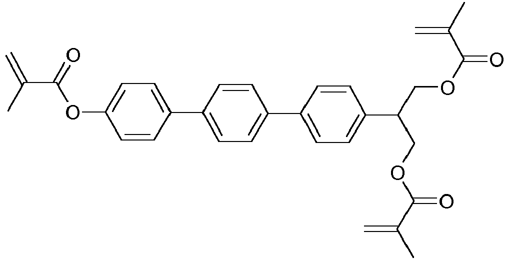 | RM-103 |
| 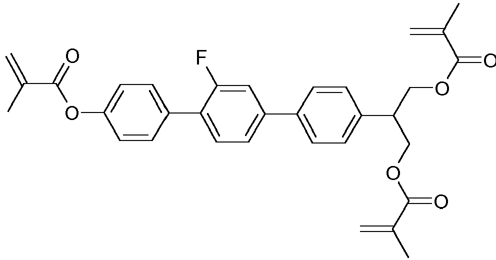 | RM-104 |
| 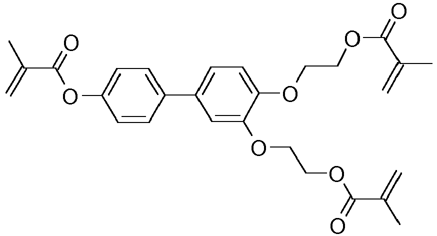 | RM-105 |
| 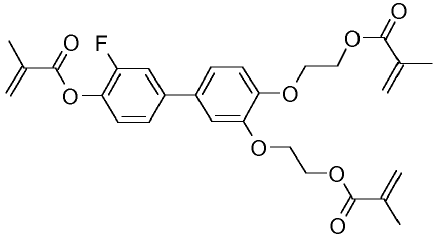 | RM-106 |
| 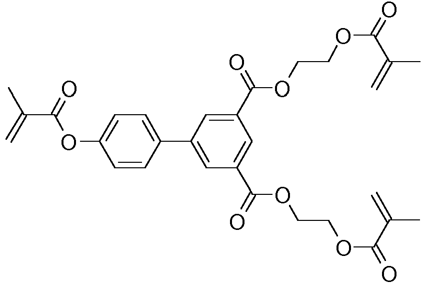 | RM-107 |
| 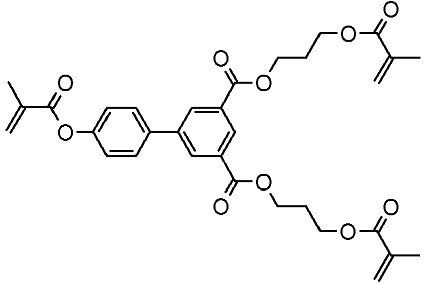 | RM-108 |
| 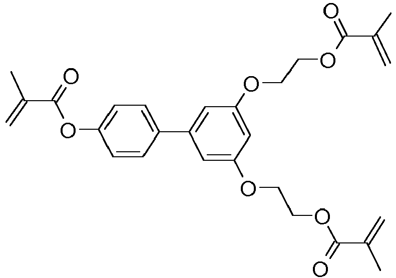 | RM-109 |
| 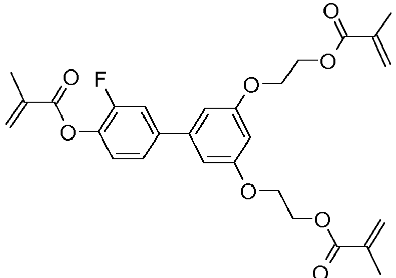 | RM-110 |
| 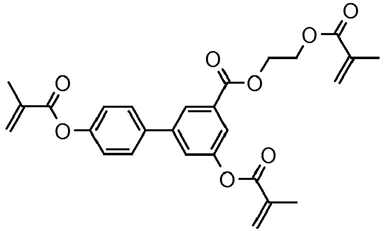 | RM-111 |
| 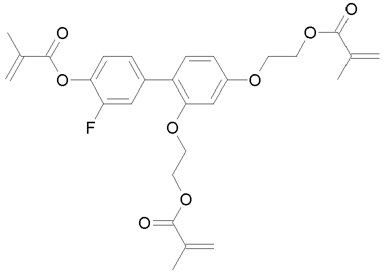 | RM-112 |
| 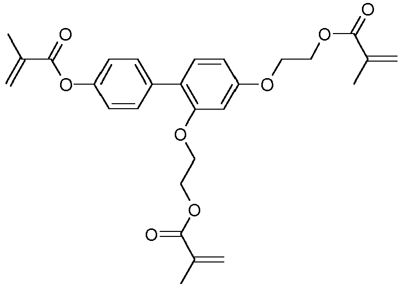 | RM-113 |
| 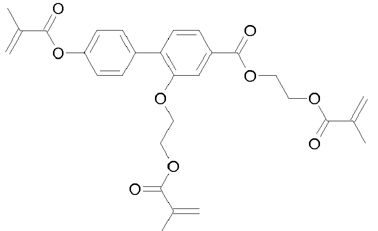 | RM-114 |
| 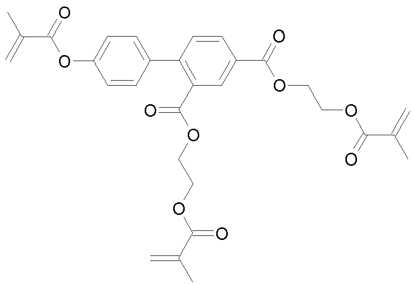 | RM-115 |
| 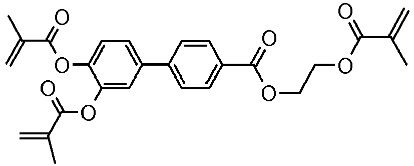 | RM-116 |
| 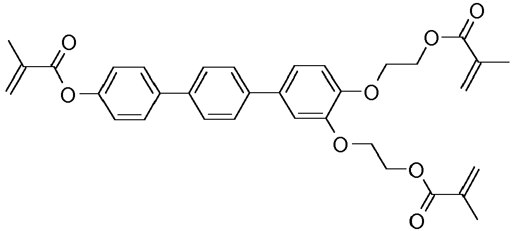 | RM-117 |
| 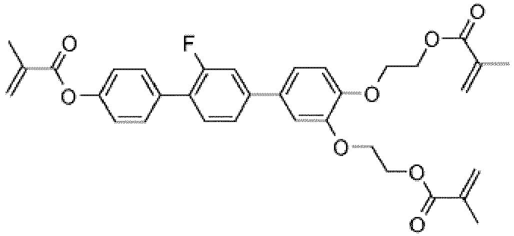 | RM-118 |
| 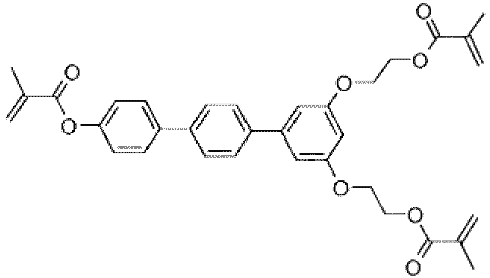 | RM-119 |
| 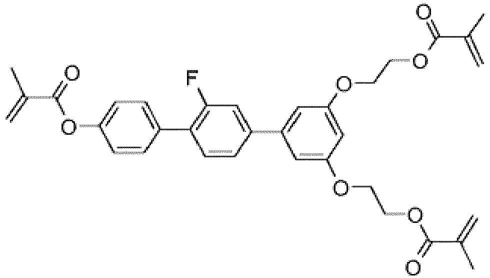 | RM-1 20 |
| 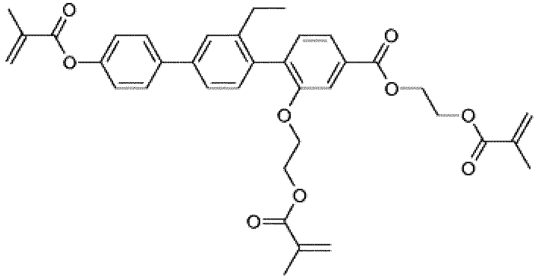 | RM-121 |

The mesogenic media of the present invention comprise one or more compounds selected from the group of the compounds from Table D. In a preferred embodiment of the present invention, the LC medium comprises a compound selected from formulae RM-1, RM-2, RM-3, RM-4, RM-5, RM-9, RM-17, RM-42, RM-48, RM-68, RM-87, RM-91, RM-98, RM-99 and RM-101.

In addition, the following abbreviations and symbols are used:
- V₀: threshold voltage, capacitive [V] at 20°C,
- nₑ: extraordinary refractive index at 20°C and 589 nm,
- nₒ: ordinary refractive index at 20°C and 589 nm,
- Δn: optical anisotropy at 20°C and 589 nm,
- ε_{⊥}: dielectric permittivity perpendicular to the director at 20°C and 1 kHz,
- ε∥: dielectric permittivity parallel to the director at 20°C and 1 kHz,
- Δε: dielectric anisotropy at 20°C and 1 kHz,
- cl.p., T(N,I): clearing point [°C],
- γ₁: rotational viscosity at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN].

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

The display used for measurement of the capacitive threshold voltage consists of two plane-parallel glass outer plates at a separation of 25 µm, each of which has on the inside an electrode layer and an unrubbed polyimide alignment layer on top, which effect a homeotropic edge alignment of the liquid-crystal molecules.

The VHR value is measured as follows: The LC mixture is introduced into VA-VHR test cells which comprise an unrubbed VA-polyimide alignment layer. The LC-layer thickness d is approx. 3 µm, unless stated othewise. The VHR value is determined before and after light exposure at 1 V, 60 Hz, 64 µs pulse (measuring instrument: Autronic-Melchers VHRM-105).

### Examples

### Comparison Example 1

The nematic LC mixture N1 is formulated as follows.

| | | | |
|---|---|---|---|
| PY-3-O2 | 16.50% | cl.p. | 75.2 °C |
| CY-3-O2 | 5.00% | Δn | 0.1079 |
| CCY-3-O1 | 5.00% | Δε | -3.2 |
| CCY-3-O2 | 2.50% | ε_{∥} | 3.6 |
| CCY-4-O2 | 8.00% | K₃/K₁ | 1.10 |
| CPY-2-O2 | 10.00% | V₀ | 2.25 V |
| CPY-3-O2 | 10.00% | γ₁ | 93 mPa s |
| CC-3-V | 37.50% | | |
| BCH-32 | 5.50% | | |

The mixture does not contain a quaterphenyl compound of formula Q.

### Comparison Example 2

The nematic LC mixture N2 is formulated as follows.

| | | | |
|---|---|---|---|
| PY-3-O2 | 13.50% | cl.p. | 74.6 °C |
| CY-3-O2 | 9.00% | Δn | 0.1082 |
| CCY-3-O1 | 8.00% | Δε | -3.2 |
| CCY-3-O2 | 3.00% | ε_{∥} | 3.7 |
| CCY-4-O2 | 3.00% | K₃/K₁ | 1.12 |
| CPY-2-O2 | 10.00% | V₀ | 2.29 V |
| CPY-3-O2 | 10.00% | γ₁ | 94 mPa s |
| CC-3-V | 36.50% | | |
| BCH-32 | 6.50% | | |
| PPGU-3-F | 0.50% | | |

### Example 1 (not according to the invention)

To 100% of the LC mixture N2 are added 0.005% (50ppm) of a stabiliser of formula S2a to form mixture M1.

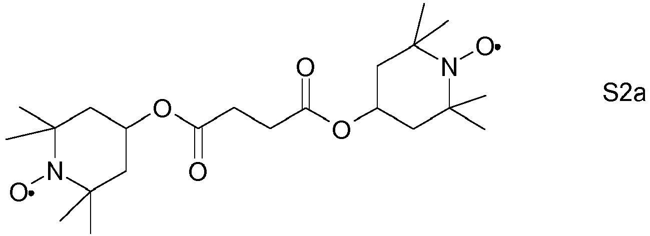

### Example 2 (not according to the invention)

To 99.99% of the LC mixture N2 are added 0.01% (100ppm) of a stabiliser of formula S2a to form mixture M2.

### Example 3 (not according to the invention)

To 99.975% of the LC mixture N2 are added 0.025% (250ppm) of a stabiliser of formula S1a to form mixture M3.

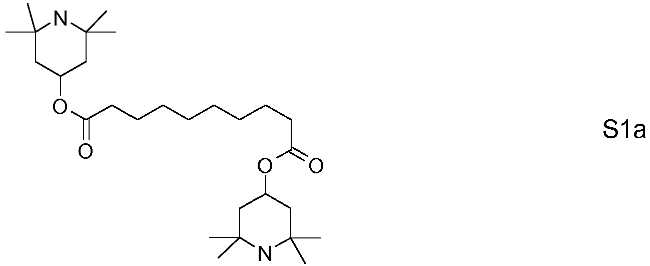

The LC mixture compositions are shown in Table 1.

**Table 1 - LC Mixture Composition**

| Example | LC Host | PPGU-3-F (%) | Stabiliser S2a (ppm) | Stabiliser S1a (ppm) |
|---|---|---|---|---|
| C1 | N1 | 0 | 0 | 0 |
| C2 | N2 | 0.5 | 0 | 0 |
| M1 | N2 | 0.5 | 50 | 0 |
| M2 | N2 | 0.5 | 100 | 0 |
| M3 | N2 | 0.5 | 0 | 250 |

The mixture of example C1 is a comparison mixture which does not contain a quaterphenyl compound of formula Q1, and does not contain a stabiliser.

The mixture of example C2 is a comparison mixture which contains a quaterphenyl compound PPGU-3-F of formula Q1, but does not contain a stabiliser.

The mixtures of examples M1, M2 and M3 according to the invention contain both a quaterphenyl compound PPGU-3-F of formula Q1, and a stabiliser of formula S2a or S1a, respectively.

The mixtures were filled into test VA-VHR cells as described above, and the VHR values were measured before and after UV load, suntest and backlight load test, respectively, as follows:
For the UV load the test cells were exposed to a high pressure Hg lamp (300nm ∼ 400nm) with 50mW/cm² for 120s (6J) and 600s (30J).
For the suntest the test cells were exposed to a Xenon lamp (300nm ∼ 800nm) with 765W/m² for 1hr.
For the backlight load test the test cells were exposed to an LED backlight unit as used in an LCD TV panel for 24hrs, 168hrs, 336hrs, 500hrs and 1000hrs.

Table 2 shows the results of the UV load test for the mixtures of examples C1 and C2.

**Table 2 - VHR values after UV load**

| | C1 | C2 |
|---|---|---|
| VHR at 60°C (%) | VHR (%) | |
| Initial | 99.3 | 99.3 |
| After UV load (6J) | 98.7 | 98.8 |
| Atfer UV load (30J) | 96.7 | 97.1 |

From Table 2 it can be seen that mixture of example C2 with a quaterphenyl compound shows a slightly higher VHR value after UV load than the mixture of example C1 without a quaterphenyl compound.

This shows that the addition of the quaterphenyl to the mixture leads to an improved VHR.

Table 3 shows the results of the UV load test for the mixtures of examples C2, M1 and M2.

**Table 3 - VHR values after UV load**

| | C2 | M1 | M2 |
|---|---|---|---|
| VHR at 60°C (%) | VHR (%) | | |
| Initial | 98.8 | 98.8 | 98.8 |
| After UV load (6J) | 97.6 | 98.5 | 98.3 |
| Atfer UV load (30J) | 94.0 | 97.2 | 97.5 |

Table 4 shows the results of the suntest for the mixtures of examples C2, M1 and M2.

**Table 4 - VHR values after suntest**

| | C2 | M1 | M2 |
|---|---|---|---|
| VHR at 60°C (%) | VHR (%) | | |
| After suntest | 91.8 | 96.2 | 96.8 |

Table 5 shows the results of the backlight load test for the mixtures of examples C2, M1 and M2.

**Table 5 - VHR values after backlight load**

| | C2 | M1 | M2 |
|---|---|---|---|
| VHR at 60°C (%) | VHR (%) | | |
| Initial | 99.3 | 99.3 | 99.2 |
| After 24h backlight load | 98.4 | 99.2 | 99.1 |
| After 168h backlight load | 94.5 | 97.6 | 97.8 |
| After 336h backlight load | 85.2 | 94.5 | 95.7 |
| After 500h backlight load | 77.7 | 91.5 | 93.5 |
| After 1000h backlight load | 64.1 | 81.7 | 87.7 |

From Tables 3-5 it can be seen that the mixtures of examples M1 and M2 with a quaterphenyl compound of formula Q1 and a stabiliser of formula S2a show a significantly higher VHR value after UV load, suntest and backlight load, compared to the mixture of example C2 with a quaterphenyl compound of formula Q1, but without a stabiliser.

This shows that the addition of both a quaterphenyl of formula Q and a stabiliser of formula S to the mixture lead to an significantly improved VHR after UV load, suntest and backlight load.

Table 6 shows the results of the UV load test for the mixtures of examples C2 and M3.

**Table 6 - VHR values after UV load**

| | C2 | M3 |
|---|---|---|
| VHR at 60°C (%) | VHR (%) | |
| Initial | 98.8 | 98.8 |
| After UV load (6J) | 97.3 | 98.4 |
| Atfer UV load (30J) | 93.6 | 97.5 |

Table 7 shows the results of the suntest for the mixtures of examples C2 and M3.

**Table 7 - VHR values after suntest**

| | C2 | M3 |
|---|---|---|
| VHR at 60°C (%) | VHR (%) | |
| After suntest | 92.6 | 97.2 |

From Tables 6 and 7 it can be seen that the mixture of example M3 with a quaterphenyl compound of formula Q1 and a stabiliser of formula S1 shows a significantly higher VHR value after UV load and suntest than the mixture of example C2 with a quaterphenyl compound of formula Q1, but without a stabiliser.

This shows that the addition of both a quaterphenyl of formula Q and a stabiliser of formula S to the mixture lead to an significantly improved VHR after UV load and suntest.

## Claims

1. A liquid crystal (LC) medium with negative dieletric anisotropy comprising one or more compounds of formula Q, one or more compounds of formula AN and one or more compounds of formula S 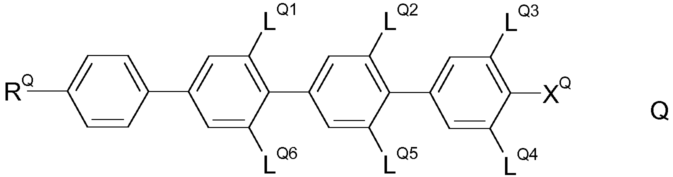 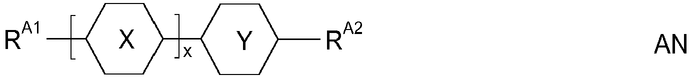 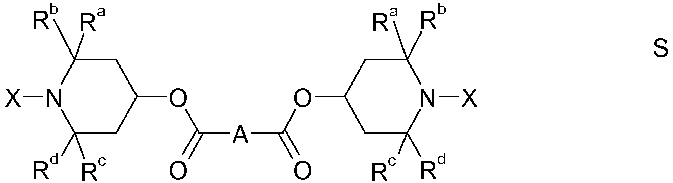 in which the individual radicals, on each occurrence identically or differently, and each, independently of one another, have the following meaning: 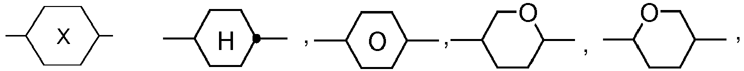 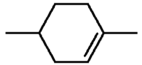 or 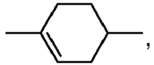 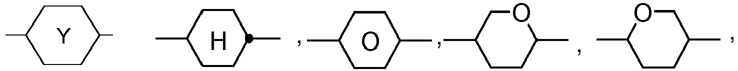 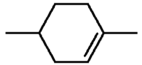 or 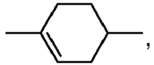
R^{Q} alkyl, alkoxy, oxaalkyl or alkoxyalkyl having 1 to 9 C atoms or alkenyl or alkenyloxy having 2 to 9 C atoms, all of which are optionally fluorinated,
X^{Q} F, Cl, halogenated alkyl or alkoxy having 1 to 6 C atoms or halogenated alkenyl or alkenyloxy having 2 to 6 C atoms,
L^{Q1} to L^{Q6} H or F, with at least one of L^{Q1} to L^{Q6} being F,
R^{A1} alkenyl having 2 to 9 C atoms or, if at least one of the rings X and Y denotes cyclohexenyl, also one of the meanings of R^{A2},
R^{A2} alkyl having 1 to 12 C atoms, in which, in addition, one or two non-adjacent CH₂ groups may be replaced by -O-,-CH=CH-, -CO-, -OCO- or -COO- in such a way that O atoms are not linked directly to one another,
x 1 or 2,
R^{a-d} are independently of each other straight chain or branched alkyl with 1 to 10 C atoms, preferably with 1 to 6 C atoms, very preferably with 1 to 4 C atoms, most preferably methyl,
X is H, CH₃, OH or O•,
A is straight-chain, branched or cyclic alkylene with 1 to 20 C-atoms which is optionally substituted,
and
one or more compounds selected from the group of compounds of the formulae RM-1 to RM-121:

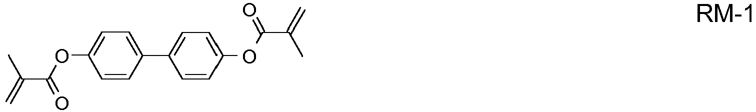

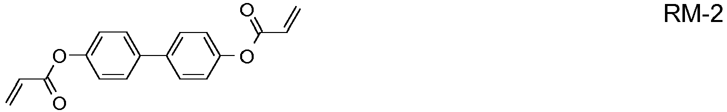

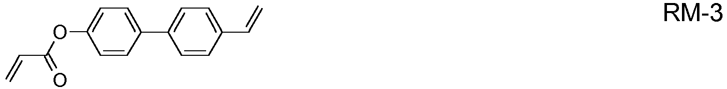

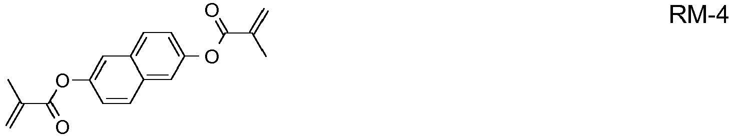

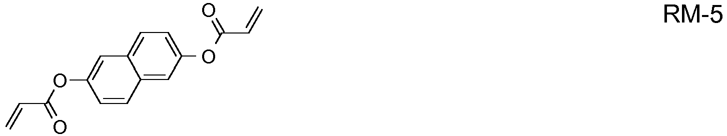

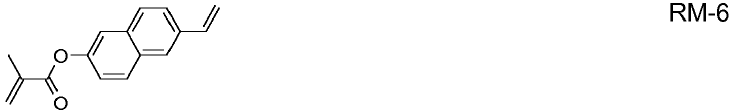

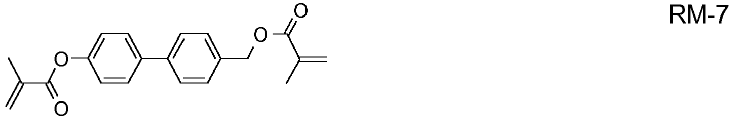

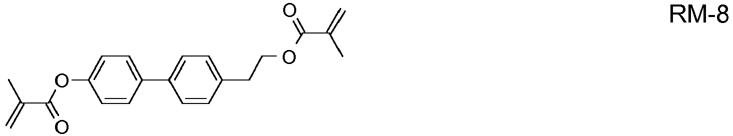

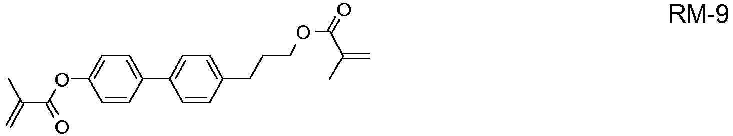

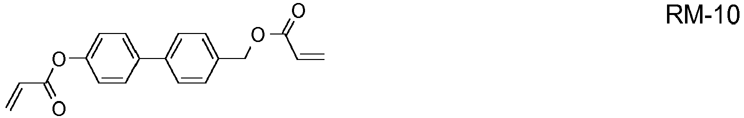

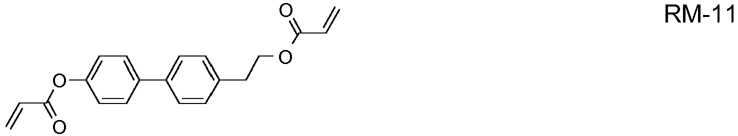

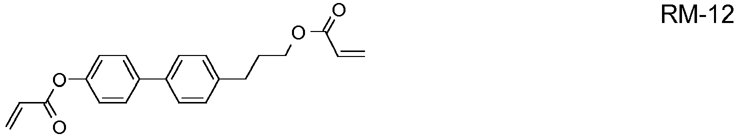

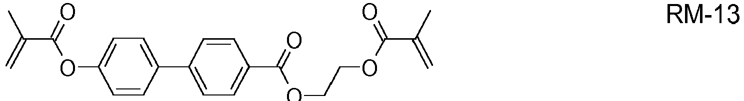

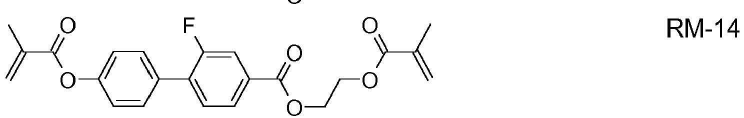

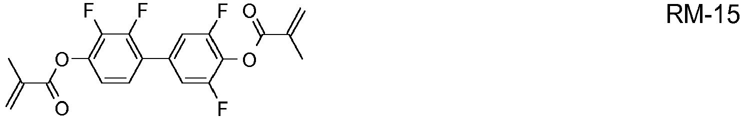

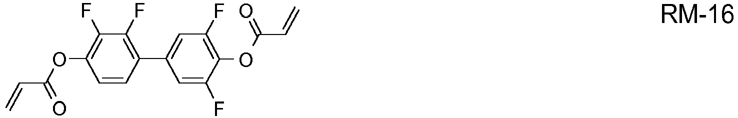

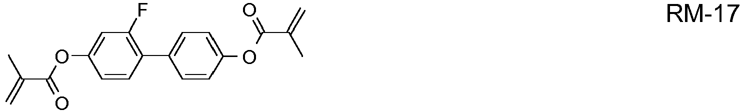

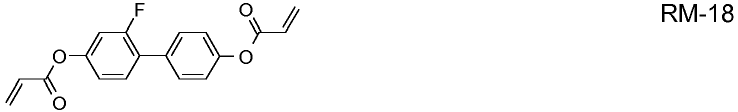

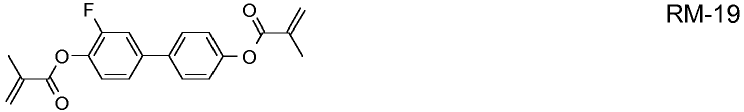

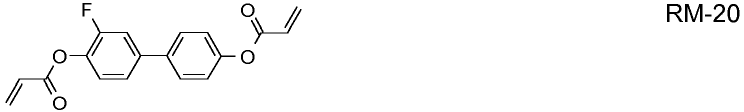

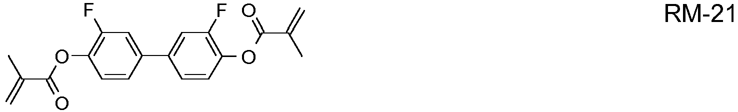

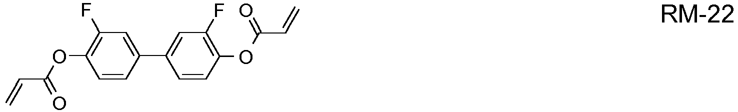

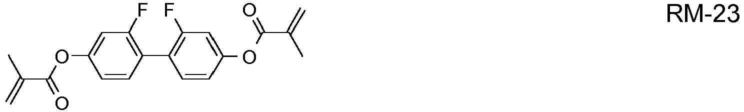

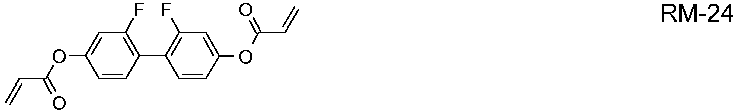

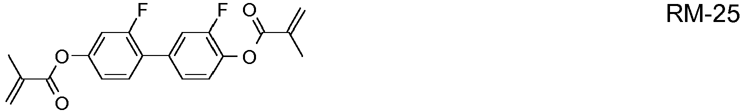

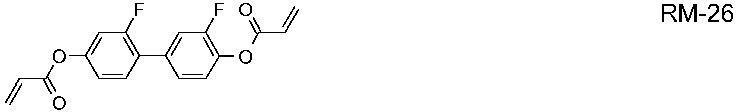

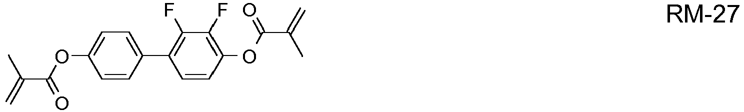

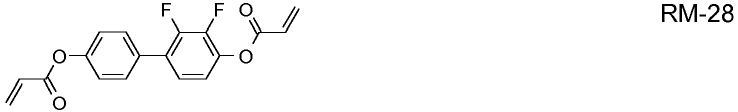

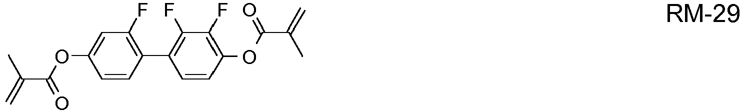

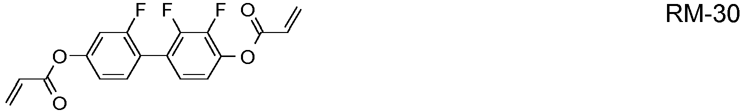

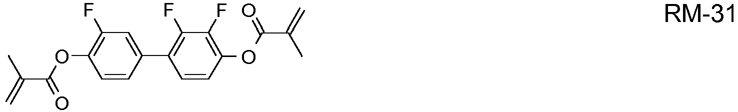

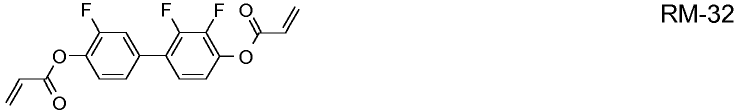

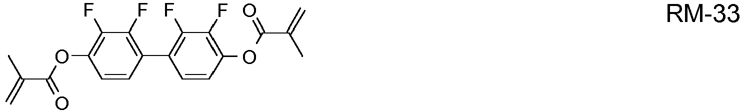

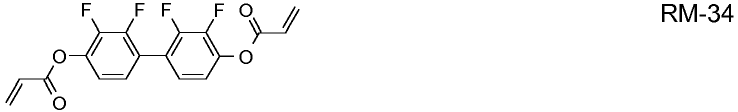

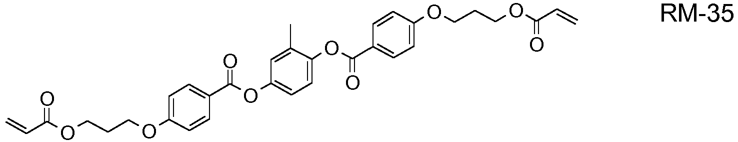

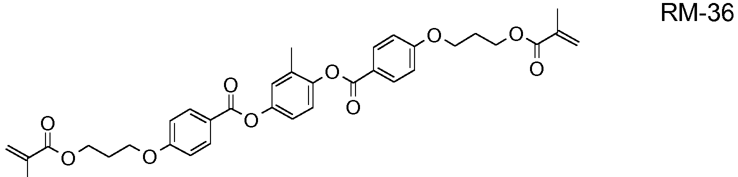

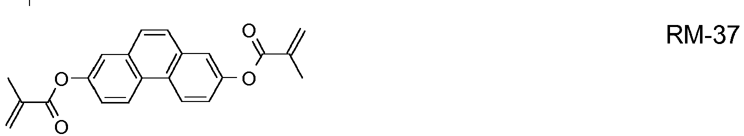

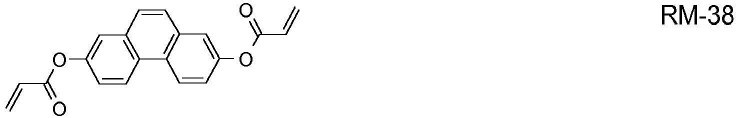

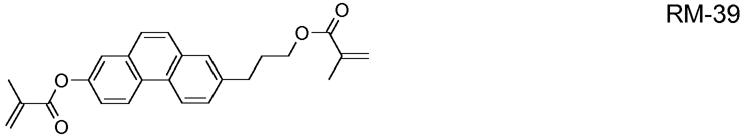

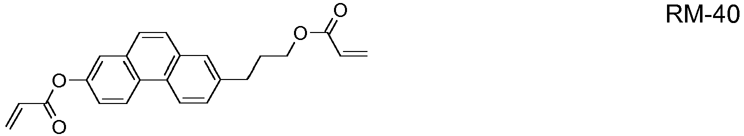

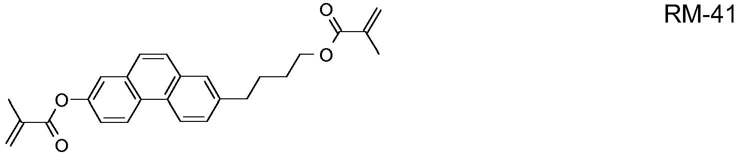

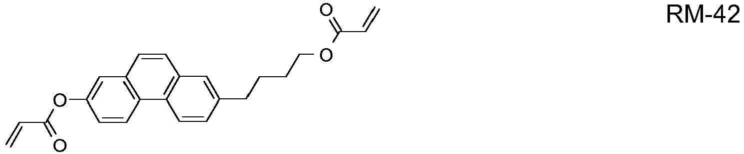

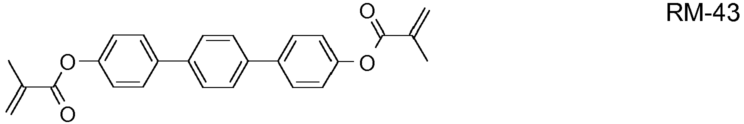

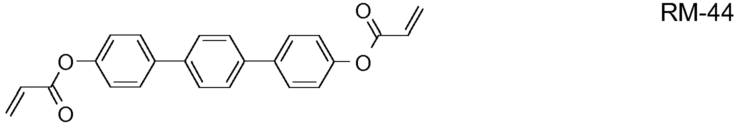

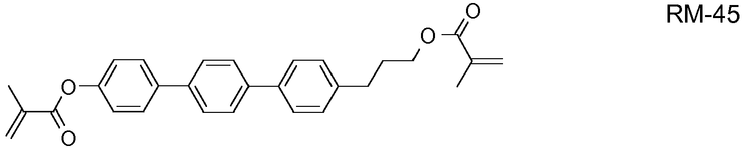

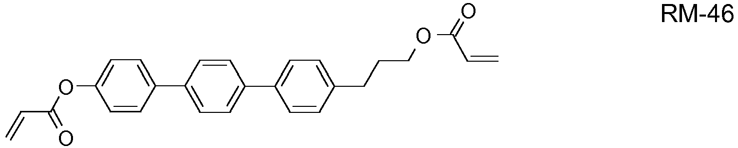

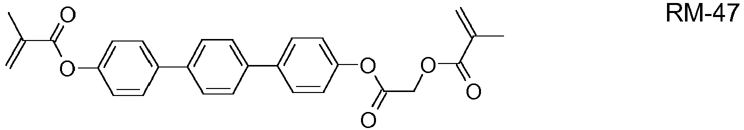

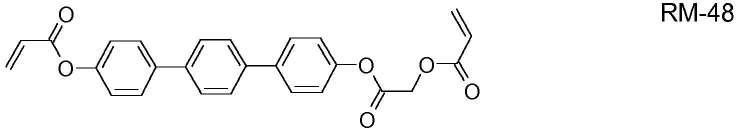

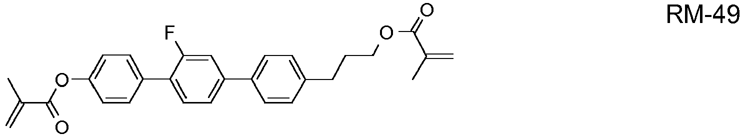

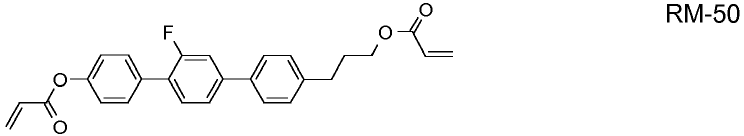

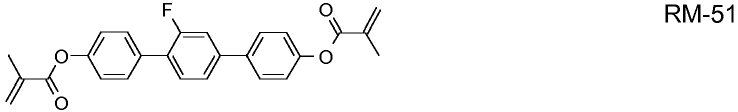

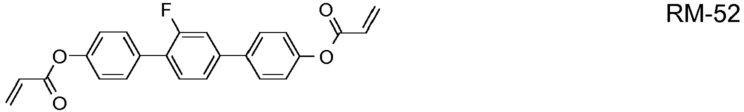

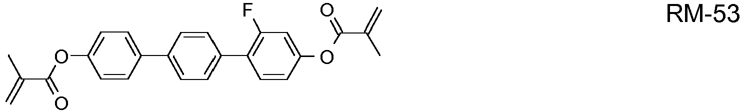

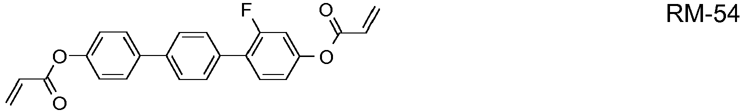

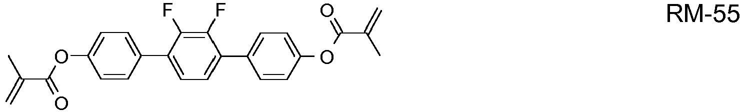

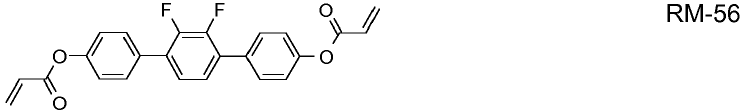

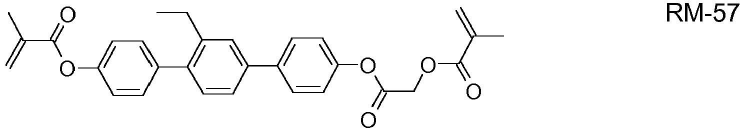

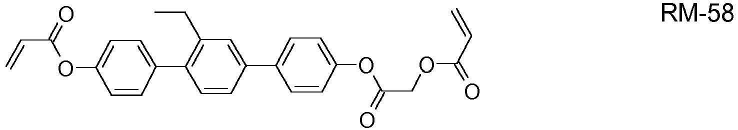

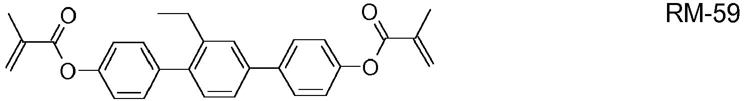

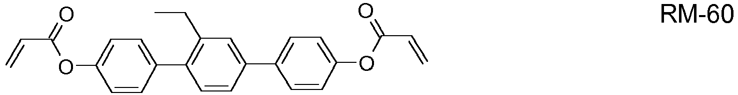

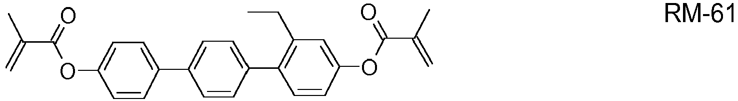

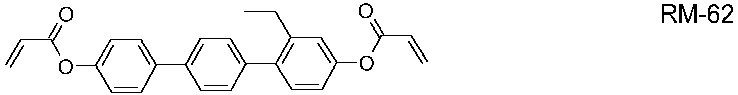

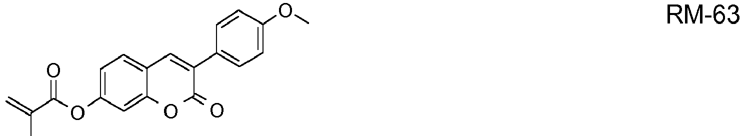

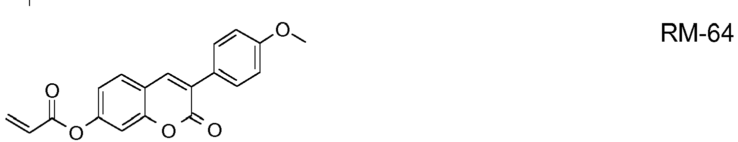

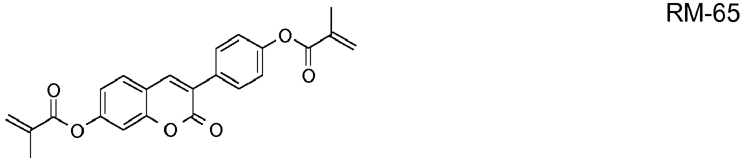

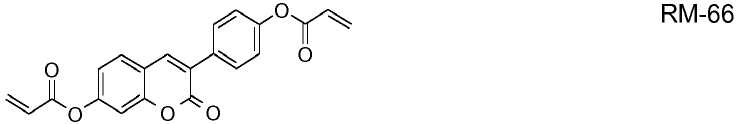

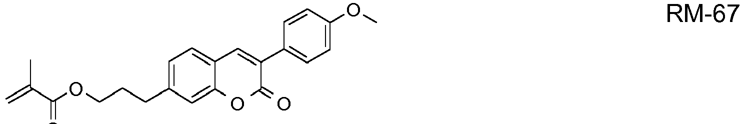

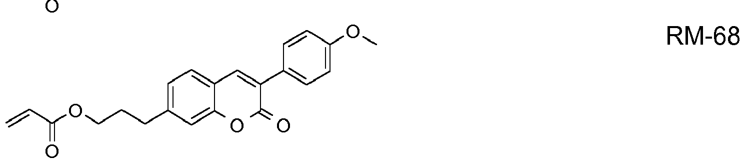

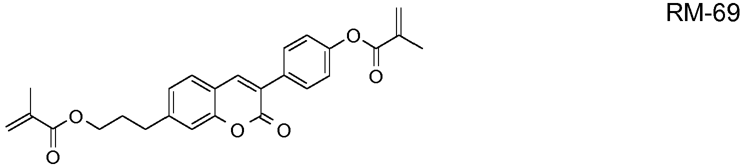

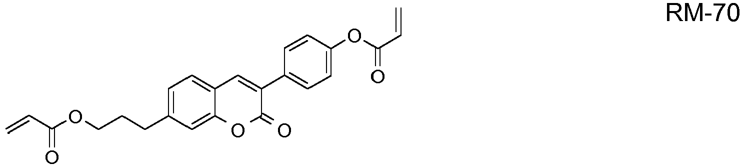

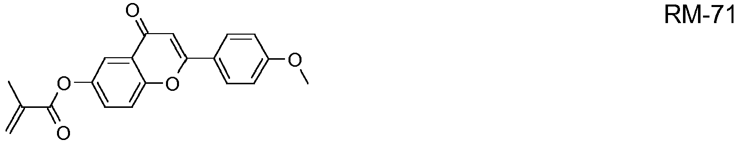

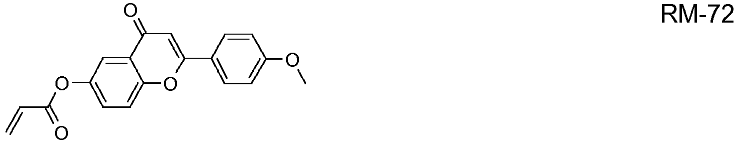

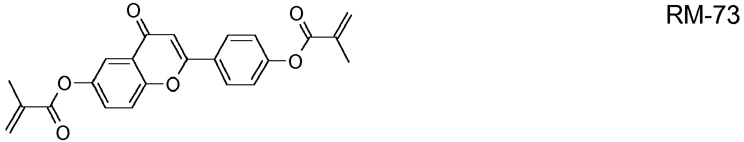

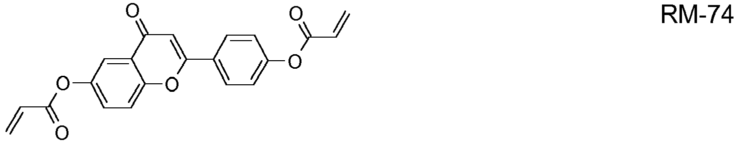

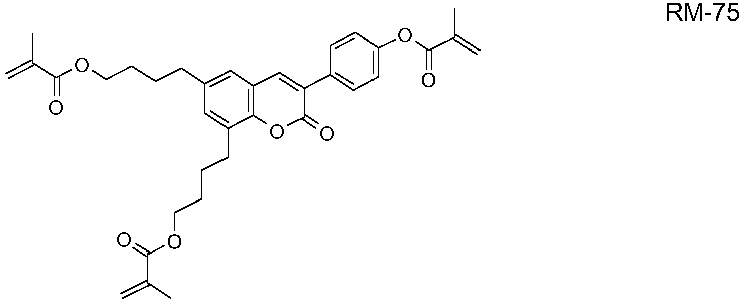

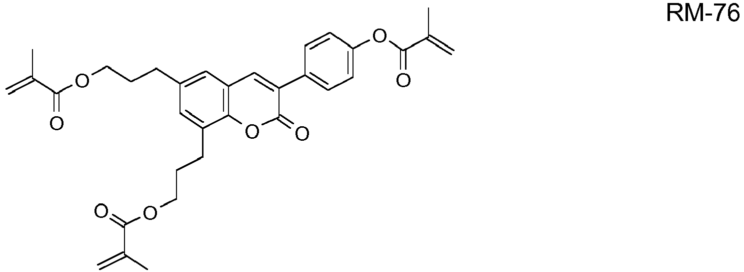

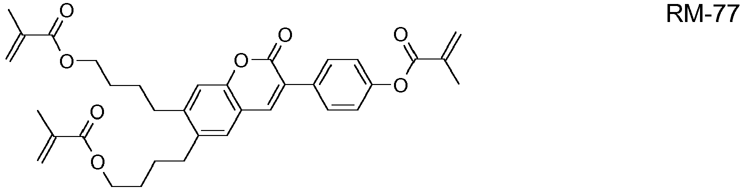

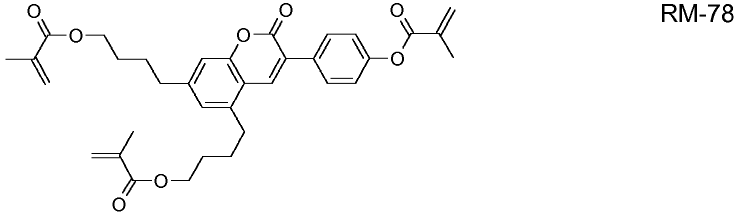

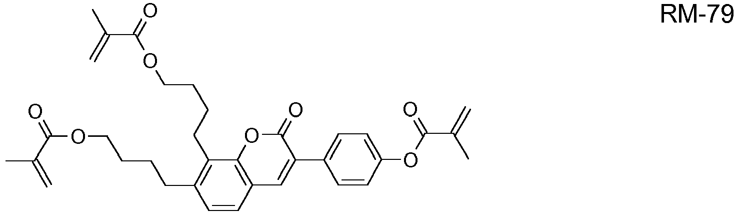

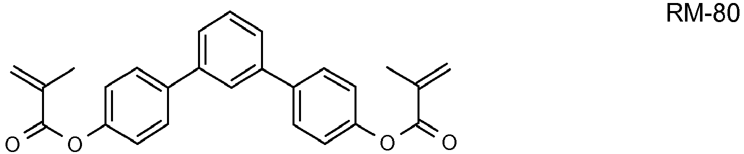

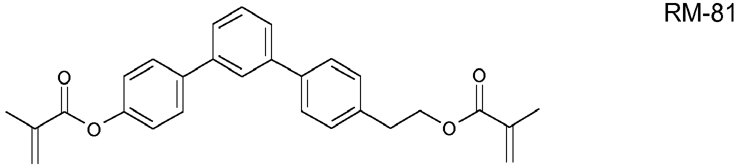

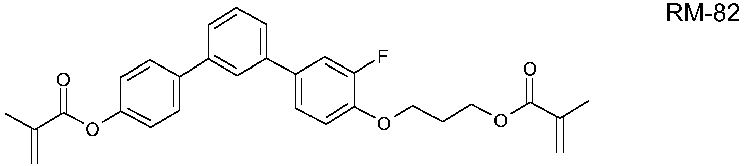

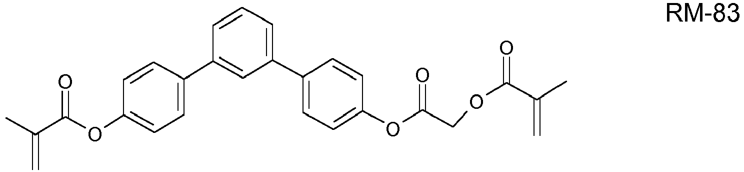

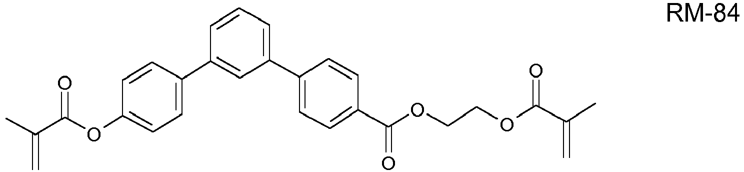

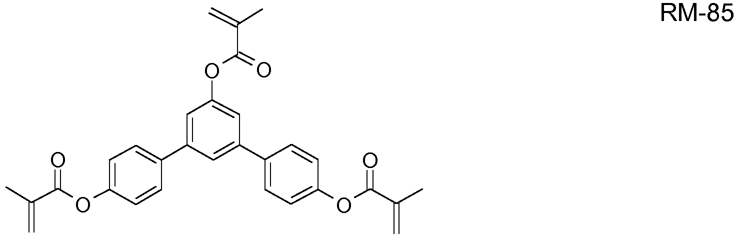

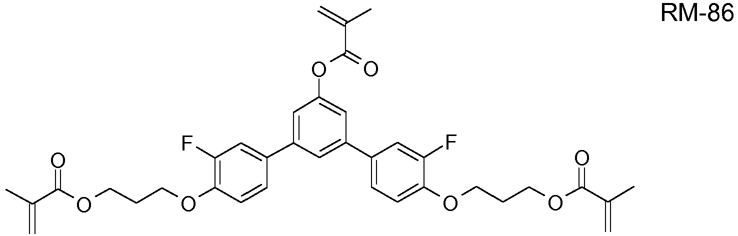

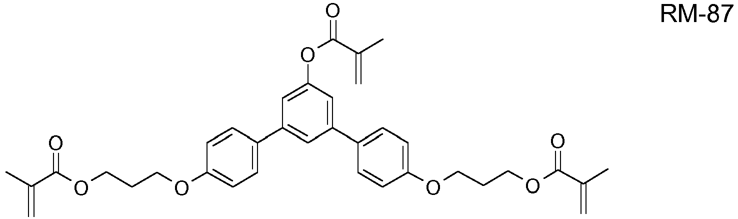

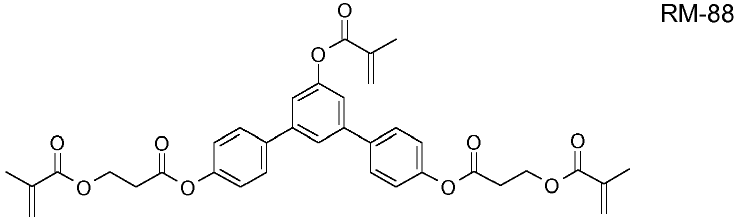

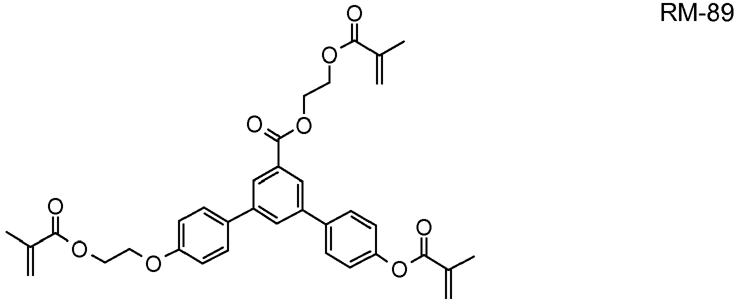

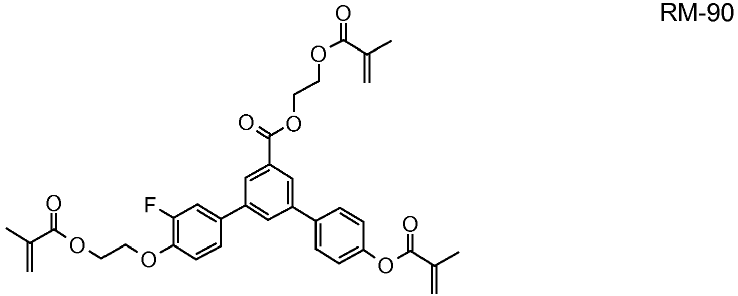

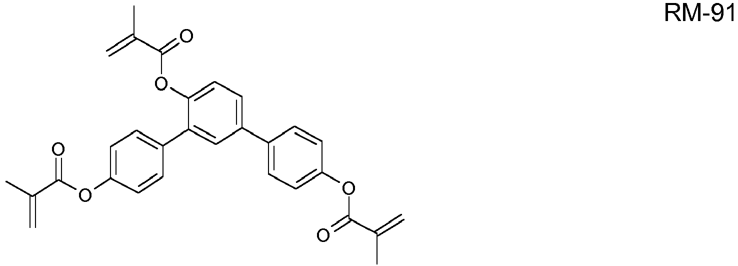

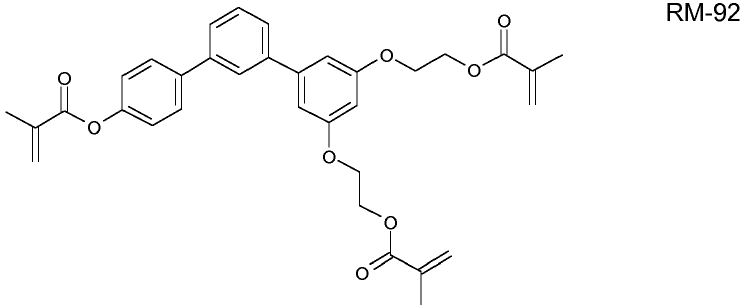

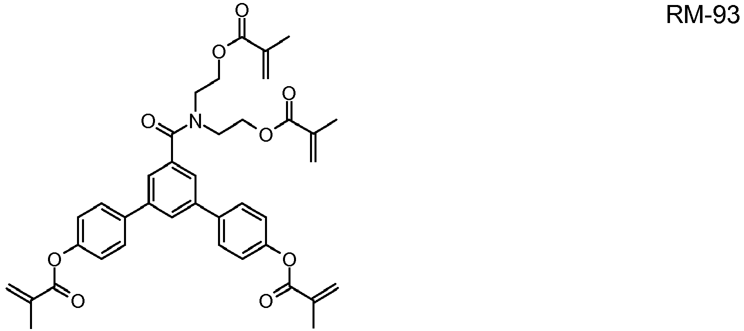

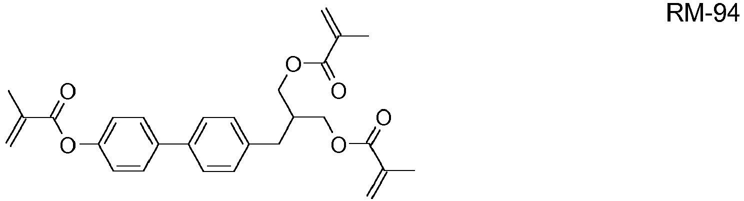

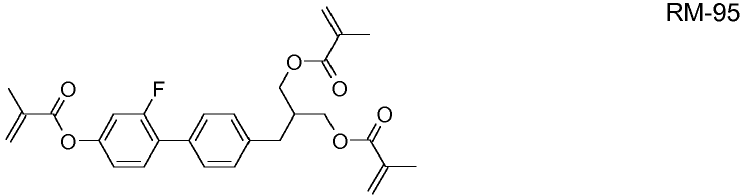

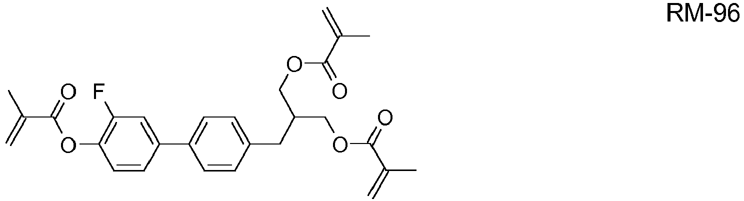

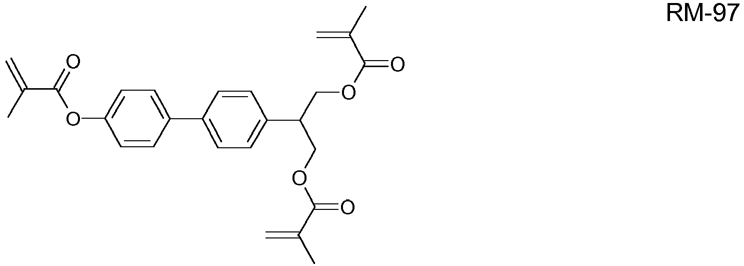

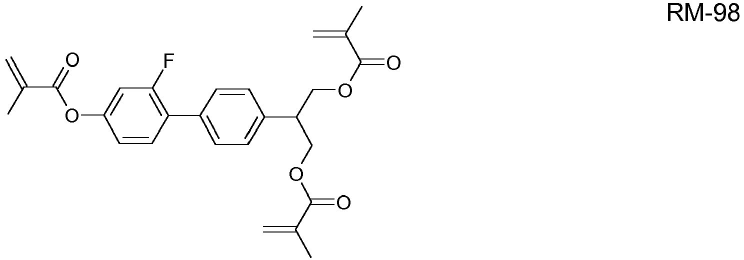

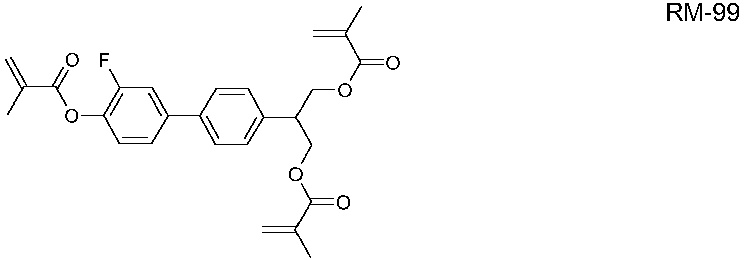

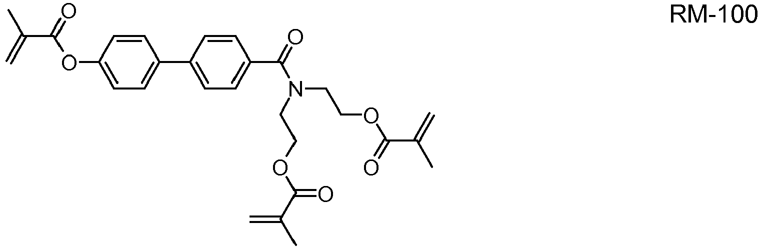

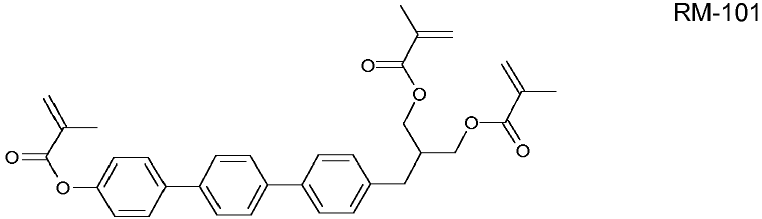

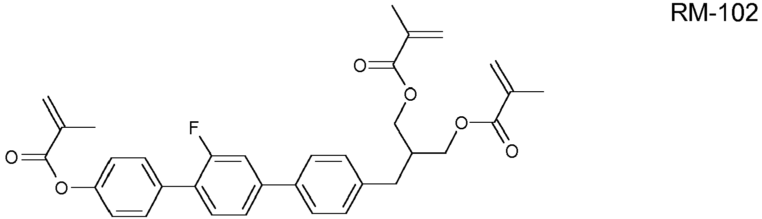

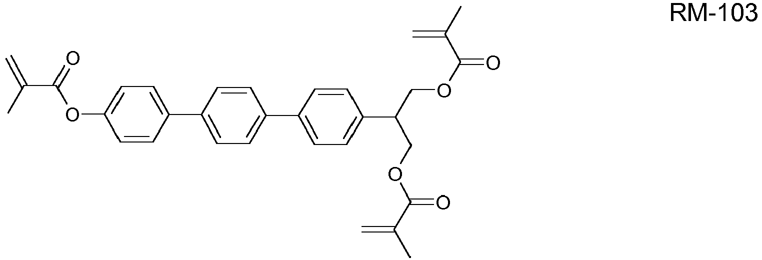

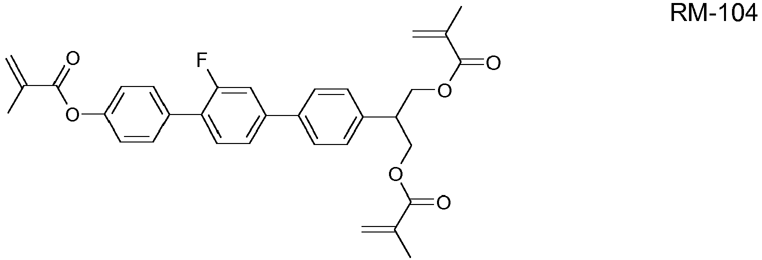

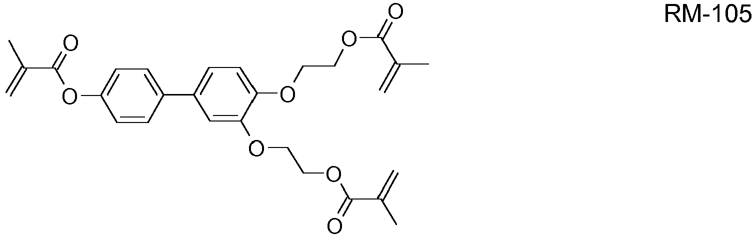

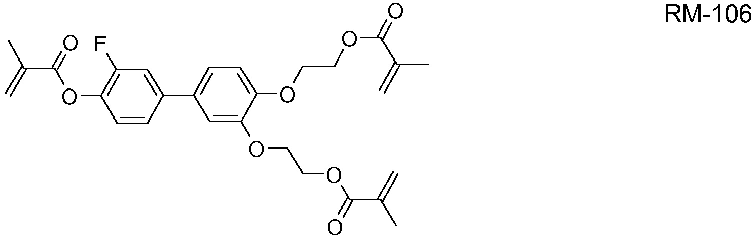

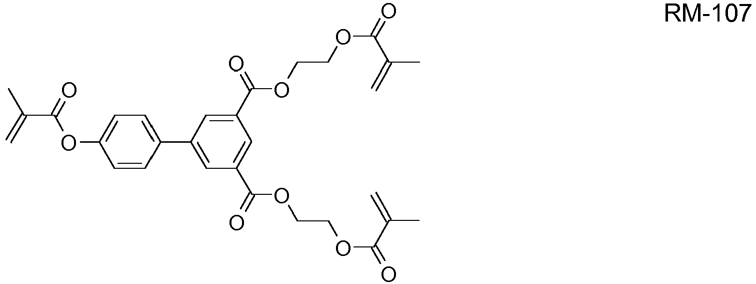

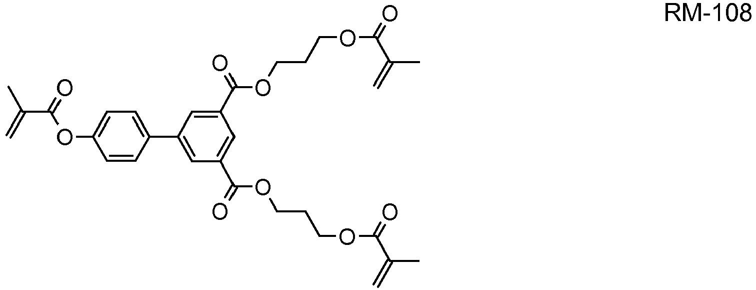

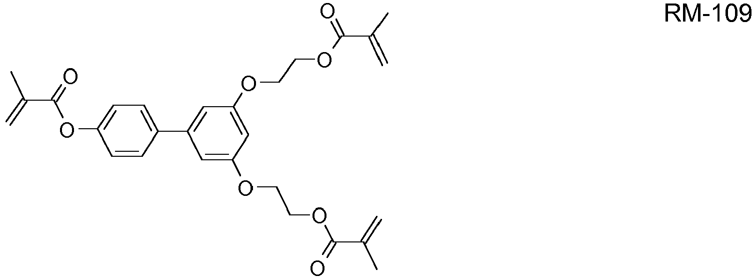

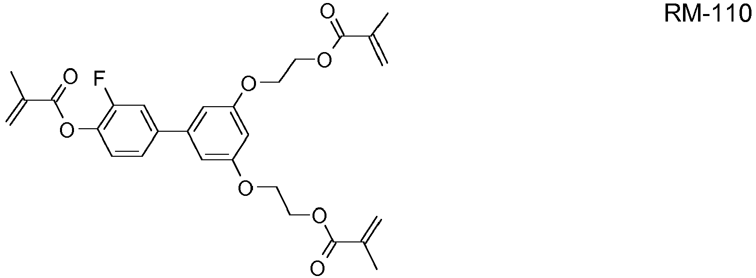

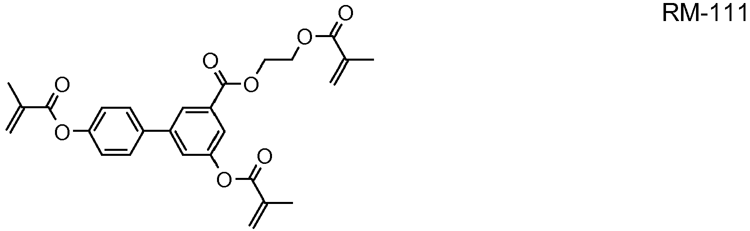

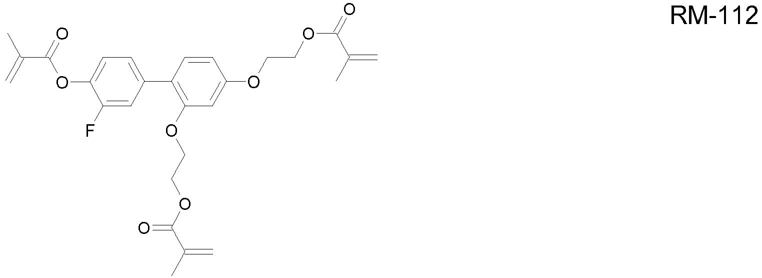

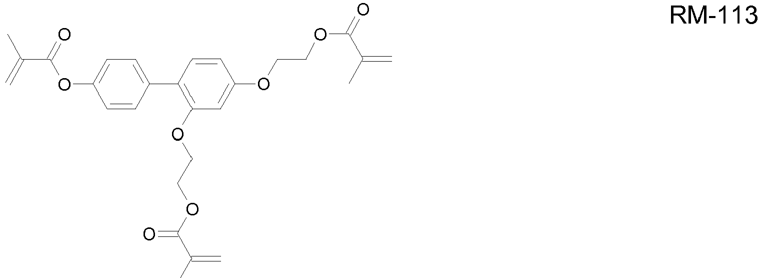

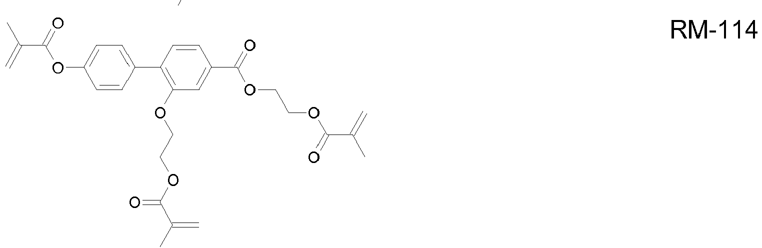

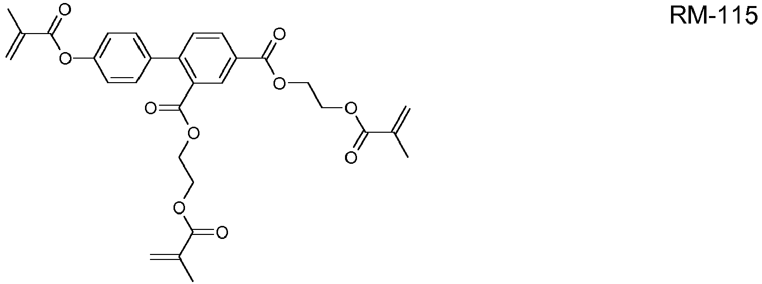

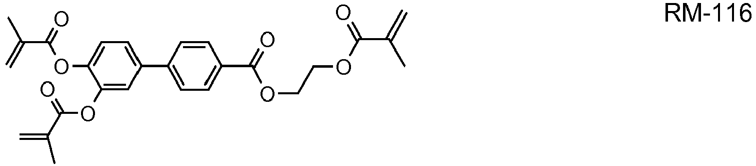

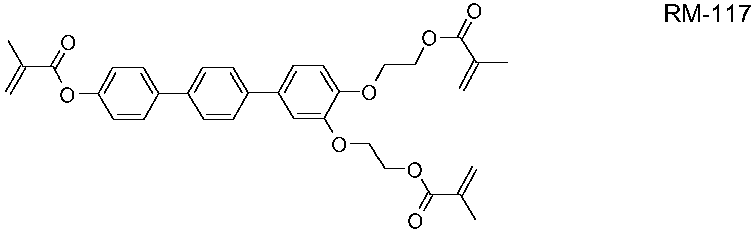

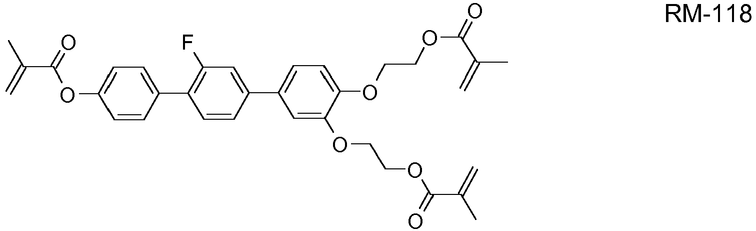

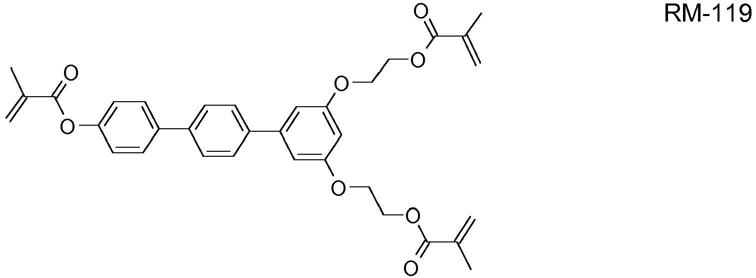

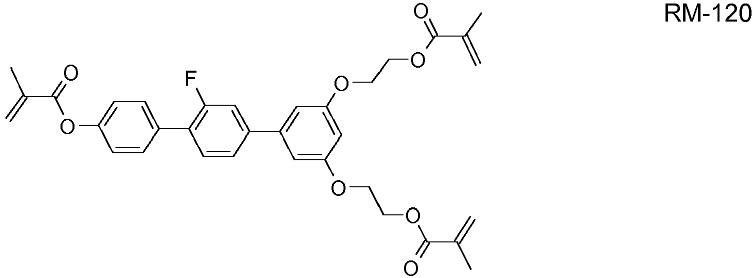

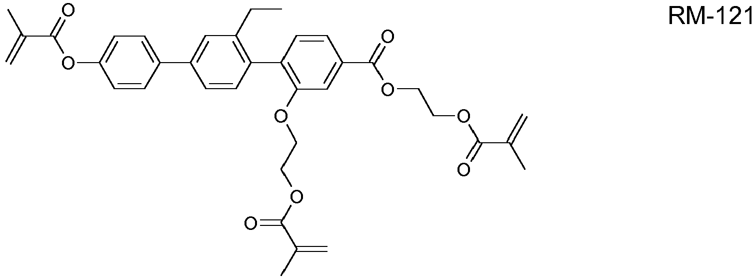

2. The LC medium of Claim 1, **characterized in that** in the compounds of formula AN are selected from the following formulae: 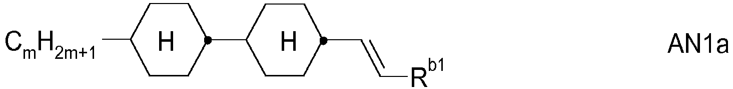 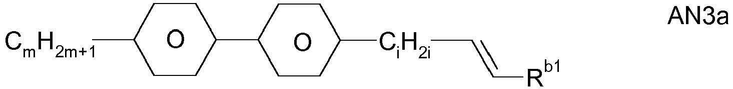 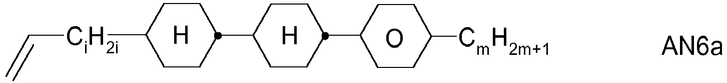 in which m denotes 1, 2, 3, 4, 5 or 6, i denotes 0, 1, 2 or 3, and R^{b1} denotes H, CH₃ or C₂H₅.

3. The LC medium of Claim 1 or 2, **characterized in that** the compounds of formula AN are selected from the following formulae:

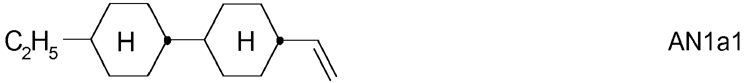

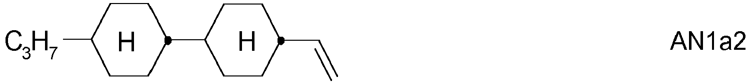

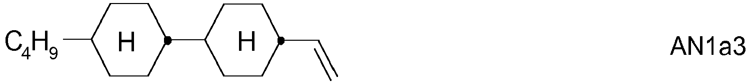

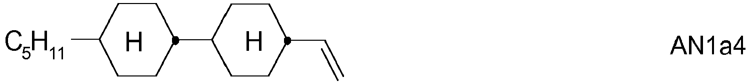

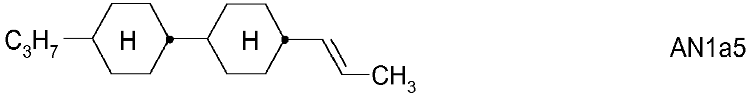

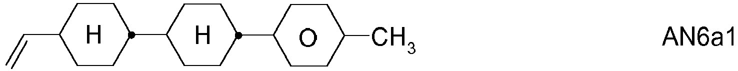

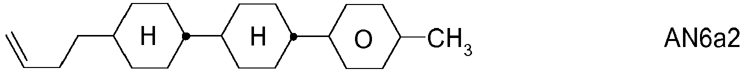

4. The LC medium according to any one of Claims 1 to 3, **characterized in that** the compounds of formula Q are selected from the following subformulae 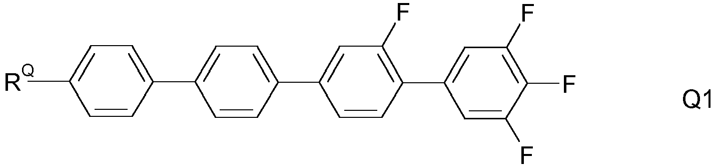 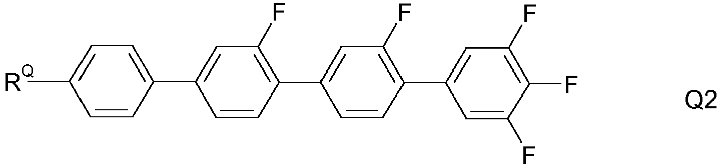 wherein R^{Q} has one of the meanings of Claim 1.

5. The LC medium according to any one of Claims 1 to 4, **characterized in that** the compounds of formula Q are selected from formula Q1 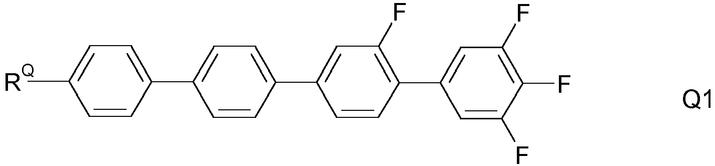 wherein R^{Q} is n-propyl.

6. The LC medium according to any one of claims 1 to 5, **characterized in that** the compounds of formula S are selected from the following subformulae 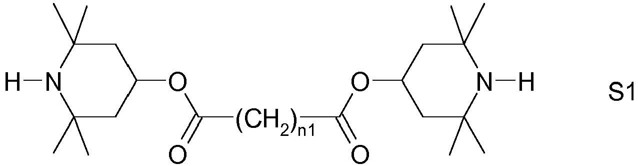 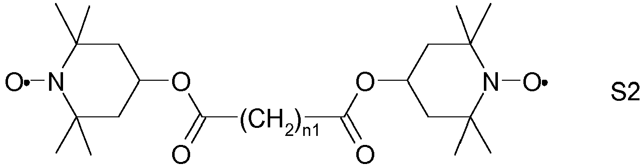 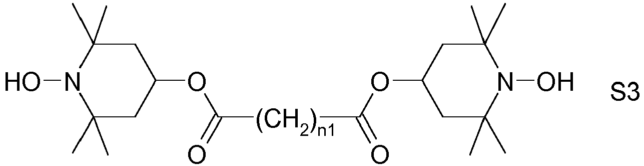 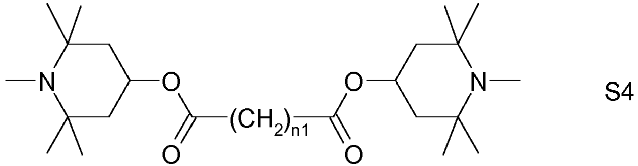 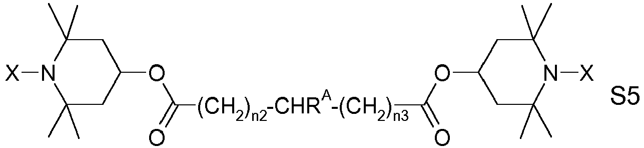 wherein
X is H, CH₃, OH or O•,
R^{A} is methyl, ethyl, propyl, butyl, pently or hexyl,
n1 is an integer from 2 to 12,
n2 is 0 or an integer from 1 to 12, preferably 0,
n3 is or an integer from 1 to 12, and
in formulae S1-S4 one or more H-atoms in the radical (CH₂)ₙ₁ are optionally replaced by a methyl, ethyl, propyl, butyl, pentyl or hexyl group.

7. The LC medium according to any one of claims 1 to 6, **characterized in that** the compounds of formula S are selected from the following subformulae

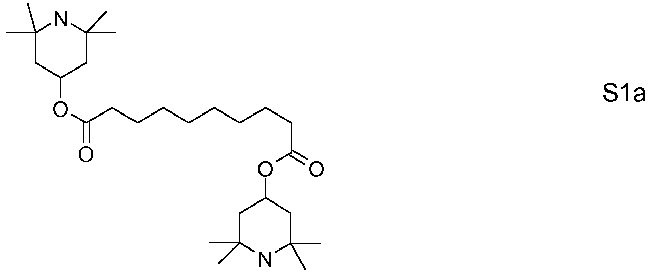

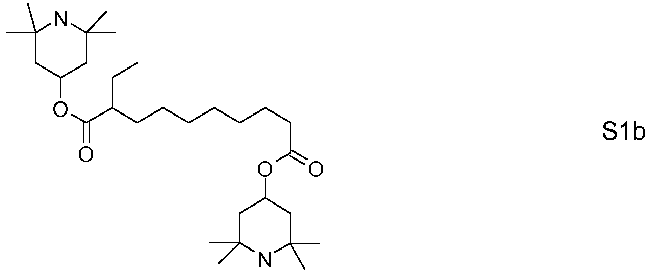

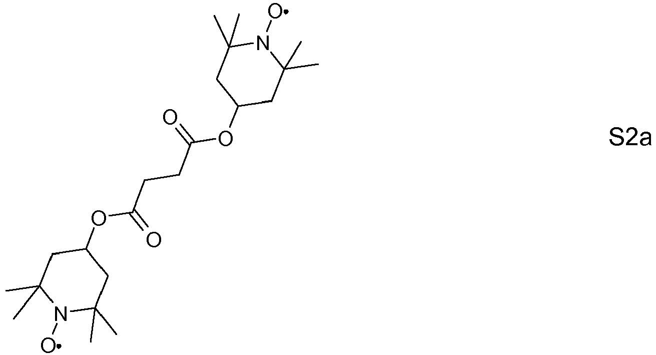

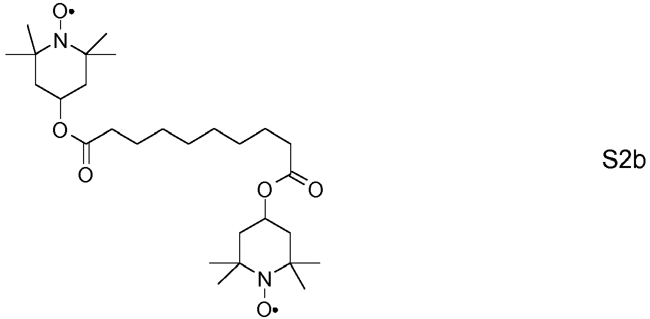

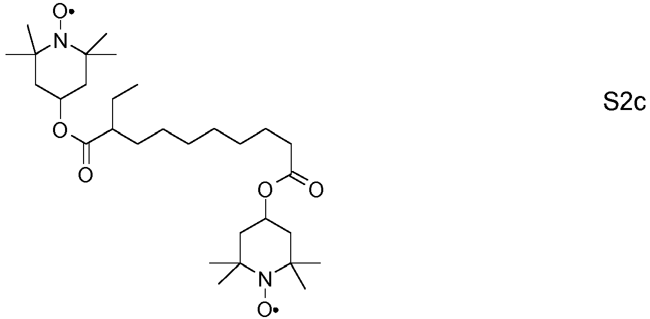

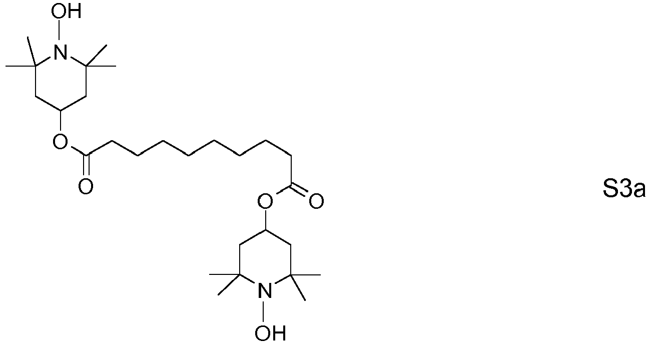

8. The LC medium according to any one of Claims 1 to 7, **characterized in that** it comprises one or more compounds selected from the formulae CY and PY: 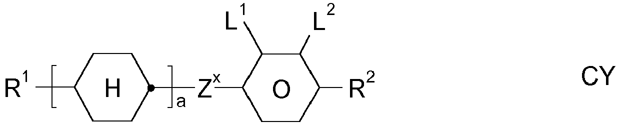 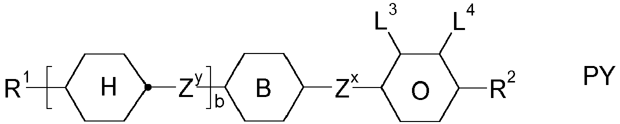 wherein
a denotes 1 or 2,
b denotes 0 or 1, 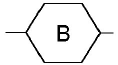
denotes 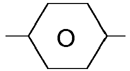 or 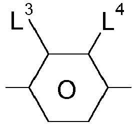
R¹ and R² each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
Z^{x} and Z^{y} each, independently of one another, denote -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond,
L¹⁻⁴ each, independently of one another, denote F, Cl, OCF₃, CF₃, CH₃, CH₂F, CHF₂.

9. The LC medium according to any one of Claims 1 to 8, **characterized in that** it comprises one or more compounds of the following formula: 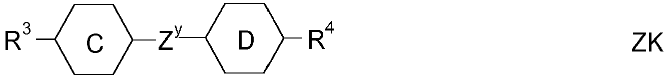 in which the individual radicals have the following meanings: 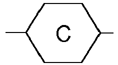 denotes 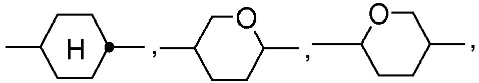 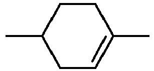 or 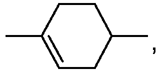 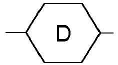 denotes 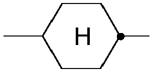 or 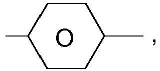
R³ and R⁴ each, independently of one another, denote alkyl having 1 to 12 C atoms, in which, in addition, one or two non-adjacent CH₂ groups may be replaced by -O-, -CH=CH-, -CO-, -O-CO- or -CO-O- in such a way that O atoms are not linked directly to one another,
Z^{y} denotes -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond.

10. An LC display comprising an LC medium as defined in any one of Claims 1 to 9.

11. The LC display of Claim 10, which is VA, PSA, PS-VA, PA-VA, PALC, FFS, PS-FFS, IPS or PS-IPS display.

## Patentansprüche

1. Flüssigkristall(FK)-Medium mit negativer dielektrischer Anisotropie enthaltend eine oder mehrere Verbindungen der Formel Q, eine oder mehrere Verbindungen der Formel AN und eine oder mehrere Verbindungen der Formel S 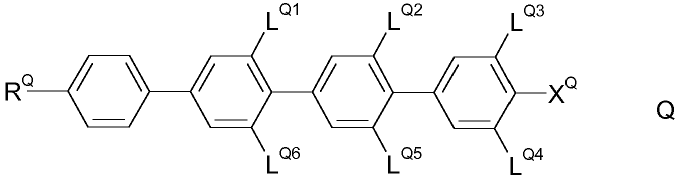 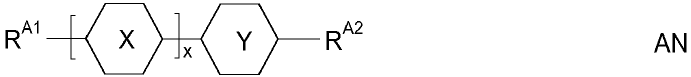 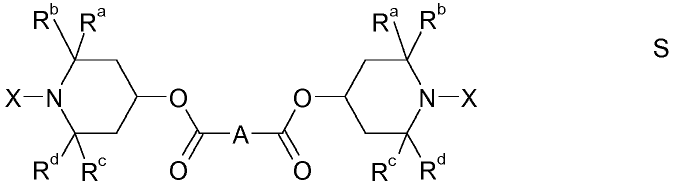 in denen die einzelnen Reste bei jedem Auftreten gleich oder verschieden und jeweils unabhängig voneinander die folgende Bedeutung besitzen: 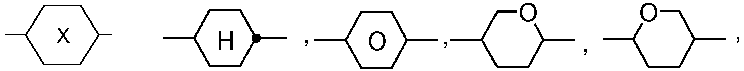 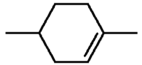 oder 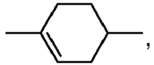 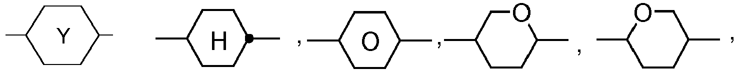 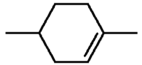 oder 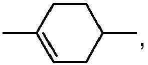
R^{Q} Alkyl, Alkoxy, Oxaalkyl oder Alkoxyalkyl mit 1 bis 9 C-Atomen oder Alkenyl oder Alkenyloxy mit 2 bis 9 C-Atomen, die alle gegebenenfalls fluoriert sind,
X^{Q} F, Cl, halogeniertes Alkyl oder Alkoxy mit 1 bis 6 C-Atomen oder halogeniertes Alkenyl oder Alkenyloxy mit 2 bis 6 C-Atomen,
L^{Q1} bis L^{Q6} H oder F, wobei mindestens einer von L^{Q1} bis L^{Q6} F ist,
R^{A1} Alkenyl mit 2 bis 9 C-Atomen oder, wenn mindestens einer der Ringe X und Y Cyclohexenyl bedeutet, auch eine der Bedeutungen von R^{A2},
R^{A2} Alkyl mit 1 bis 12 C-Atomen, in dem zusätzlich eine oder zwei nicht benachbarte CH₂-Gruppen so durch -O-, -CH=CH-, -CO-, -OCO- oder -COO- ersetzt sein können, dass O-Atome nicht direkt miteinander verknüpft sind,
x 1 oder 2,
R^{a-d} sind unabhängig voneinander geradkettiges oder verzweigtes Alkyl mit 1 bis 10 C-Atomen, vorzugsweise mit 1 bis 6 C-Atomen, sehr bevorzugt mit 1 bis 4 C-Atomen, insbesondere bevorzugt Methyl,
X ist H, CH₃, OH oder O•,
A ist geradkettiges, verzweigtes oder cyclisches Alkylen mit 1 bis 20 C-Atomen, das gegebenenfalls substituiert ist,
und
eine oder mehrere Verbindungen, die aus der Gruppe der Verbindungen der Formeln RM-1 bis RM-121 ausgewählt sind:

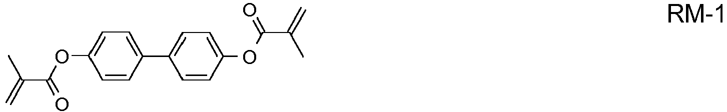

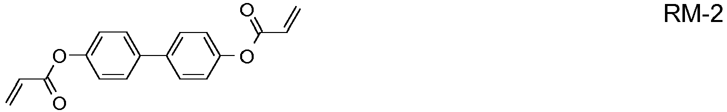

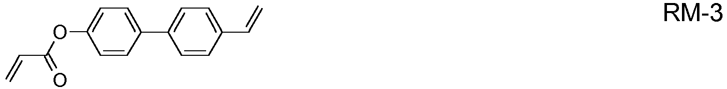

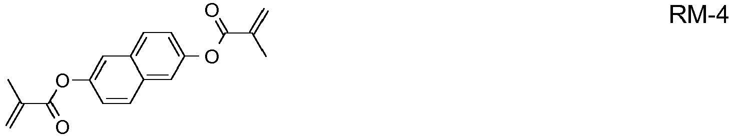

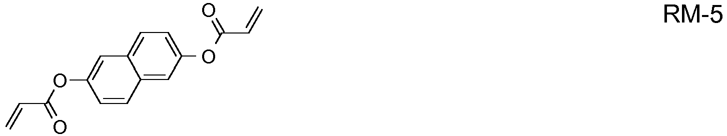

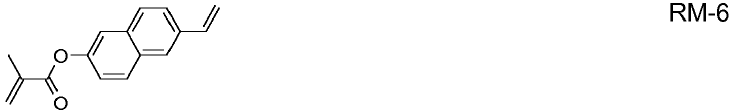

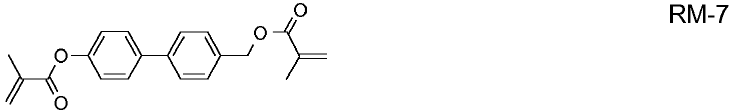

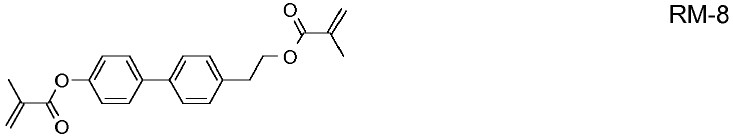

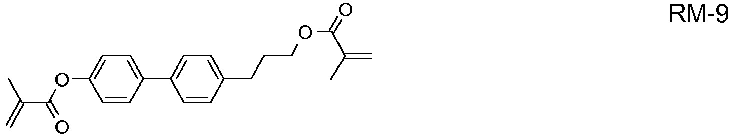

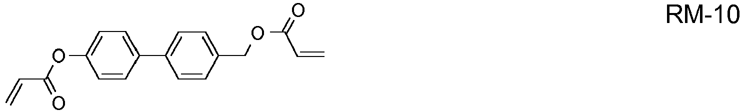

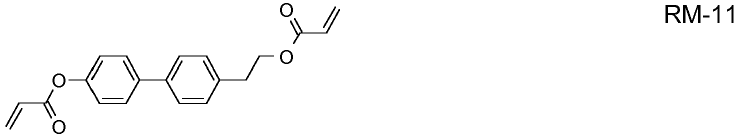

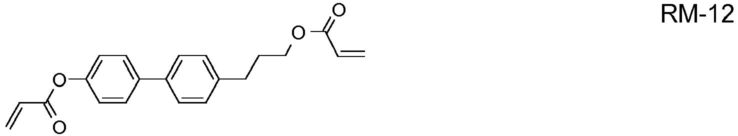

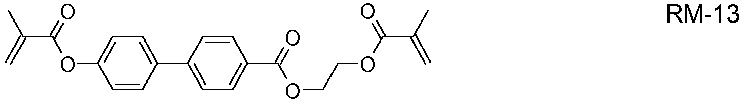

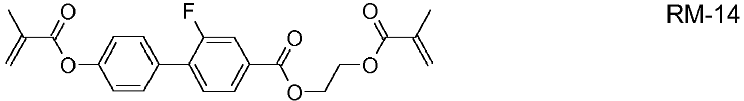

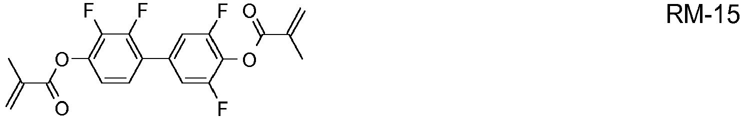

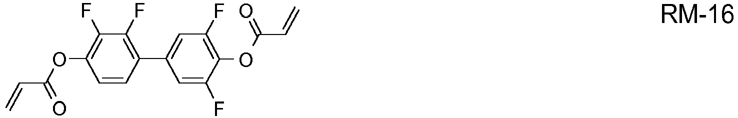

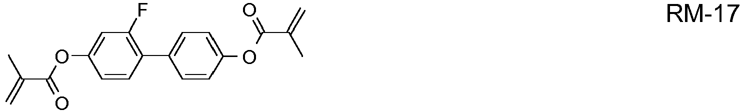

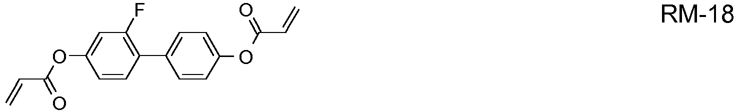

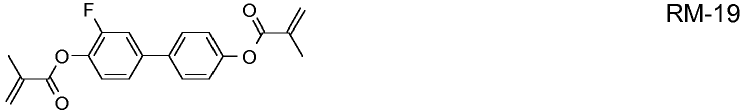

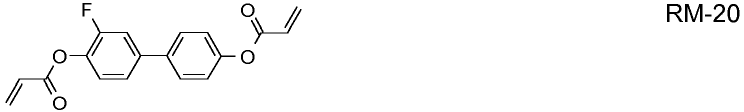

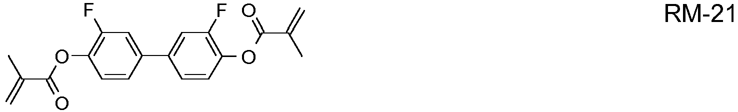

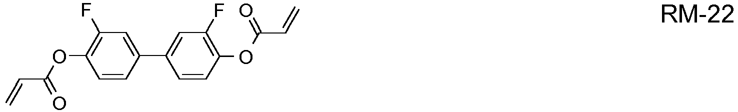

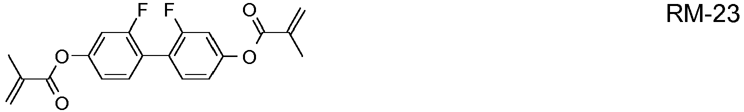

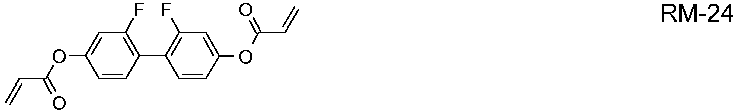

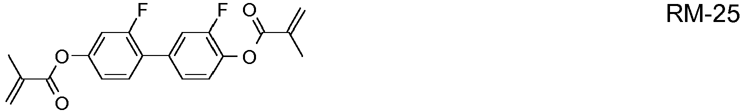

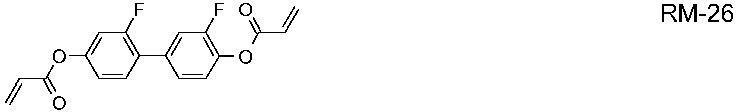

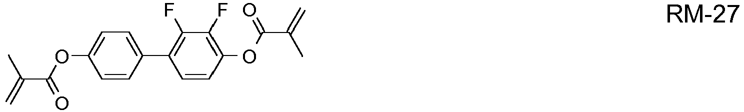

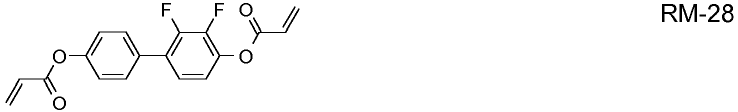

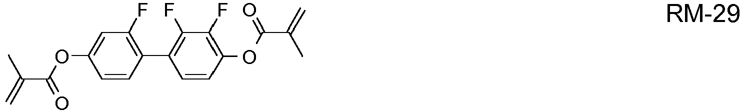

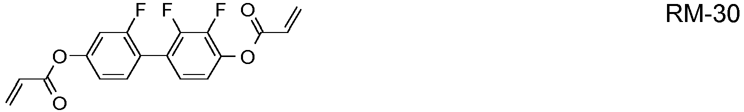

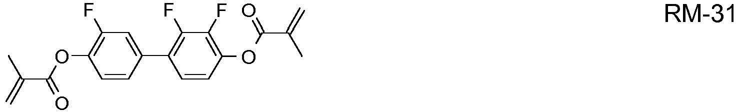

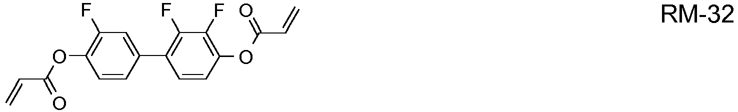

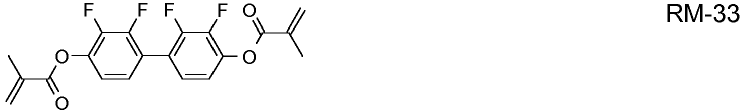

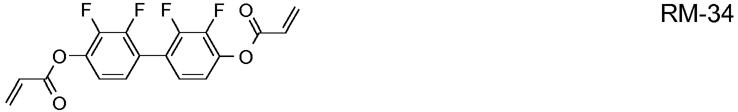

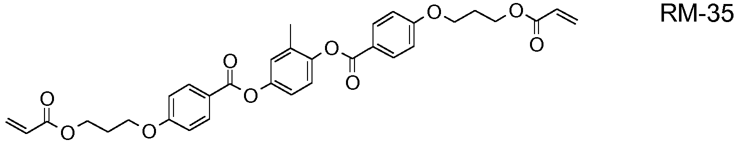

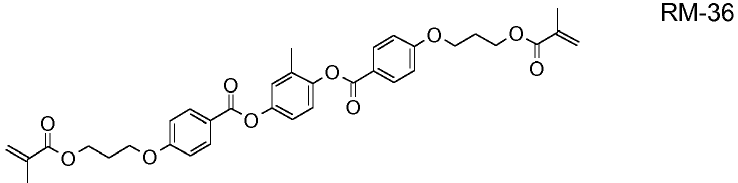

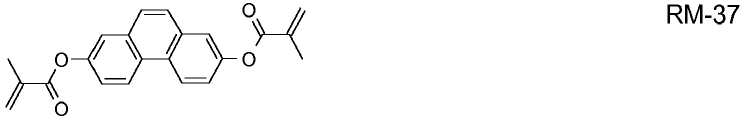

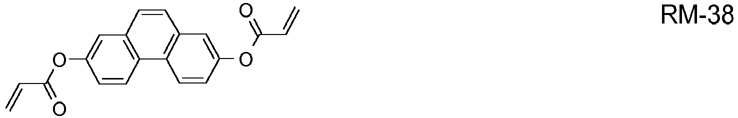

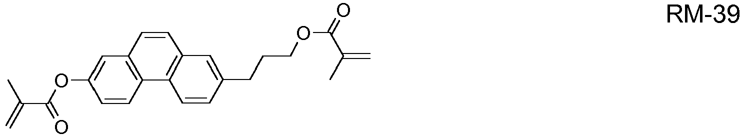

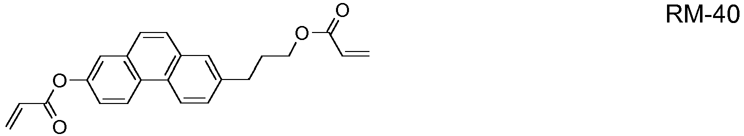

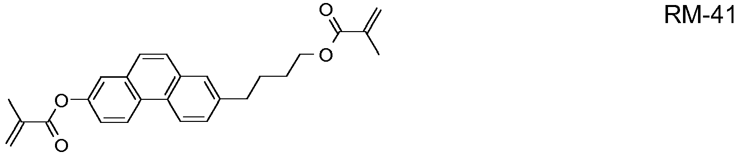

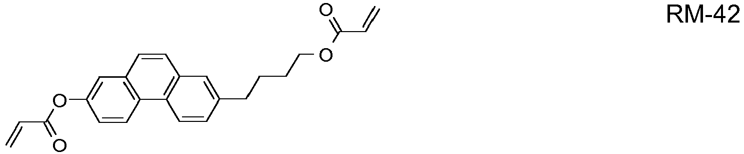

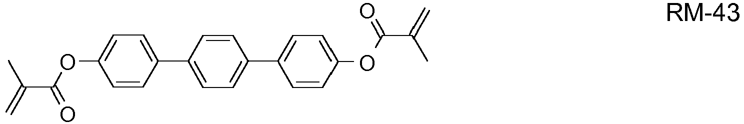

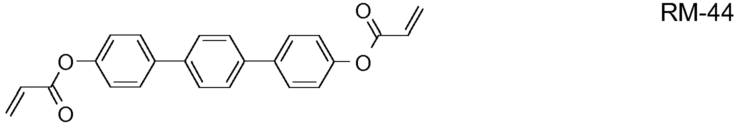

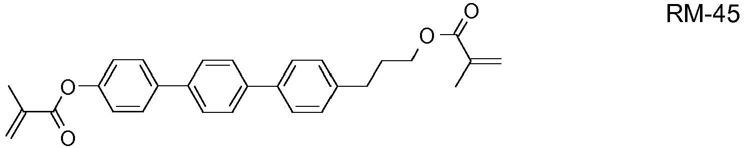

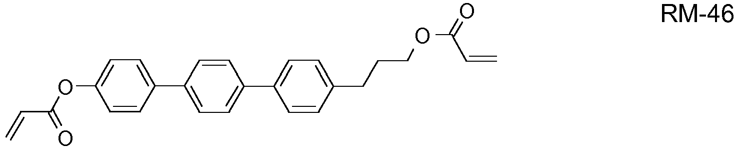

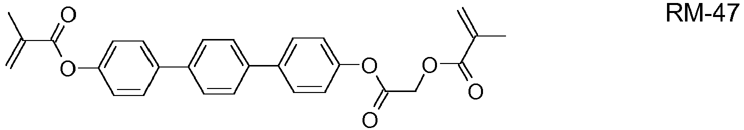

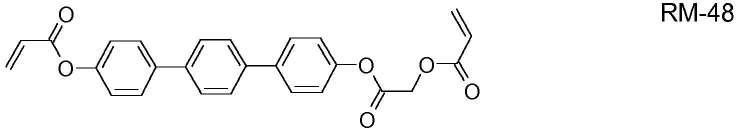

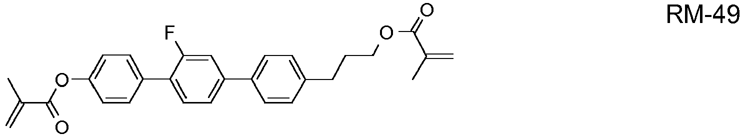

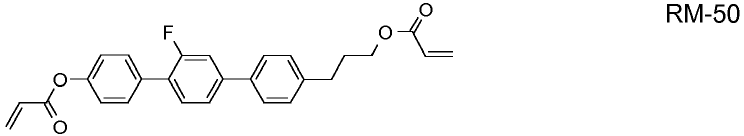

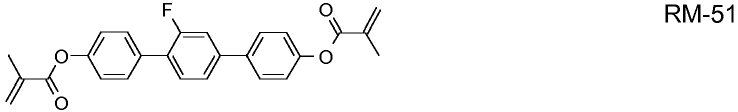

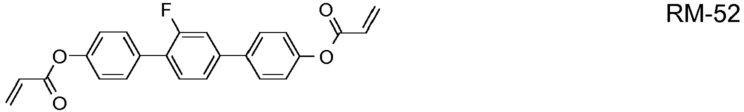

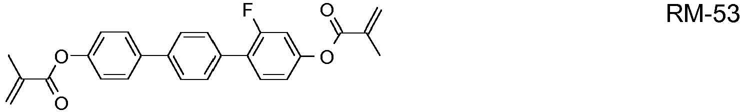

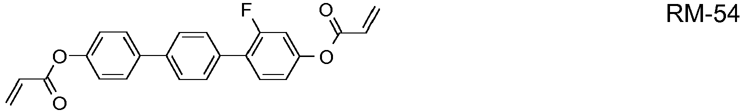

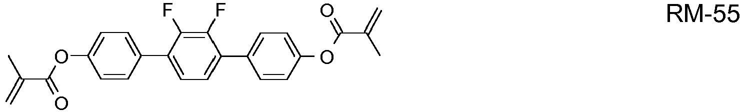

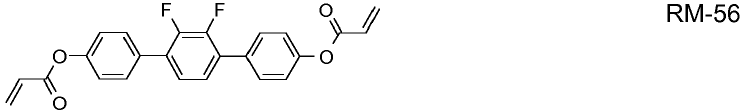

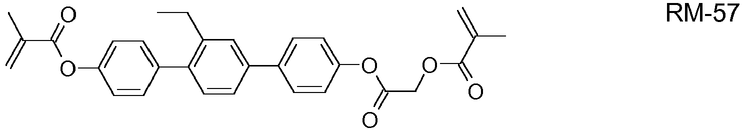

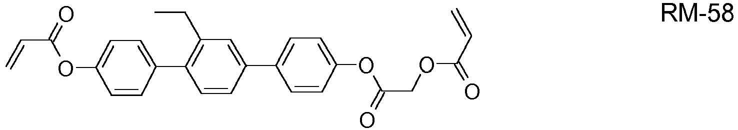

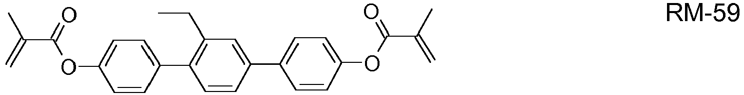

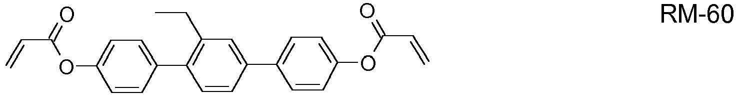

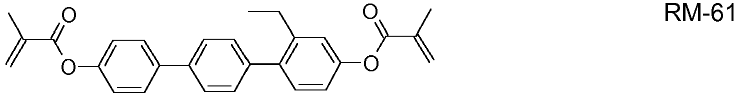

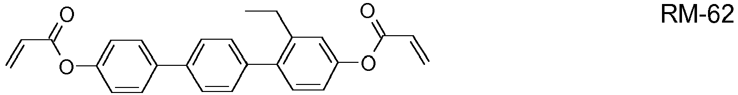

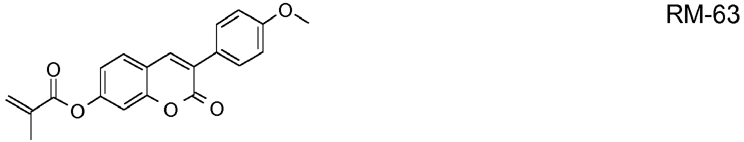

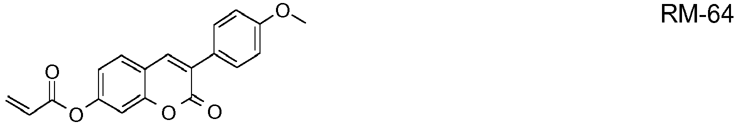

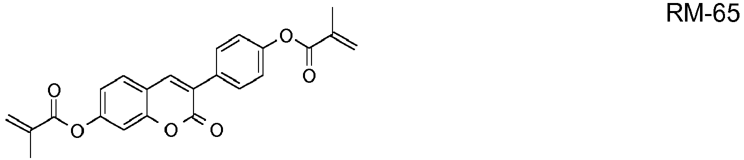

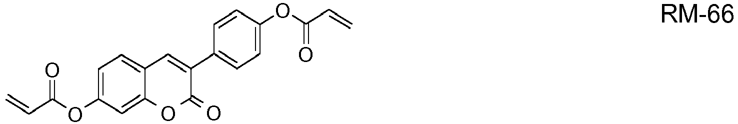

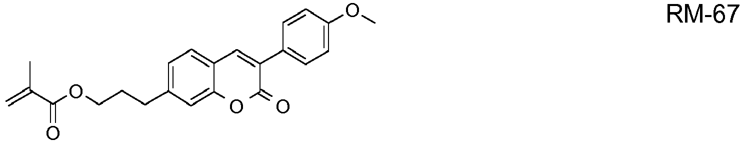

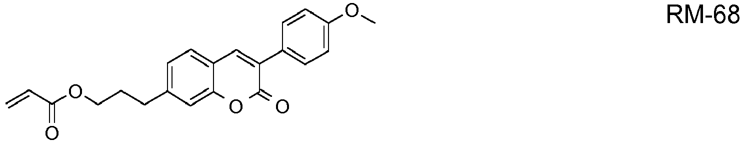

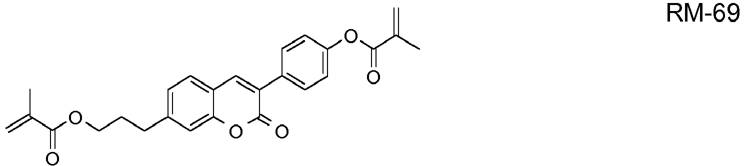

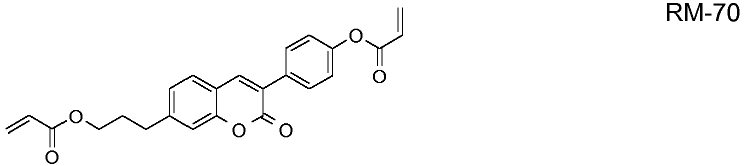

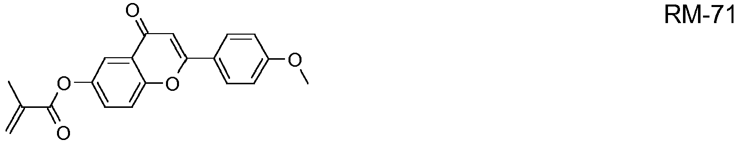

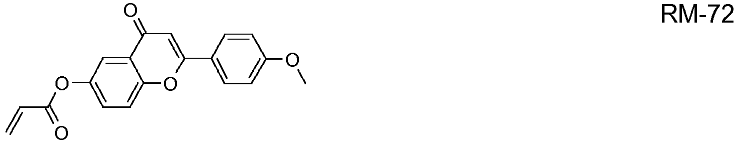

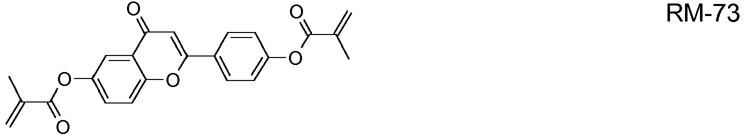

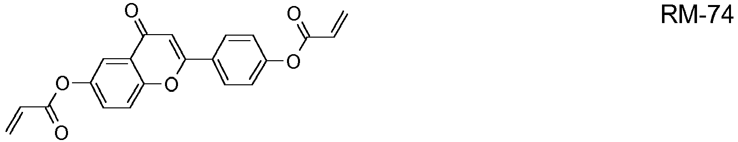

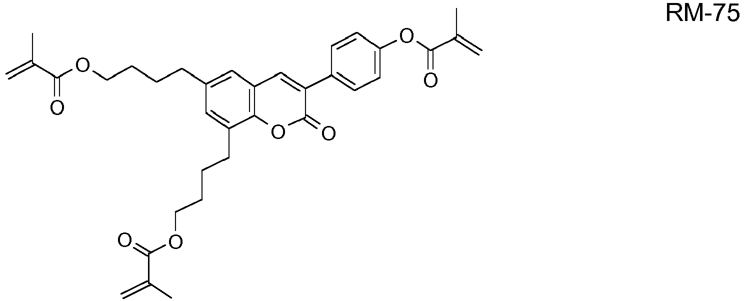

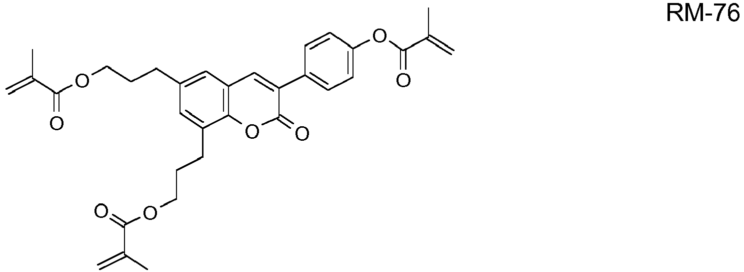

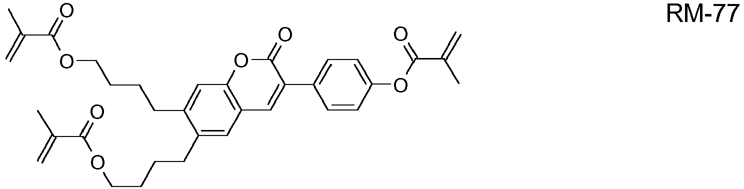

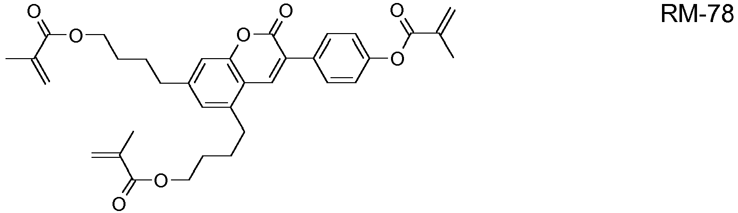

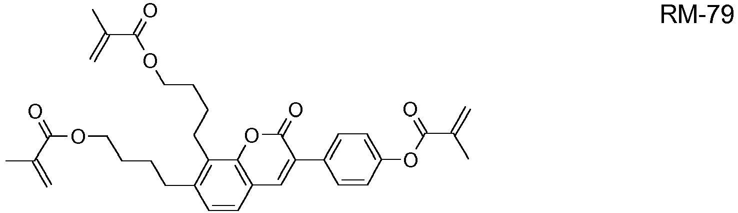

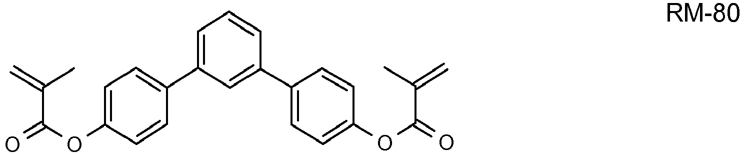

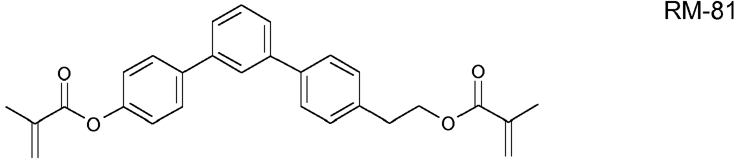

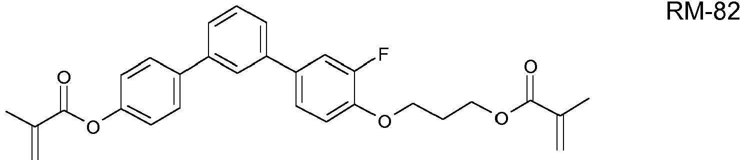

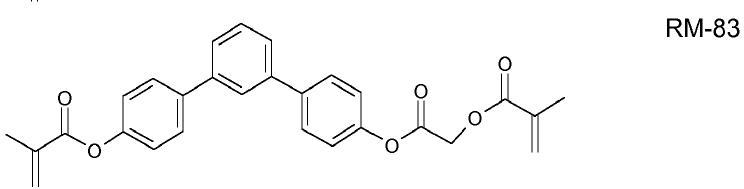

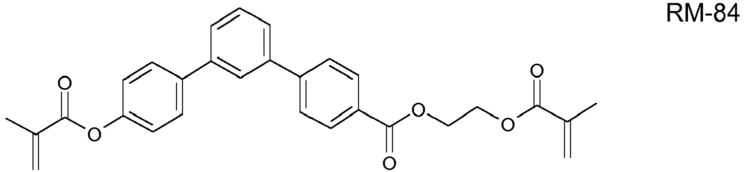

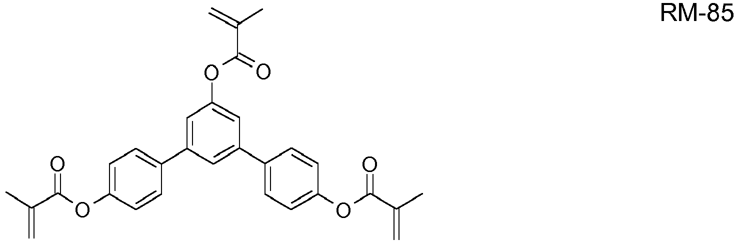

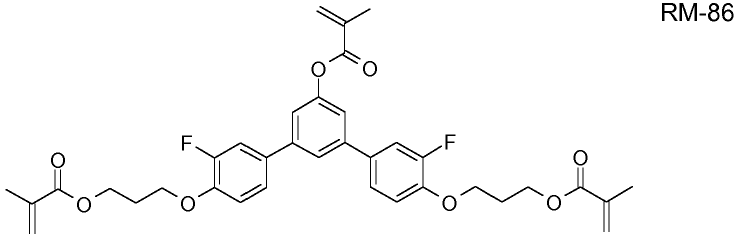

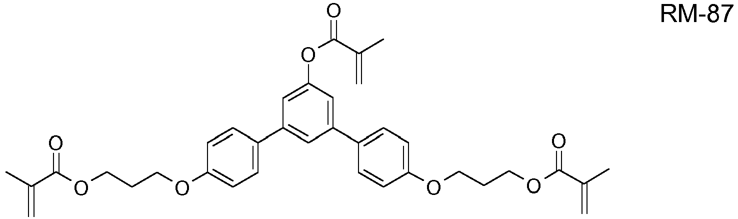

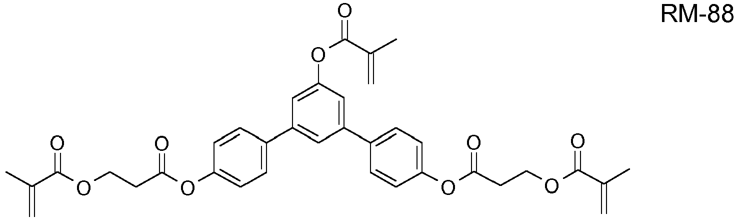

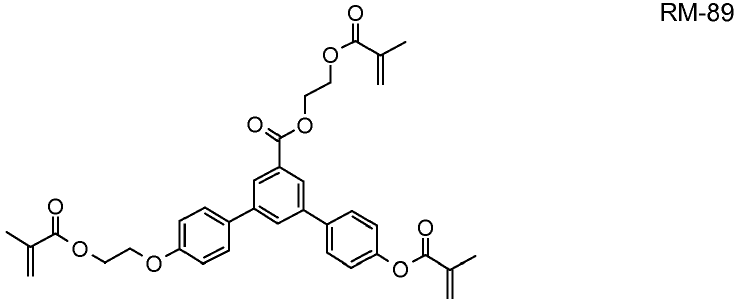

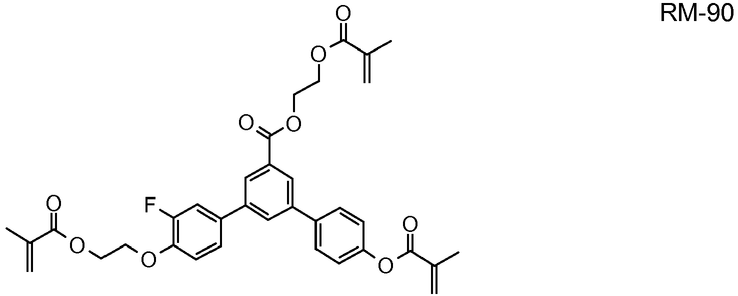

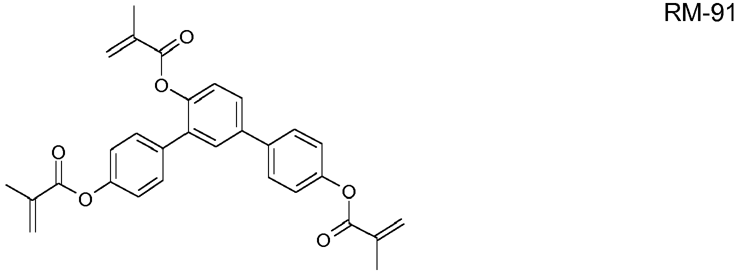

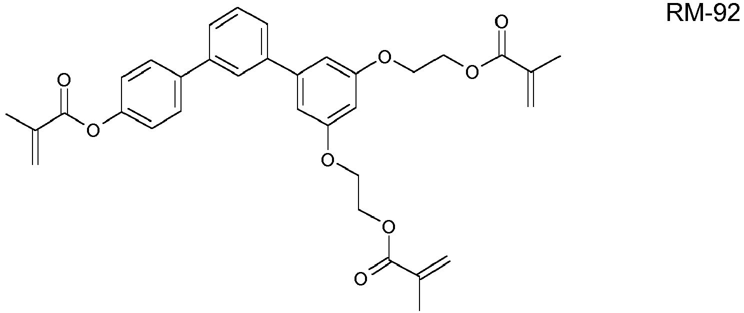

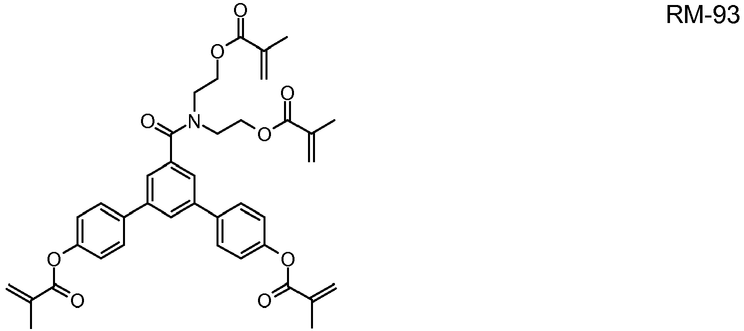

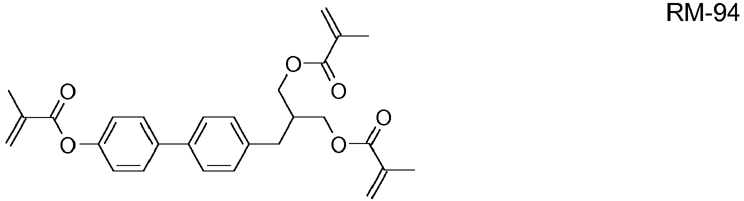

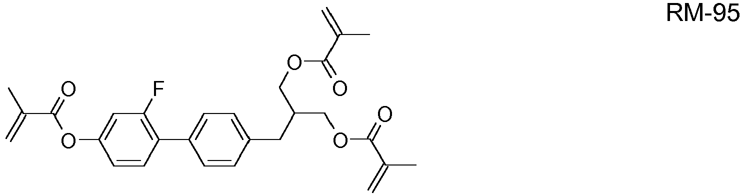

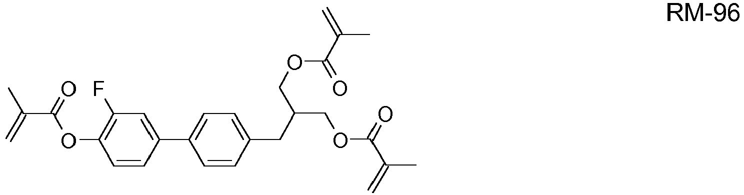

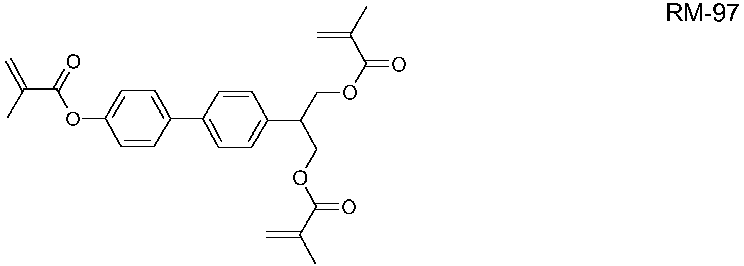

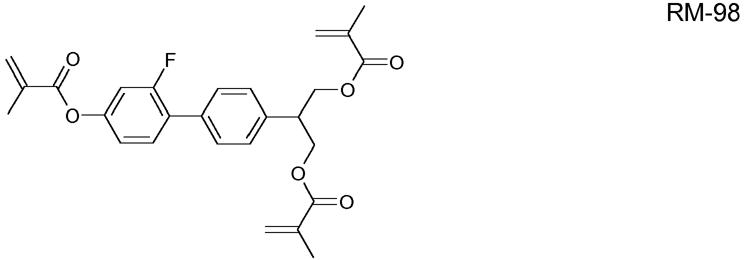

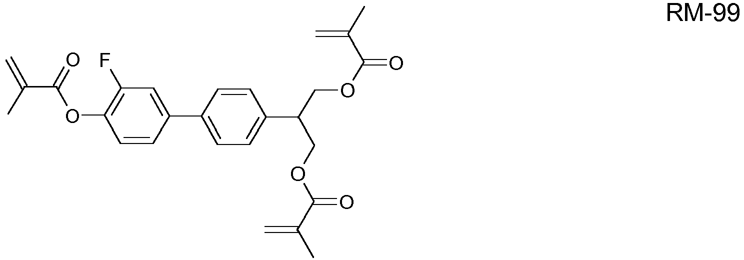

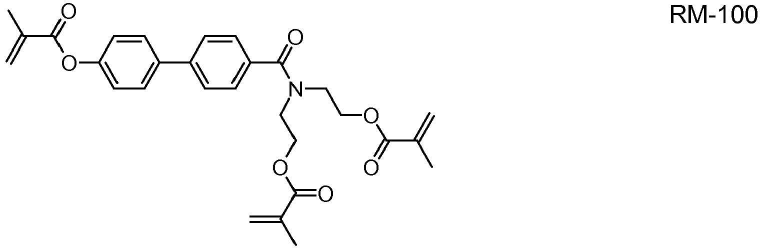

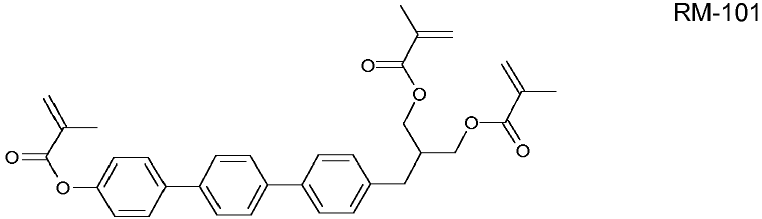

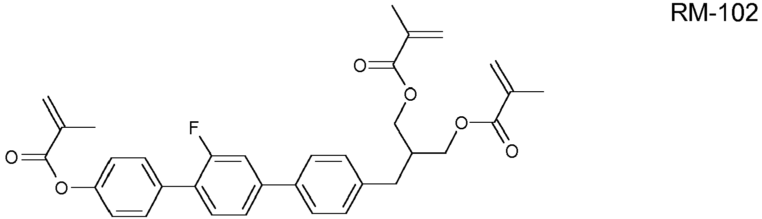

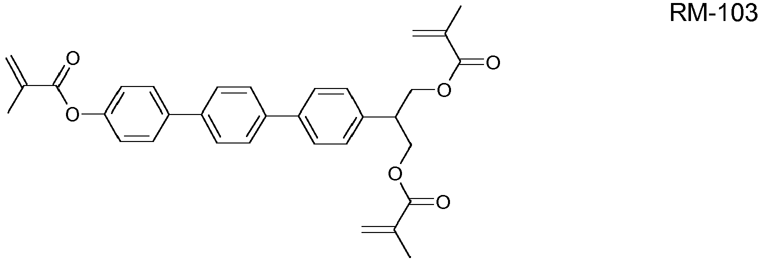

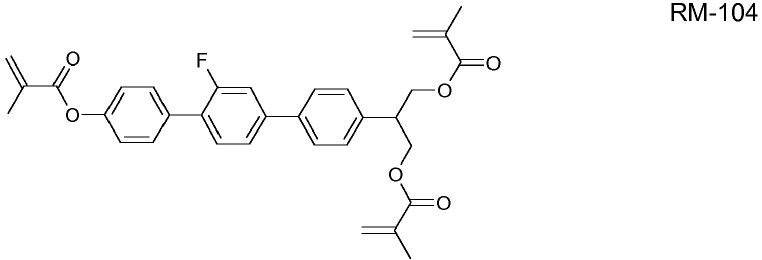

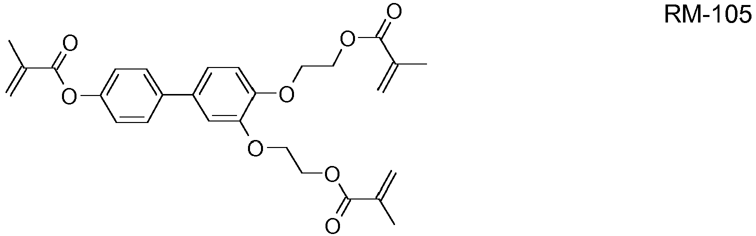

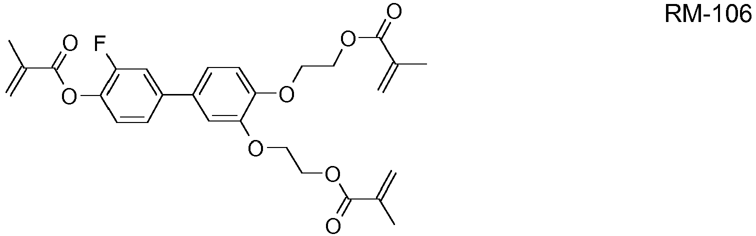

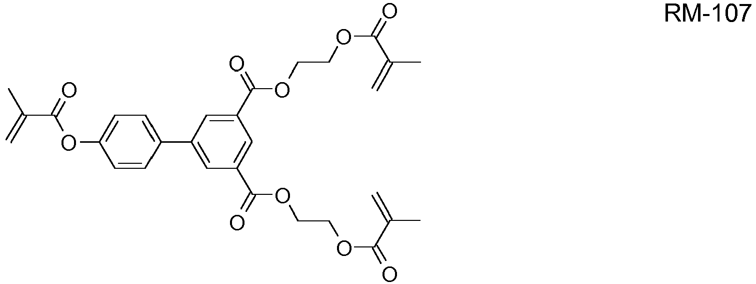

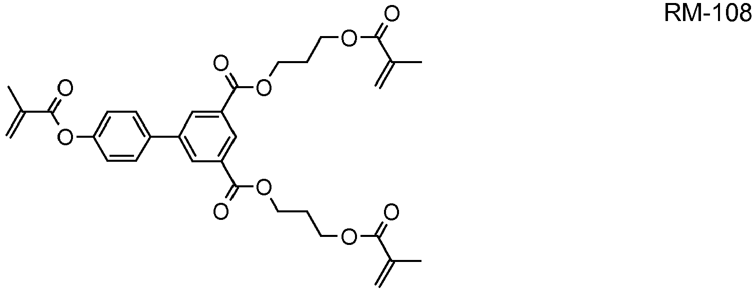

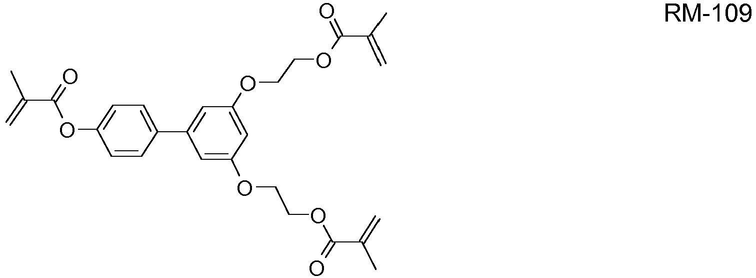

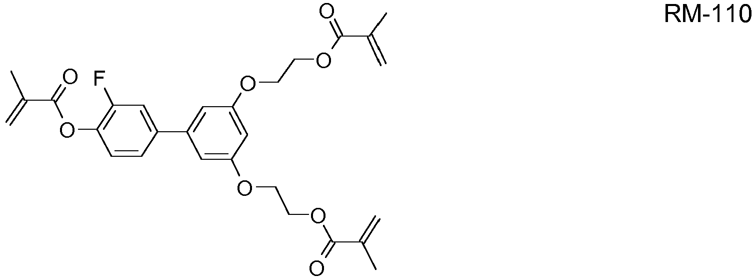

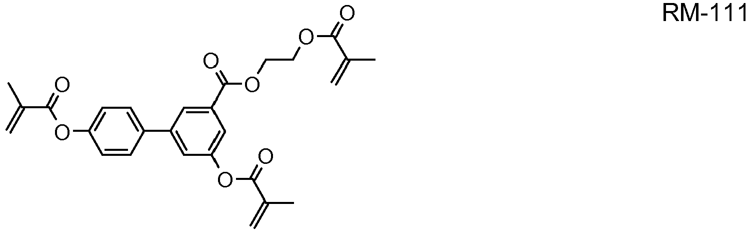

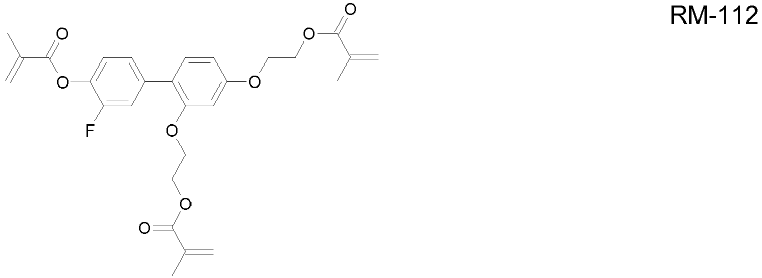

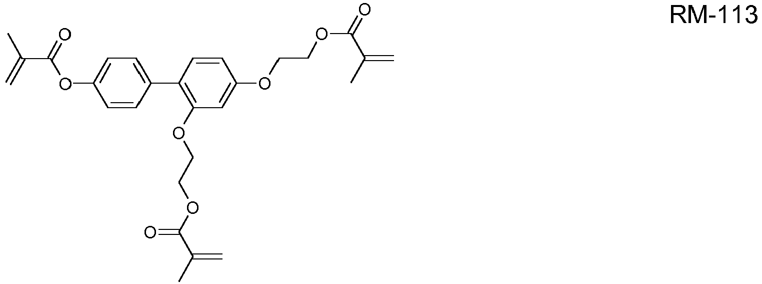

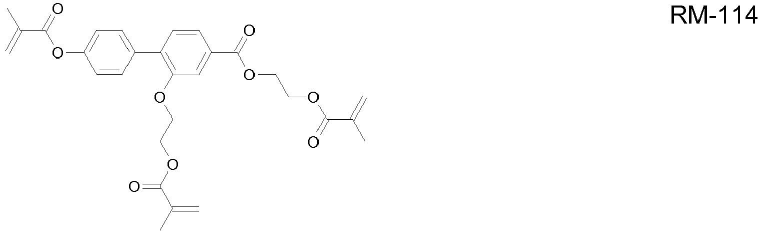

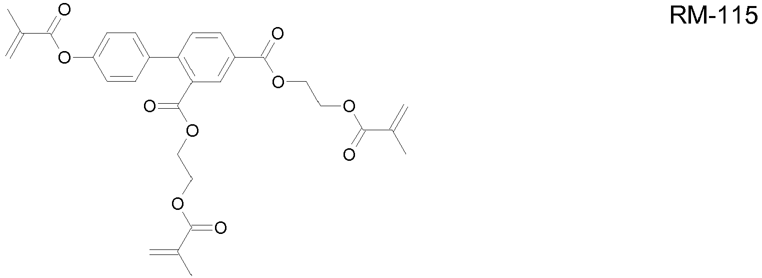

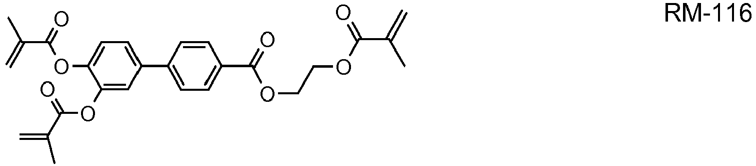

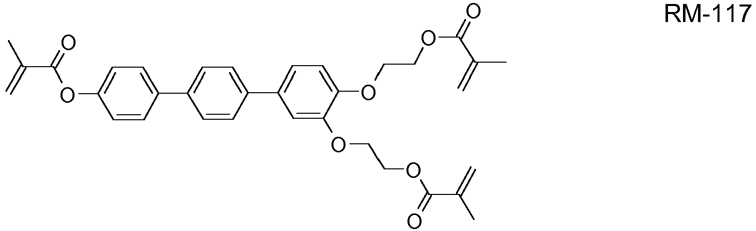

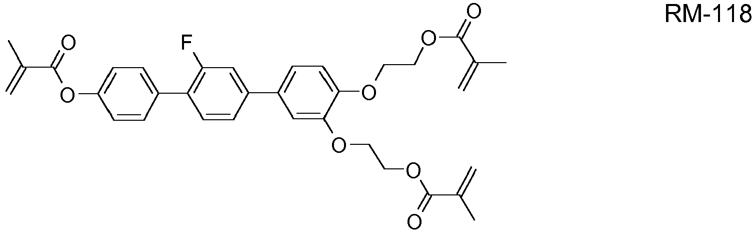

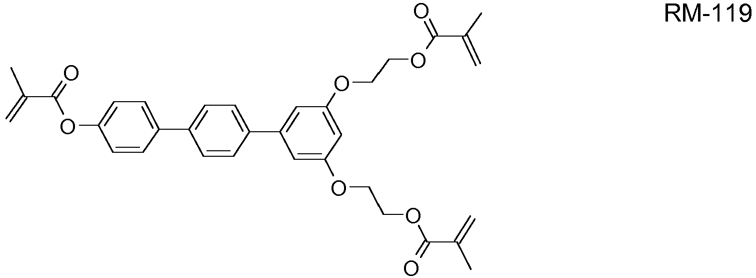

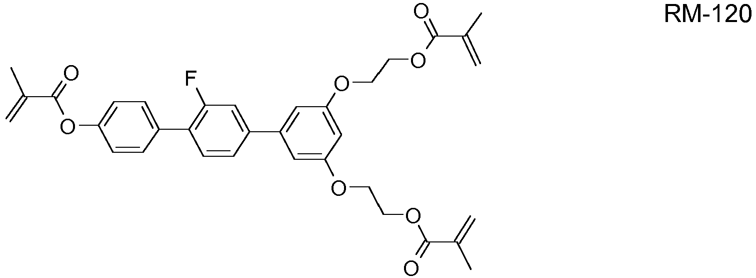

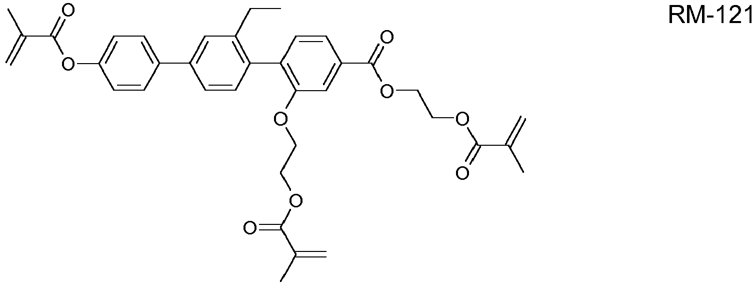

2. FK-Medium des Anspruchs 1, **dadurch gekennzeichnet, dass** die Verbindungen der Formel AN aus den folgenden Formeln ausgewählt sind: 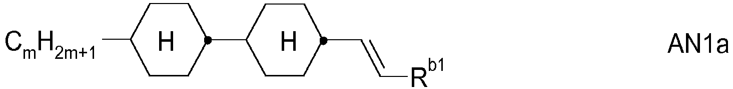 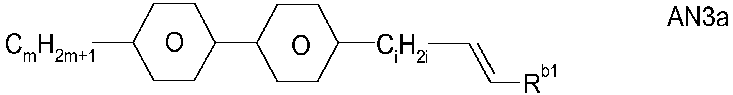 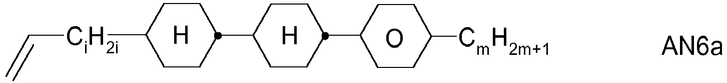 in denen m 1, 2, 3, 4, 5 oder 6 bedeutet, i 0, 1, 2 oder 3 bedeutet und R^{b1} H, CH₃ oder C₂H₅ bedeutet.

3. FK-Medium des Anspruchs 1 oder 2, **dadurch gekennzeichnet, dass** die Verbindungen der Formel AN aus den folgenden Formeln ausgewählt sind:

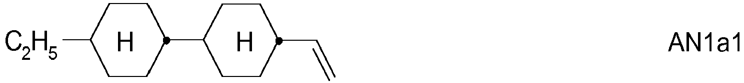

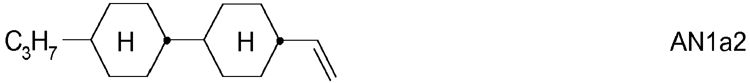

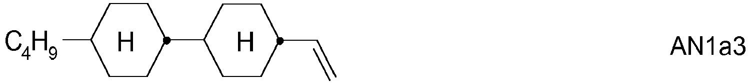

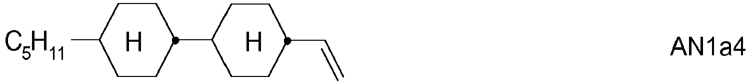

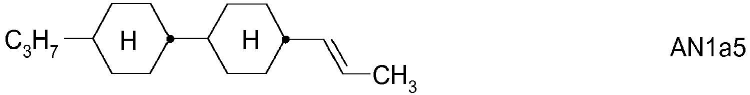

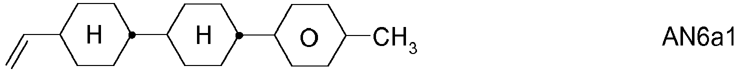

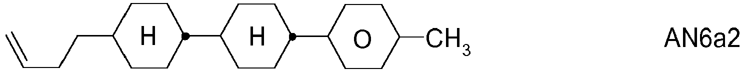

4. FK-Medium nach einem beliebigen der Ansprüche 1 bis 3, **dadurch gekennzeichnet, dass** die Verbindungen der Formel Q aus den folgenden Unterformeln 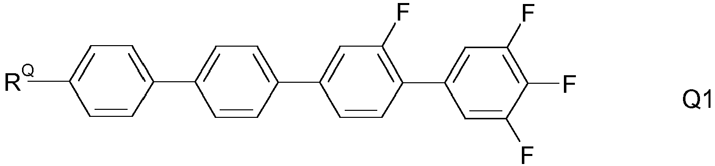 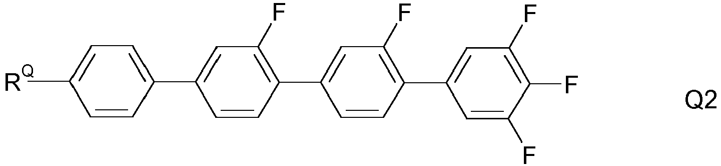 ausgewählt sind, bei denen R^{Q} eine der Bedeutungen des Anspruchs 1 besitzt.

5. FK-Medium nach einem beliebigen der Ansprüche 1 bis 4, **dadurch gekennzeichnet, dass** die Verbindungen der Formel Q aus der Formel Q1 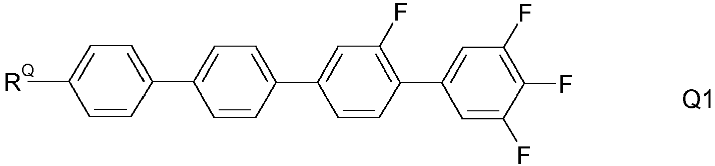 ausgewählt sind, bei der R^{Q} n-Propyl ist.

6. FK-Medium nach einem beliebigen der Ansprüche 1 bis 5, **dadurch gekennzeichnet, dass** die Verbindungen der Formel S aus den folgenden Unterformeln 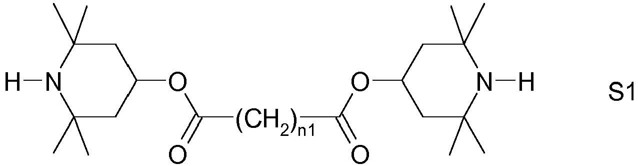 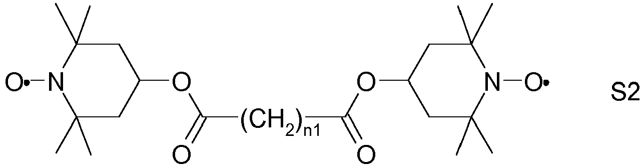 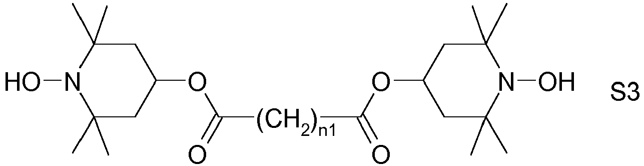 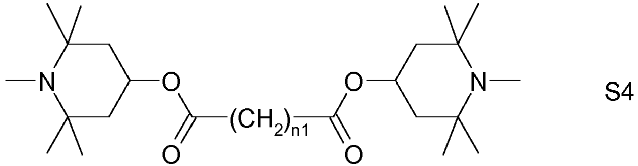 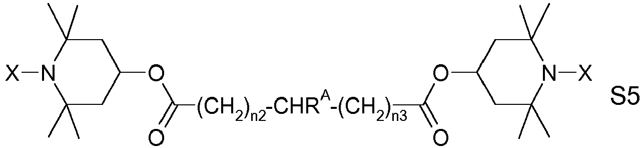 ausgewählt sind, bei denen
X H, CH₃, OH oder O• ist,
R^{A} Methyl, Ethyl, Propyl, Butyl, Pentyl oder Hexyl ist,
n1 eine ganze Zahl von 2 bis 12 ist,
n2 0 oder eine ganze Zahl von 1 bis 12, vorzugsweise 0 ist,
n3 0 oder eine ganze Zahl von 1 bis 12 ist, und
in den Formeln S1-S4 ein oder mehrere H-Atome in dem Rest (CH₂)ₙ₁ gegebenenfalls durch eine Methyl-, Ethyl-, Propyl-, Butyl-, Pentyl- oder Hexylgruppe ersetzt sind.

7. FK-Medium nach einem beliebigen der Ansprüche 1 bis 6, **dadurch gekennzeichnet, dass** die Verbindungen der Formel S aus den folgenden Unterformeln 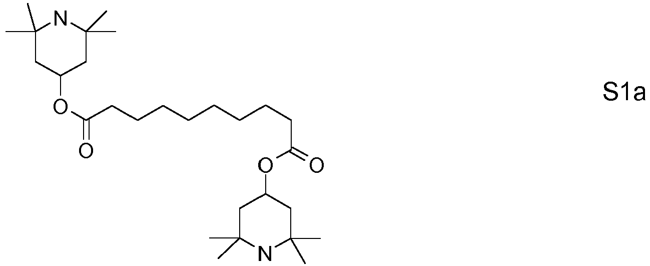 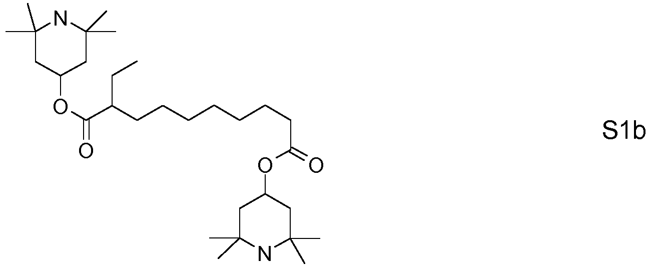 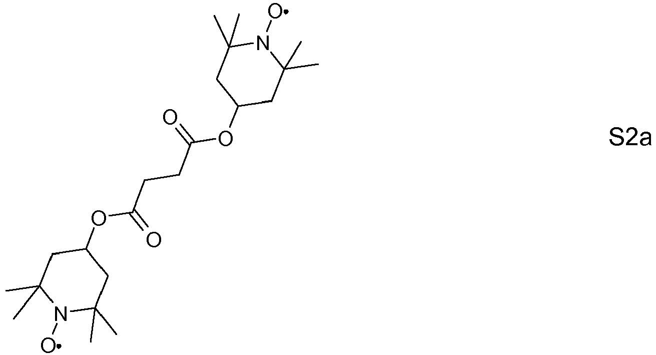 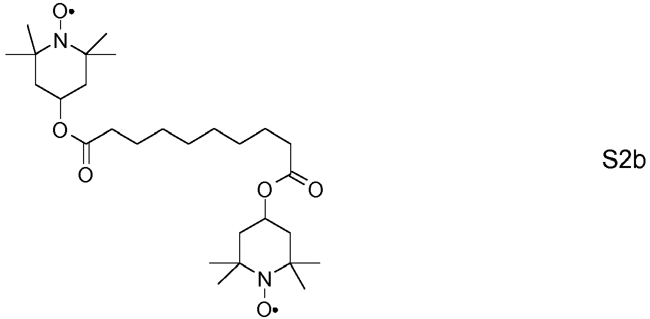 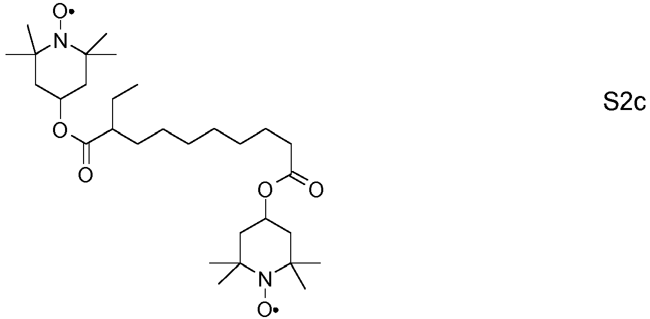 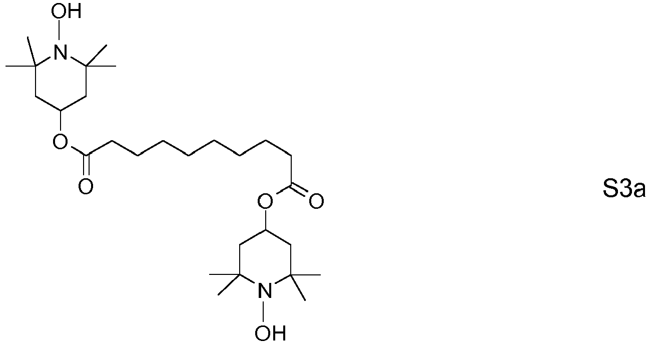 ausgewählt sind.

8. FK-Medium nach einem beliebigen der Ansprüche 1 bis 7, **dadurch gekennzeichnet, dass** es eine oder mehrere Verbindungen enthält, die aus den Formeln CY und PY ausgewählt sind: 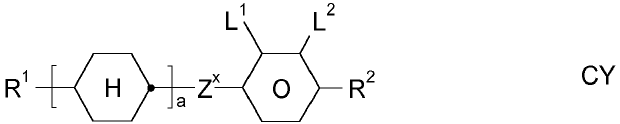 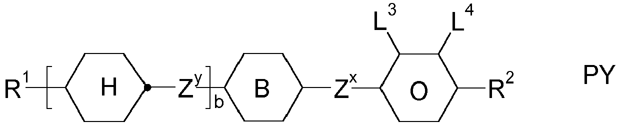 bei denen
a 1 oder 2 bedeutet,
b 0 oder 1 bedeutet, 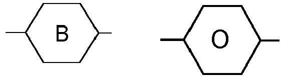
oder 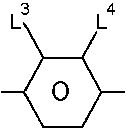 bedeutet,
R¹ und R² jeweils unabhängig voneinander Alkyl mit 1 bis 12 C-Atomen, wobei zusätzlich eine oder zwei nicht benachbarte CH₂-Gruppen so durch -O-, -CH=CH-, -CO-, -O-CO- oder -COO- ersetzt sein können, dass O-Atome nicht direkt miteinander verknüpft sind, vorzugsweise Alkyl oder Alkoxy mit 1 bis 6 C-Atomen, bedeuten,
Z^{x} und Z^{y} jeweils unabhängig voneinander -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung, vorzugsweise eine Einfachbindung bedeuten,
L¹⁻⁴ jeweils unabhängig voneinander F, Cl, OCF₃, CF₃, CH₃, CH₂F, CHF₂ bedeuten.

9. FK-Medium nach einem beliebigen der Ansprüche 1 bis 8, **dadurch gekennzeichnet, dass** es eine oder mehrere Verbindungen der folgenden Formel enthält: 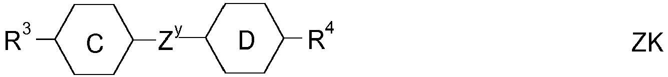 in der die einzelnen Reste die folgenden Bedeutungen besitzen: 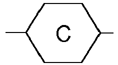 bedeutet 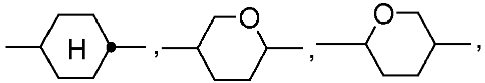 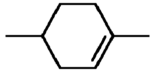 oder 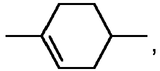 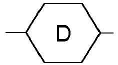 bedeutet 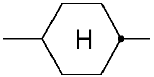 oder 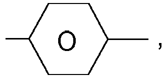
R³ und R⁴ bedeuten jeweils unabhängig voneinander Alkyl mit 1 bis 12 C-Atomen, in dem zusätzlich eine oder zwei nicht benachbarte CH₂-Gruppen so durch -O-, -CH=CH-, -CO-, -O-CO- oder -CO-O- ersetzt sein können, dass O-Atome nicht direkt miteinander verknüpft sind,
Z^{y} bedeutet -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung, vorzugsweise eine Einfachbindung.

10. FK-Anzeige enthaltend ein FK-Medium wie in einem beliebigen der Ansprüche 1 bis 9 definiert.

11. FK-Anzeige des Anspruchs 10, bei der es sich um eine VA-, PSA-, PS-VA-, PA-VA-, PALC-, FFS-, PS-FFS-, IPS- oder PS-IPS-Anzeige handelt.

## Revendications

1. Milieu cristallin liquide (LC) présentant une anisotropie diélectrique négative, comprenant un ou plusieurs composé(s) de la formule Q, un ou plusieurs composé(s) de la formule AN et un ou plusieurs composé(s) de la formule S : 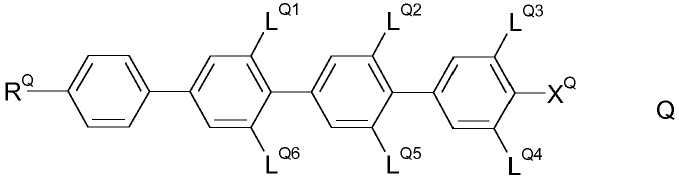 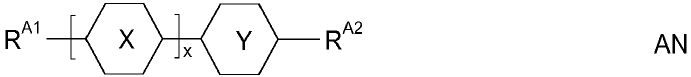 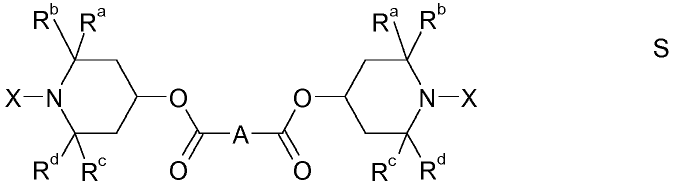 dans lesquelles les radicaux individuels, pour chaque occurrence de manière identique ou différente et chacun de manière indépendante des autres, présentent les significations qui suivent : 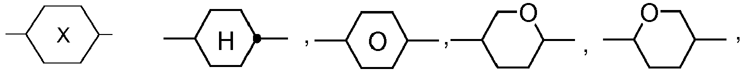 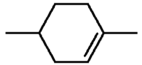 ou 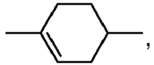 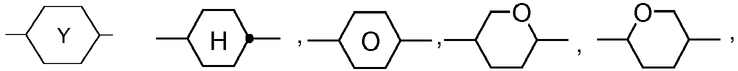 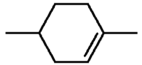 ou 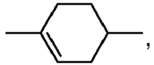
R^{Q} alkyle, alcoxy, oxaalkyle ou alcoxyalkyle qui comporte de 1 à 9 atome(s) de C ou alkényle ou alkényloxy qui comporte de 2 à 9 atomes de C, dont tous sont en option fluorés ;
X^{Q} F, Cl, alkyle ou alcoxy halogéné qui comporte de 1 à 6 atome(s) de C ou alkényle ou alkényloxy halogéné qui comporte de 2 à 6 atomes de C ;
L^{Q1} à L^{Q6} H ou F, au moins l'un de L^{Q1} à L^{Q6} étant F;
R^{A1} alkényle qui comporte de 2 à 9 atomes de C ou, si au moins l'un des cycles X et Y représente cyclohexényle, également l'une des significations de R^{A2};
R^{A2} alkyle qui comporte de 1 à 12 atome(s) de C, où, en outre, un ou deux groupe(s) CH₂ non adjacents peut/peuvent être remplacé(s) par -O-, -CH=CH-, -CO-, -OCO- ou -COO- de telle sorte que des atomes de O ne soient pas liés directement les uns aux autres ;
x 1 ou 2 ;
R^{a-d} sont, de manière indépendante les uns des autres, alkyle en chaîne droite ou ramifié qui comporte de 1 à 10 atome(s) de C, de préférence de 1 à 6 atome(s) de C, de façon très préférable, de 1 à 4 atome(s) de C, de la façon la plus préférable, méthyle ;
X est H, CH₃, OH ou O•;
A est alkylène en chaîne droite, ramifié ou cyclique qui comporte de 1 à 20 atome(s) de C, lequel est en option substitué ;
et
un ou plusieurs composé(s) qui est/sont sélectionné(s) parmi le groupe de composés des formules RM-1 à RM-121 :

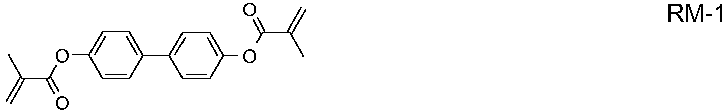

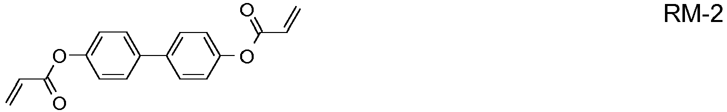

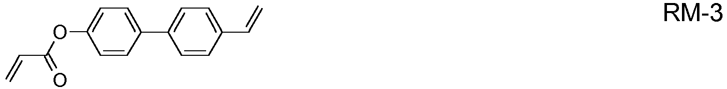

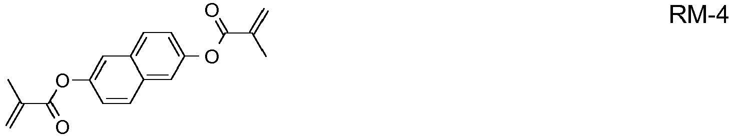

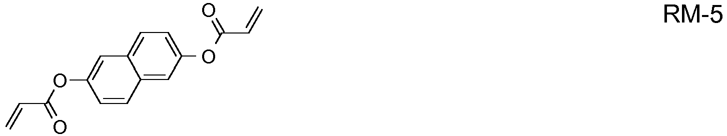

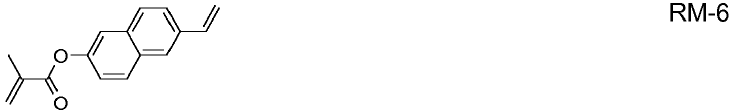

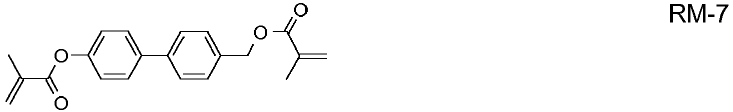

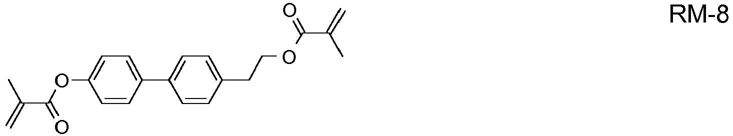

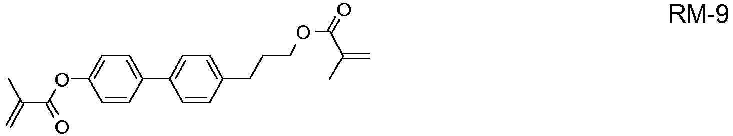

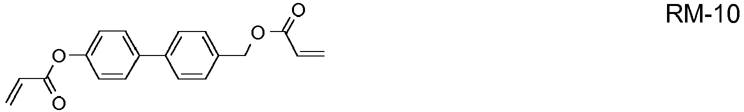

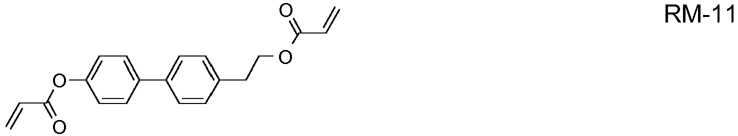

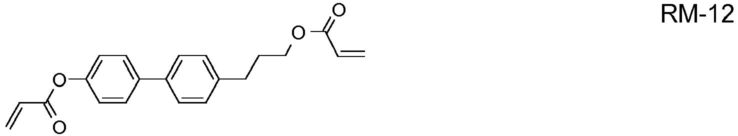

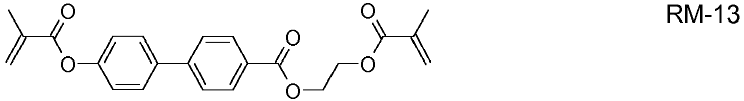

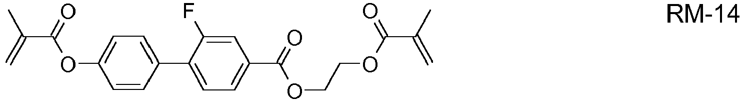

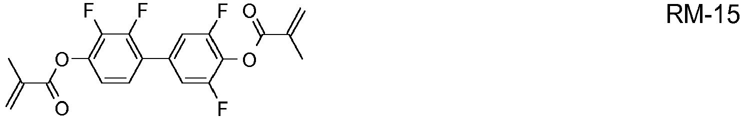

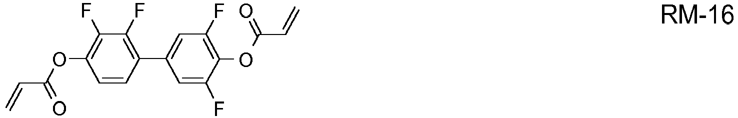

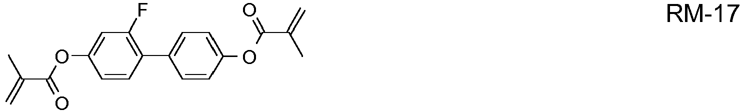

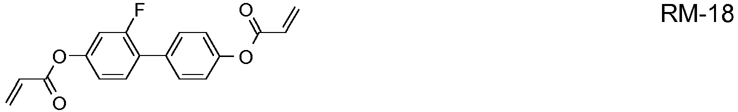

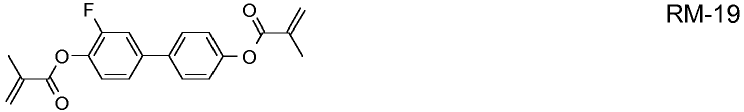

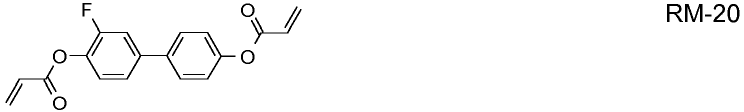

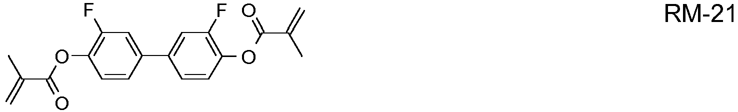

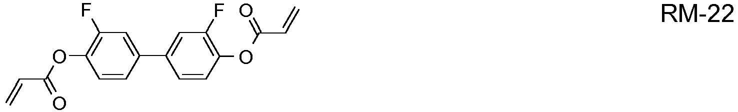

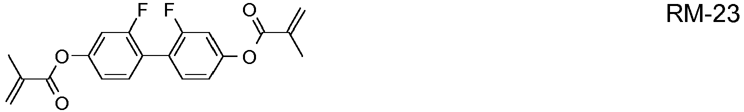

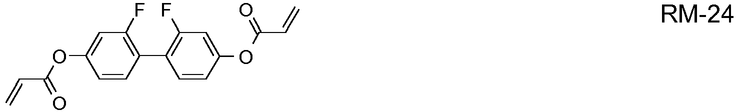

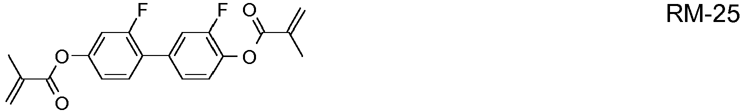

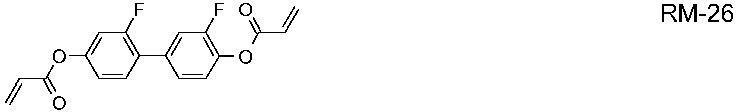

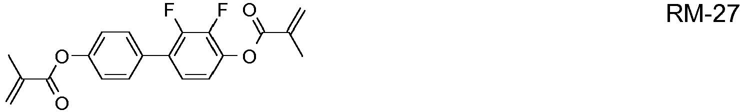

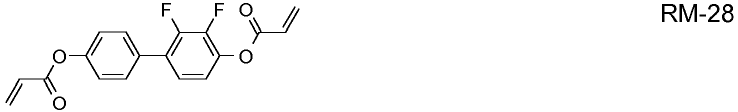

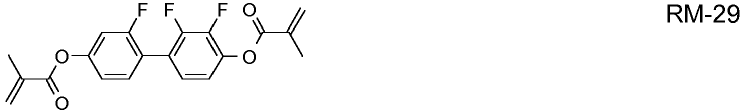

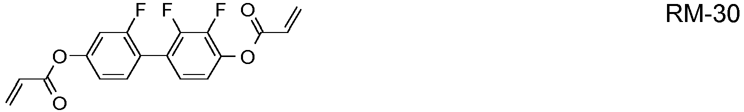

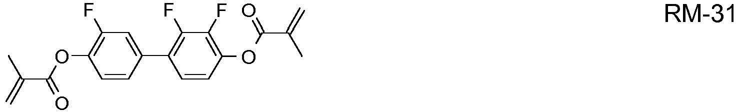

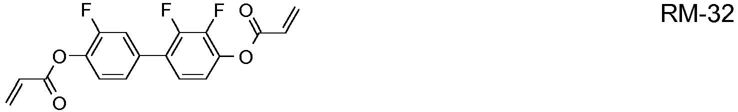

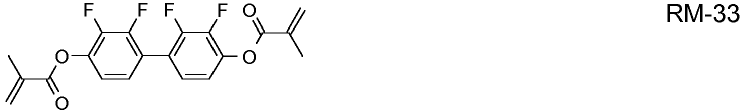

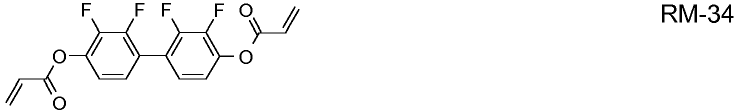

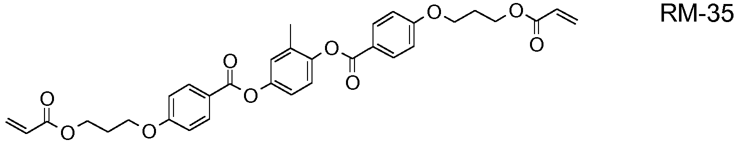

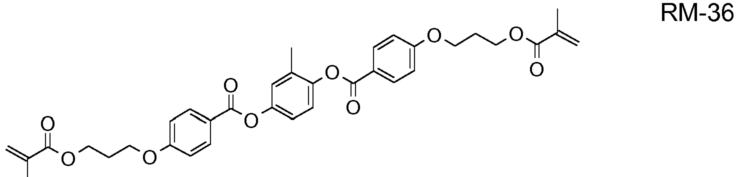

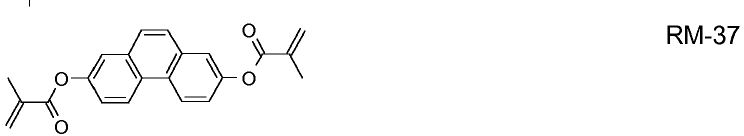

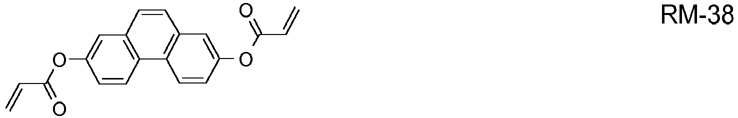

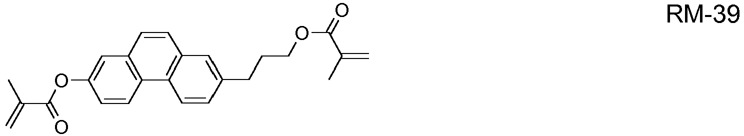

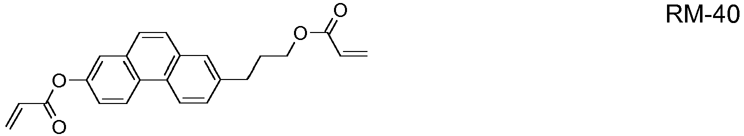

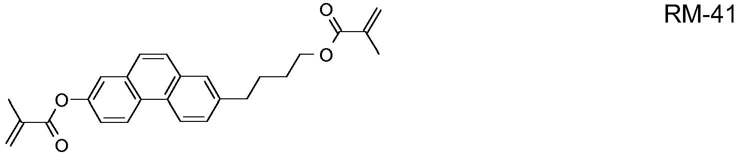

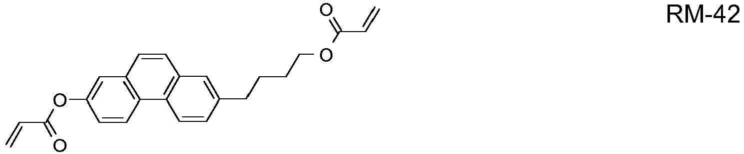

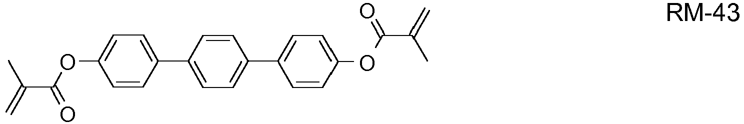

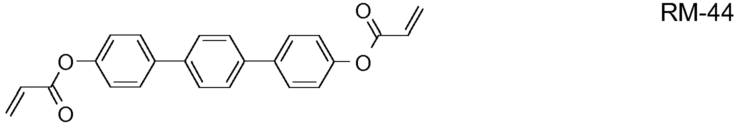

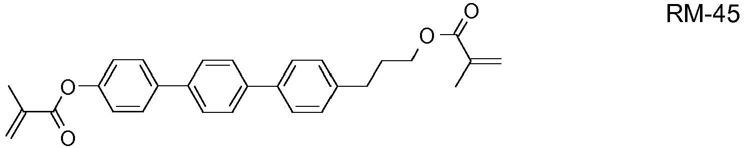

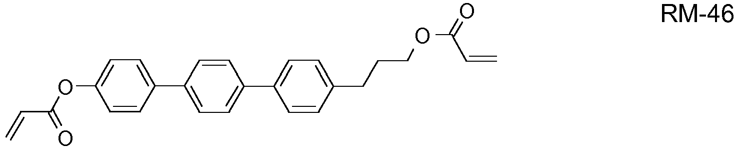

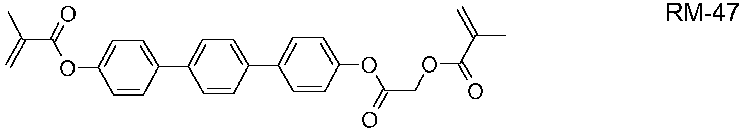

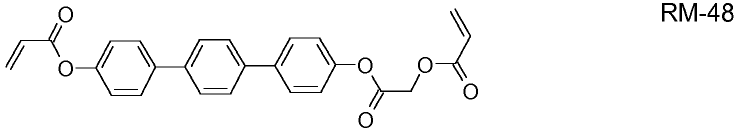

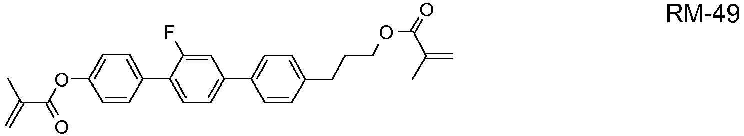

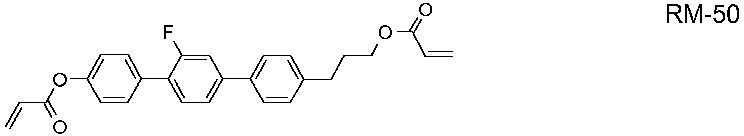

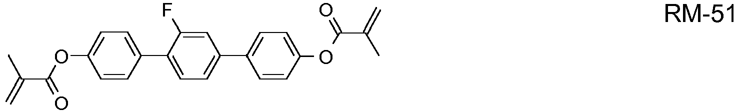

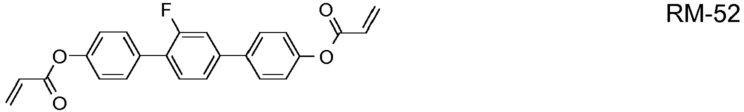

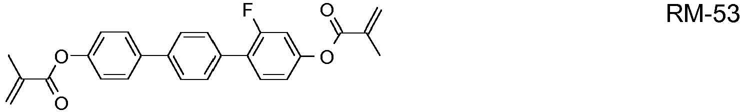

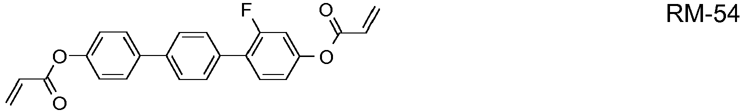

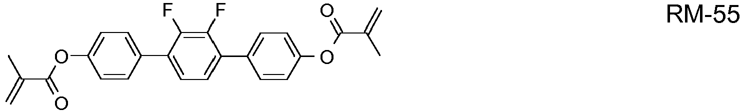

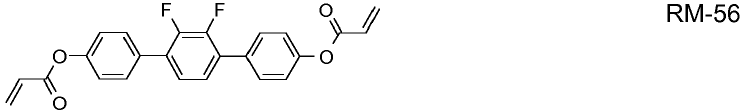

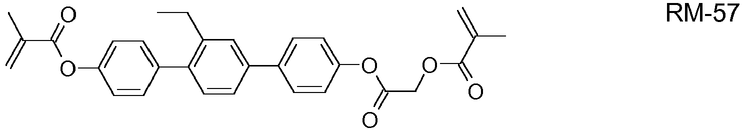

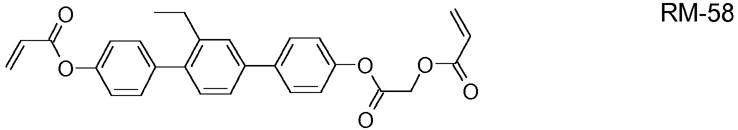

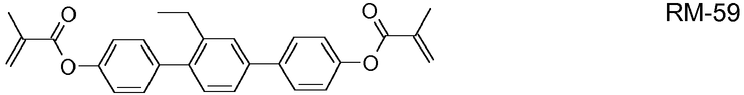

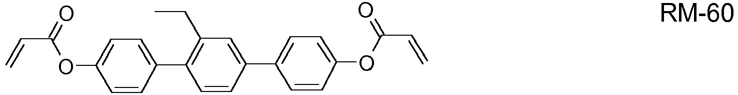

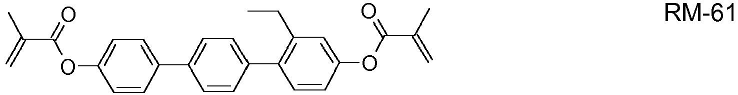

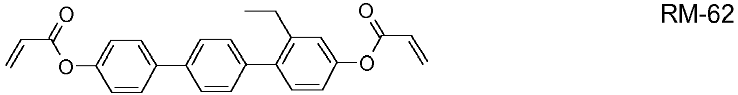

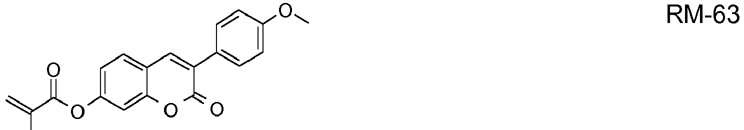

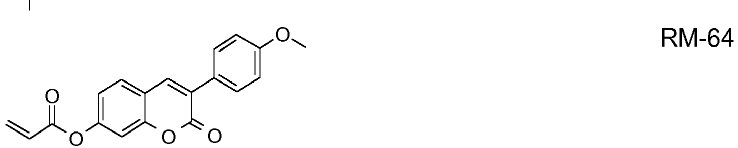

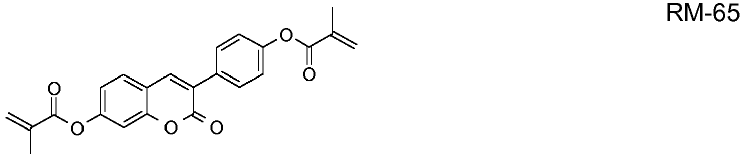

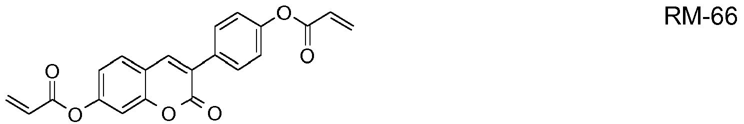

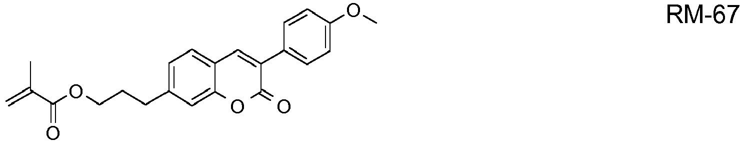

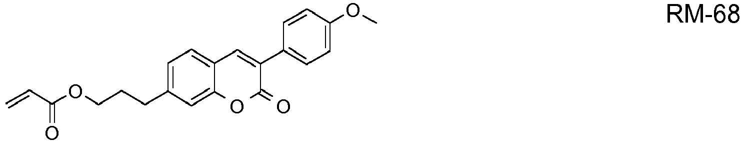

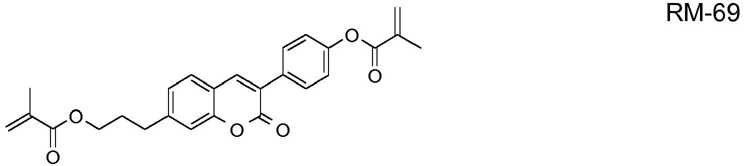

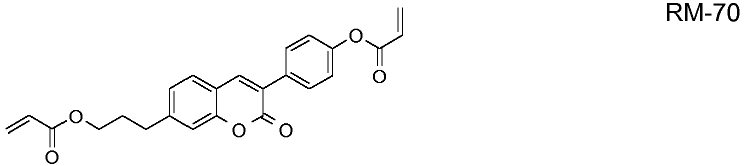

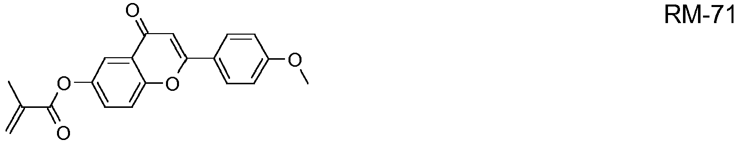

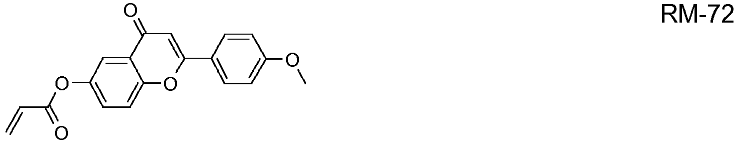

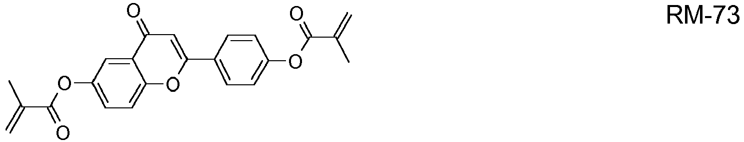

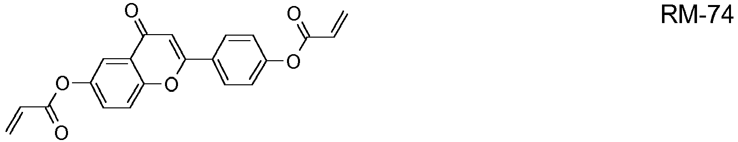

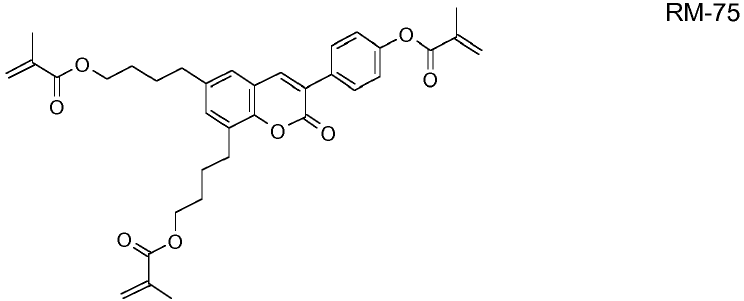

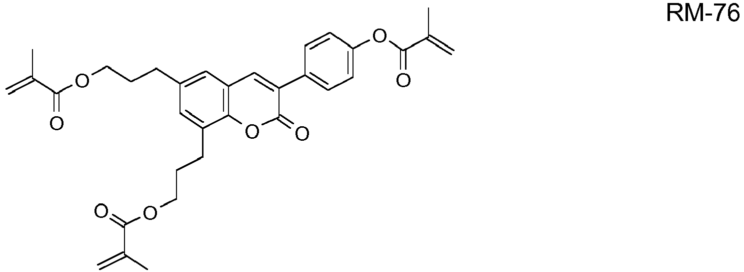

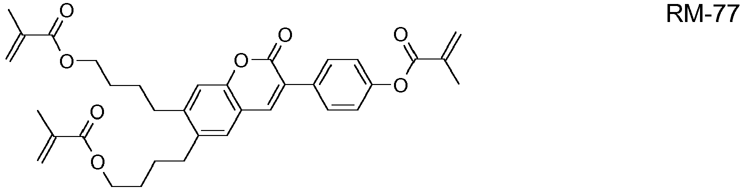

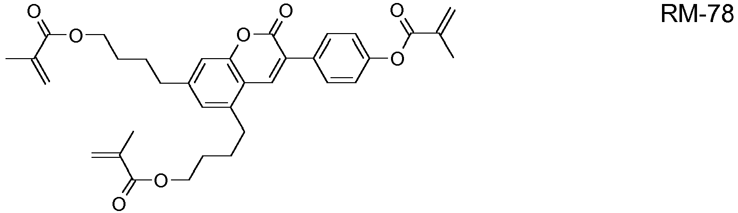

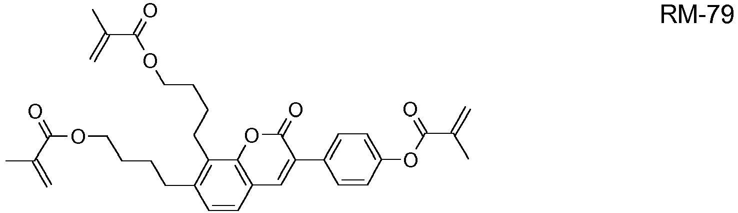

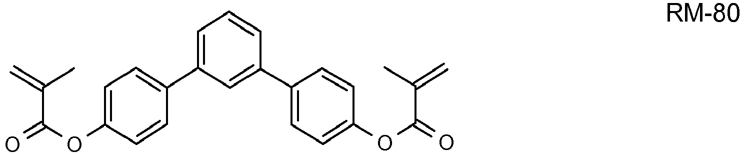

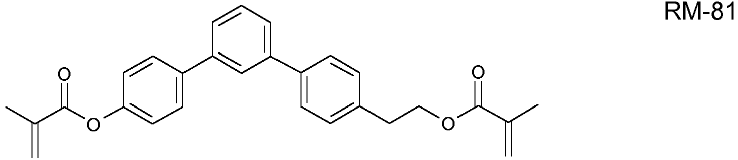

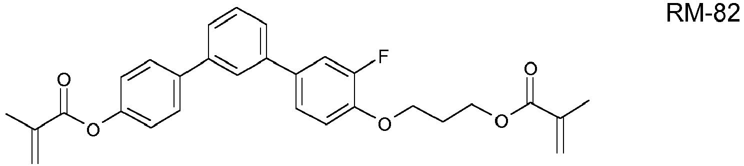

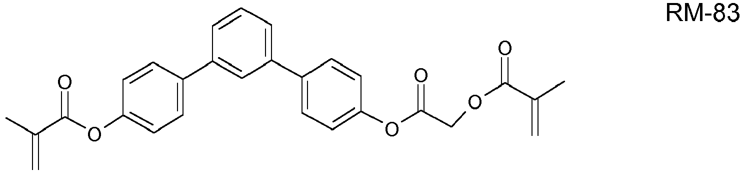

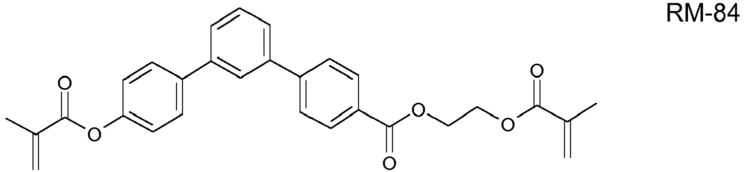

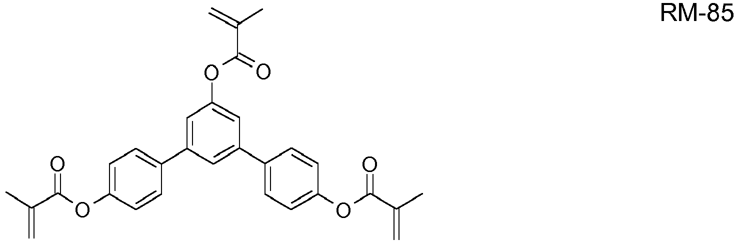

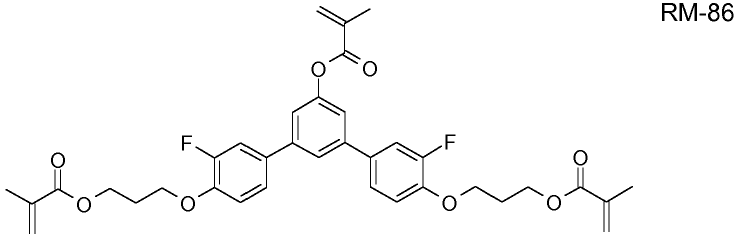

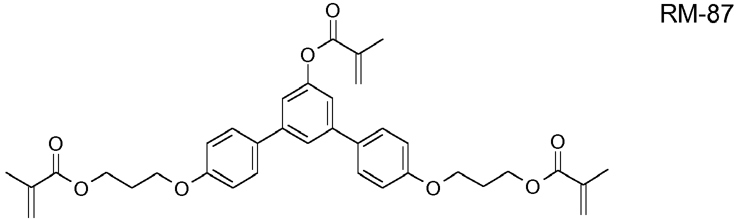

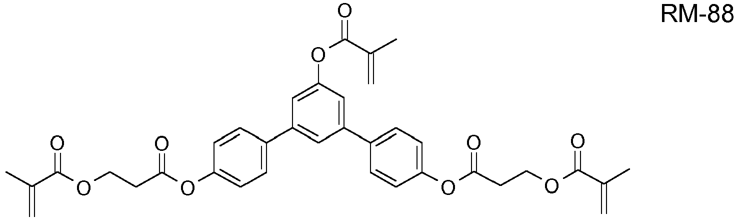

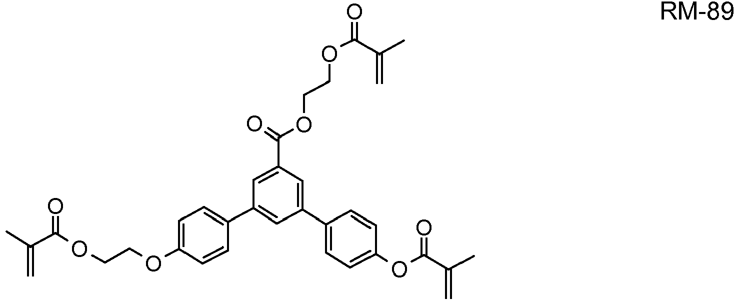

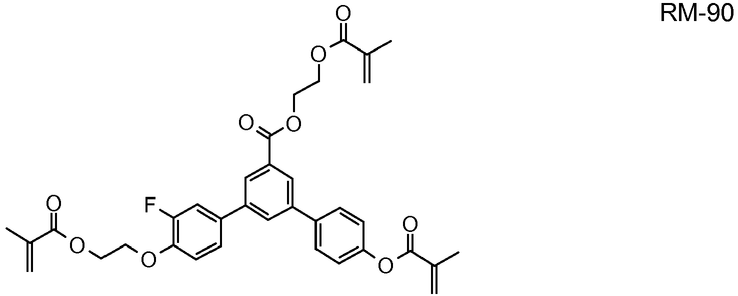

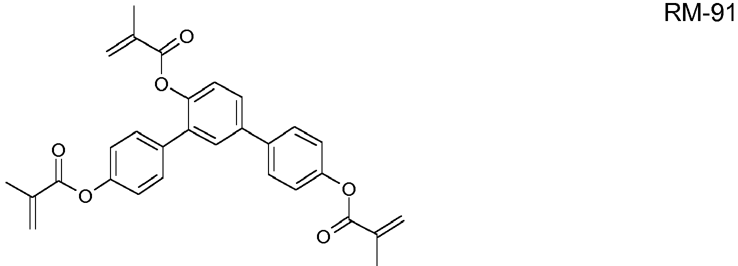

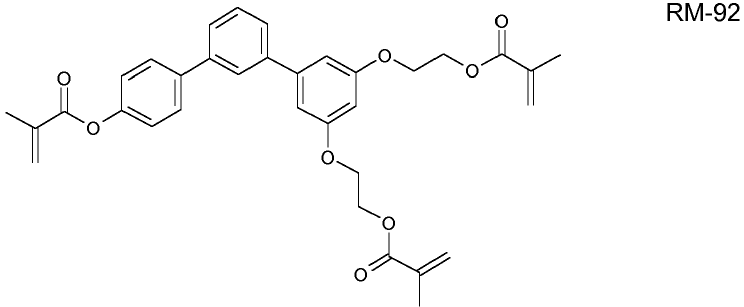

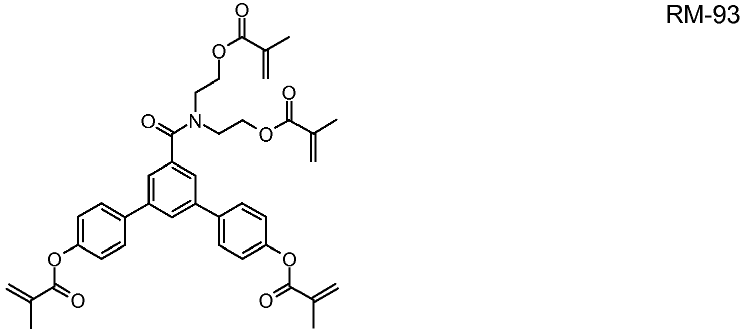

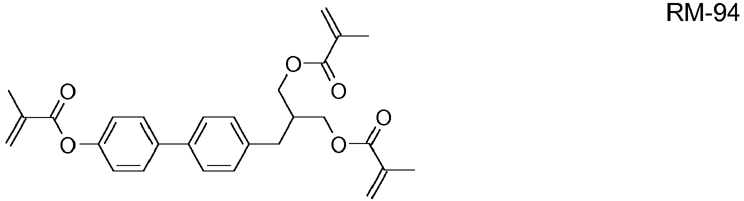

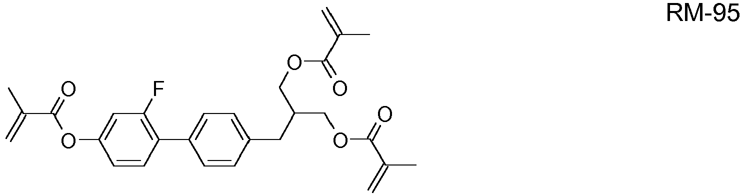

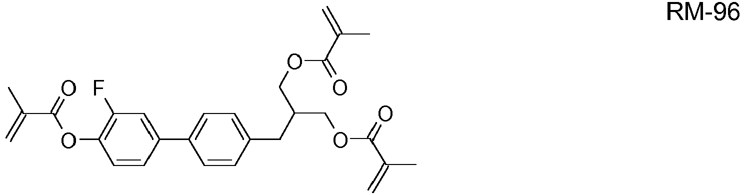

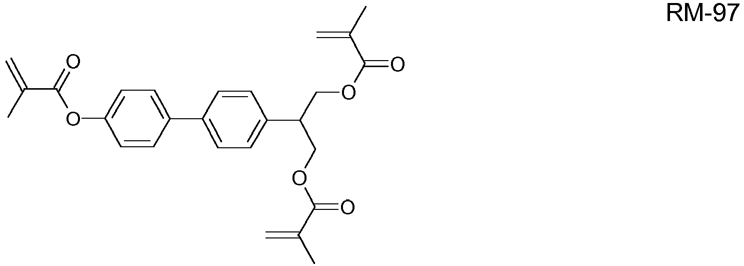

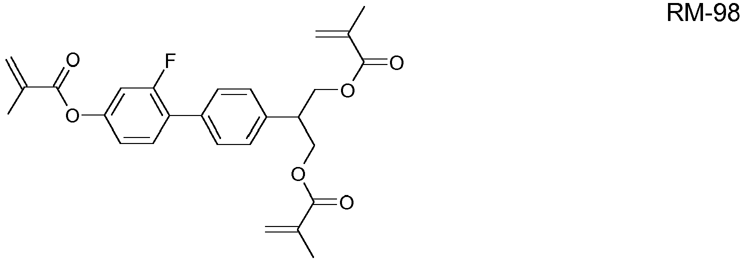

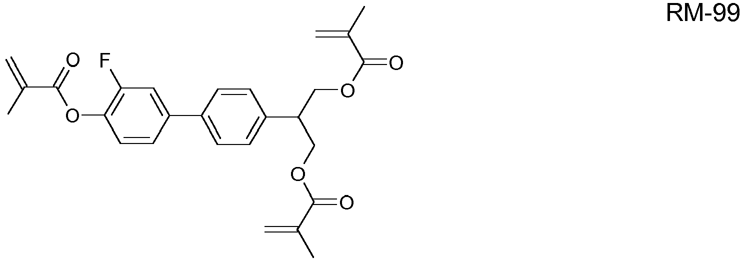

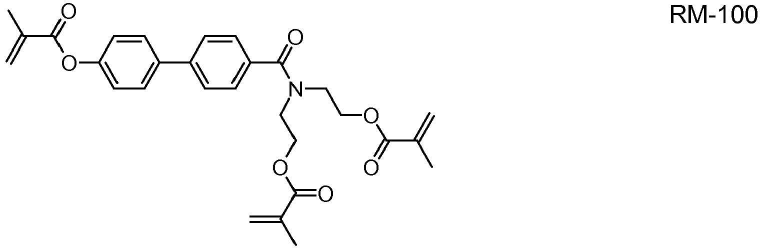

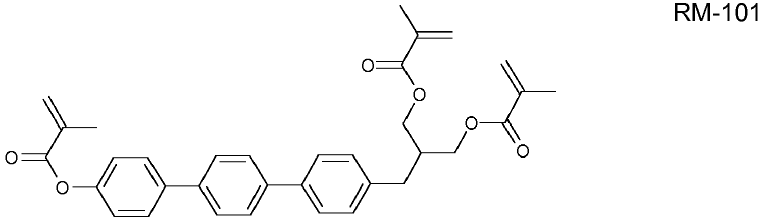

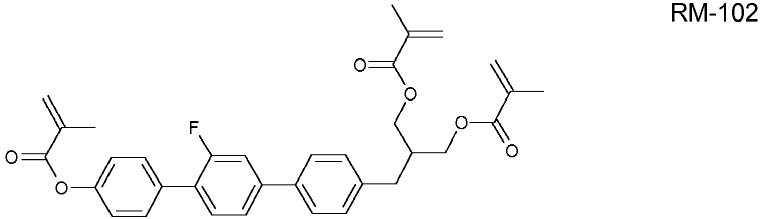

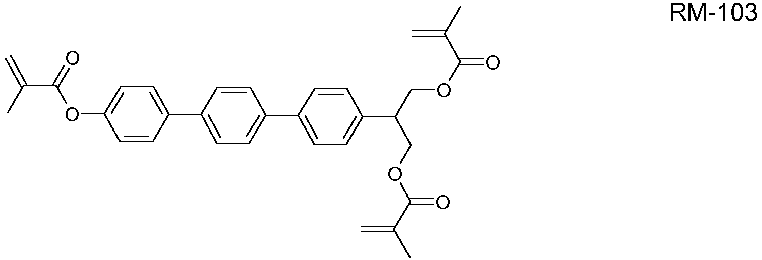

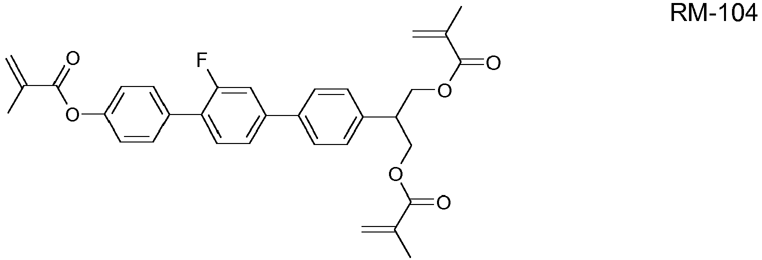

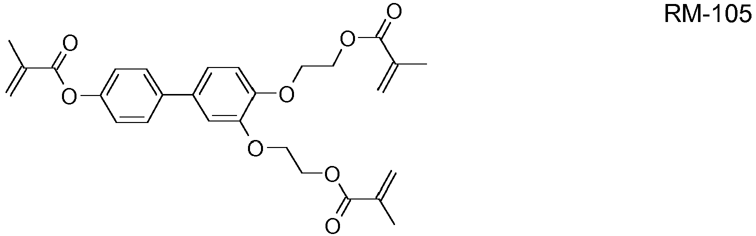

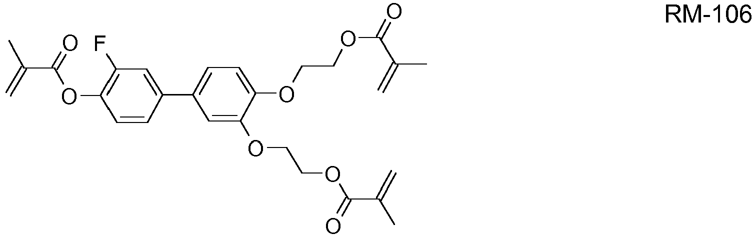

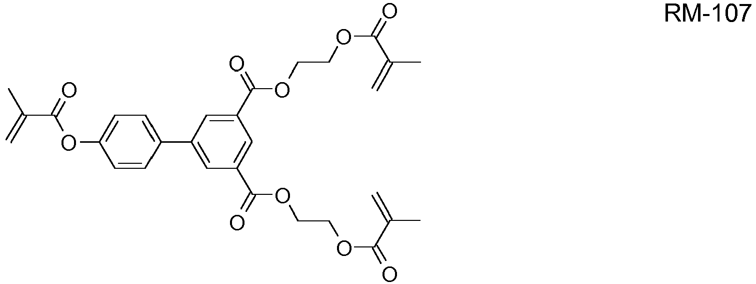

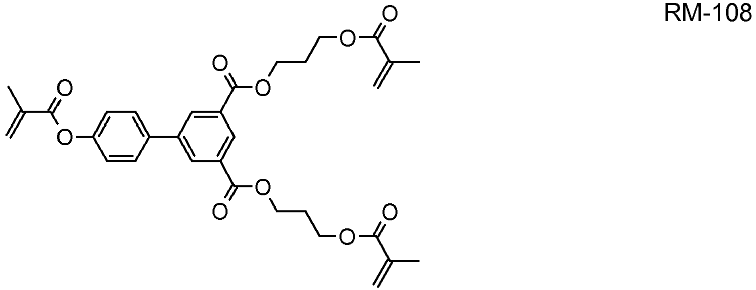

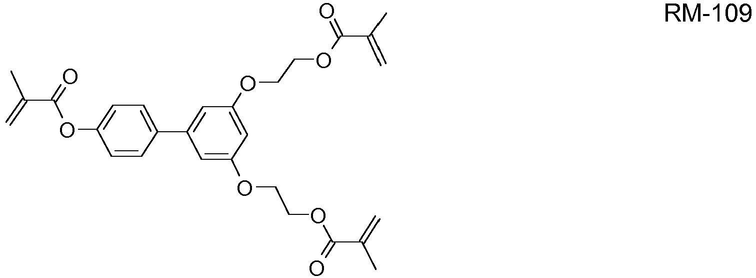

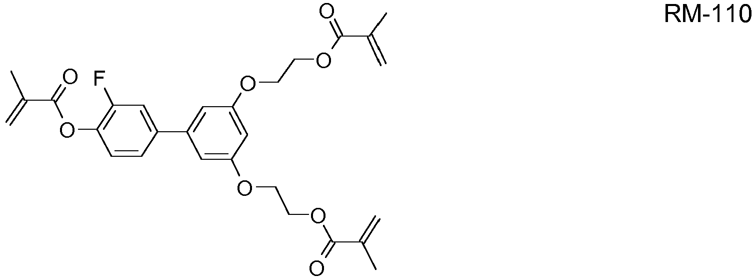

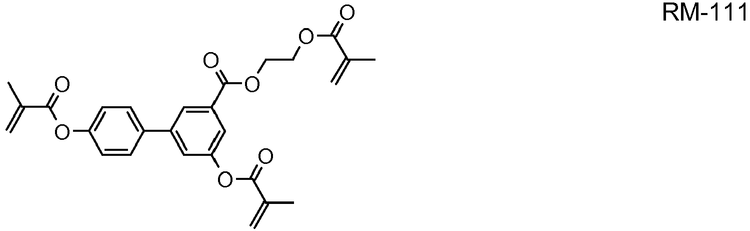

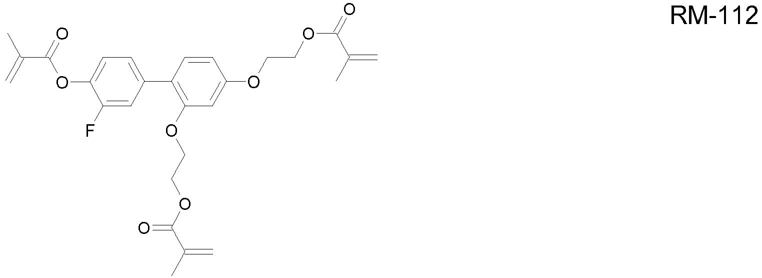

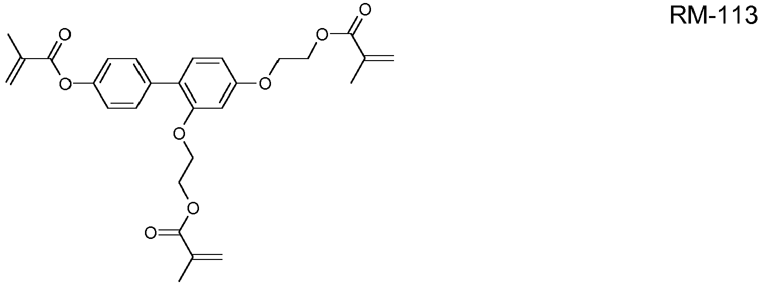

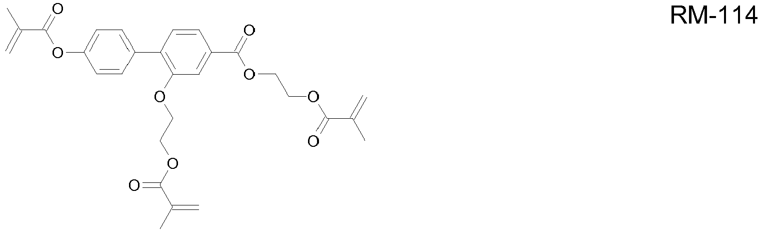

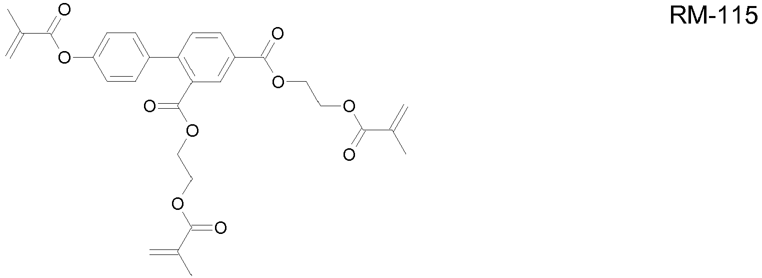

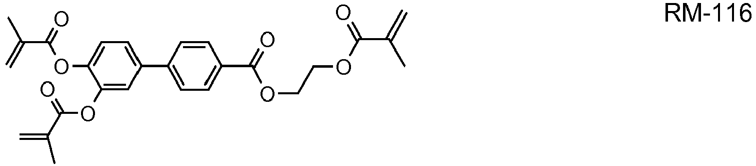

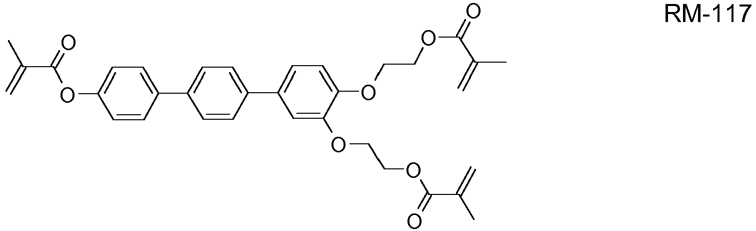

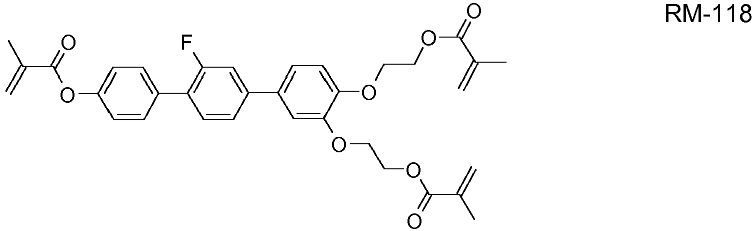

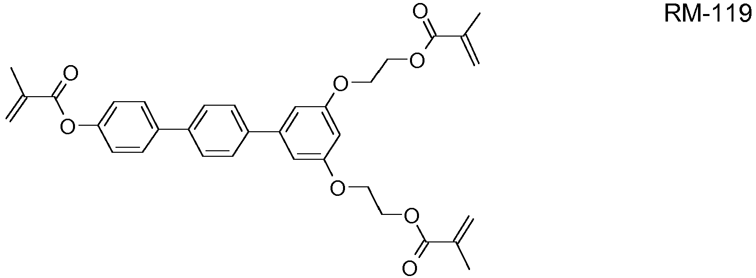

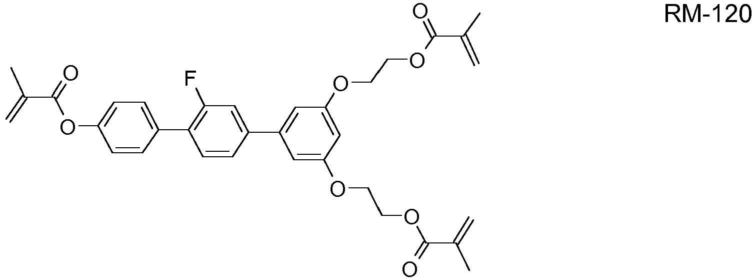

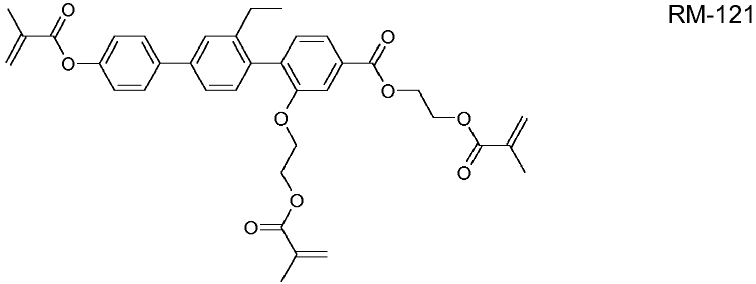

2. Milieu LC selon la revendication 1, **caractérisé en ce que** les composés de la formule AN sont sélectionnés parmi les formules qui suivent : 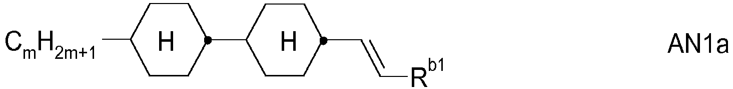 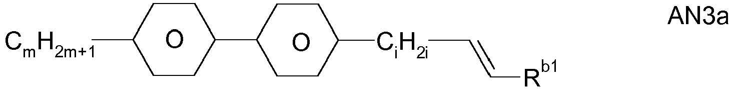 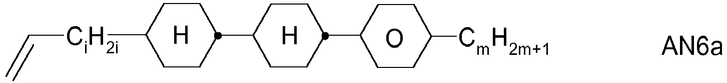 dans lesquelles m représente 1, 2, 3, 4, 5 ou 6, i représente 0, 1, 2 ou 3, et R^{b1} représente H, CH₃ ou C₂H₅.

3. Milieu LC selon la revendication 1 ou 2, **caractérisé en ce que** les composés de la formule AN sont sélectionnés parmi les formules qui suivent :

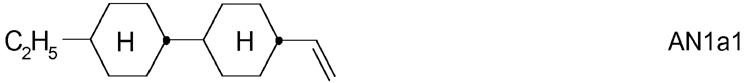

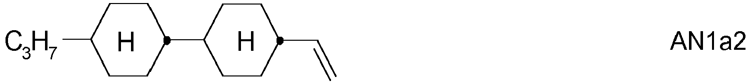

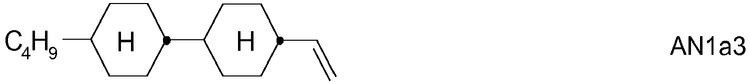

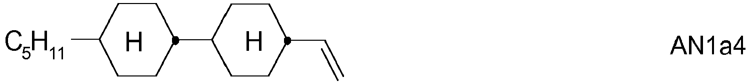

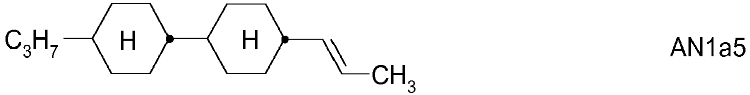

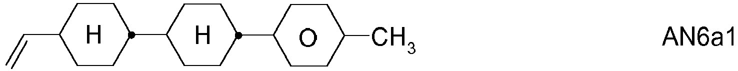

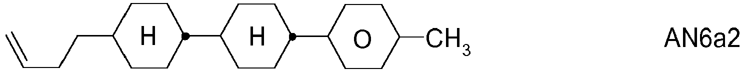

4. Milieu LC selon l'une quelconque des revendications 1 à 3, **caractérisé en ce que** les composés de la formule Q sont sélectionnés parmi les sous-formules qui suivent : 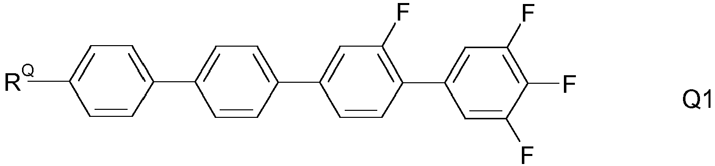 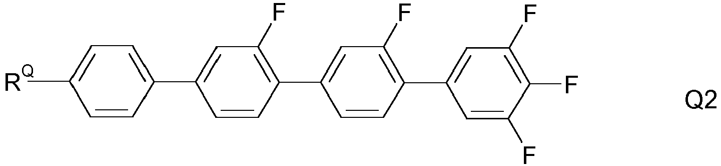 dans lesquelles R^{Q} présente l'une des significations selon la revendication 1.

5. Milieu LC selon l'une quelconque des revendications 1 à 4, **caractérisé en ce que** les composés de la formule Q sont sélectionnés parmi la formule Q1 : 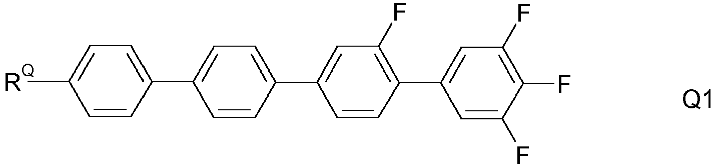 dans laquelle R^{Q} est n-propyle.

6. Milieu LC selon l'une quelconque des revendications 1 à 5, **caractérisé en ce que** les composés de la formule S sont sélectionnés parmi les sous-formules qui suivent : 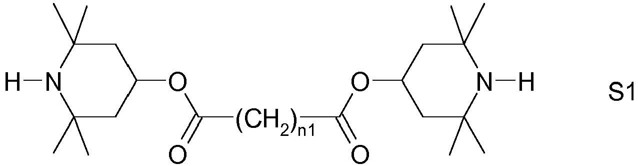 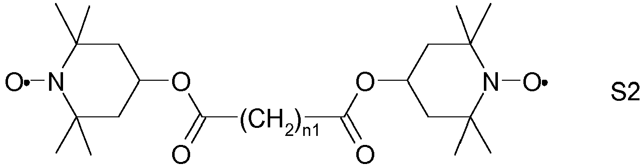 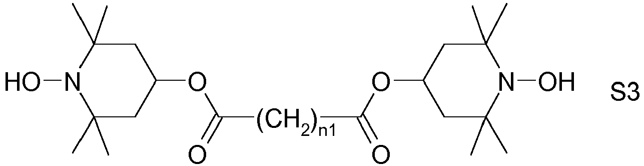 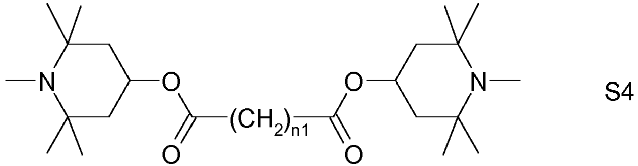 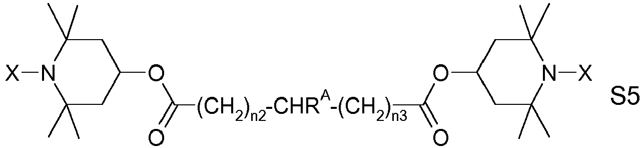 dans lesquelles :
X est H, CH₃, OH ou O• ;
R^{A} est méthyle, éthyle, propyle, butyle, pentyle ou hexyle ;
n1 est un entier de 2 à 12 ;
n2 est 0 ou un entier de 1 à 12, de préférence 0 ;
n3 est 0 ou un entier de 1 à 12 ; et
dans les formules S1 à S4, un ou plusieurs atome(s) de H dans le radical (CH₂)ₙ₁ est/sont en option remplacé(s) par un groupe méthyle, éthyle, propyle, butyle, pentyle ou hexyle.

7. Milieu LC selon l'une quelconque des revendications 1 à 6, **caractérisé en ce que** les composés de la formule S sont sélectionnés parmi les sous-formules qui suivent :

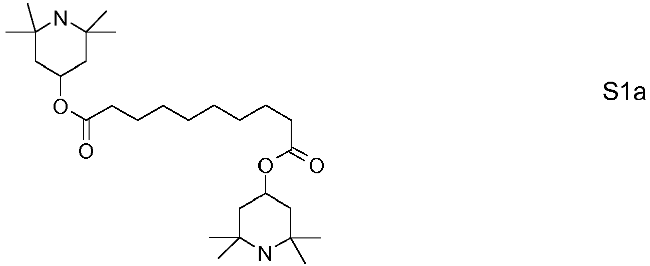

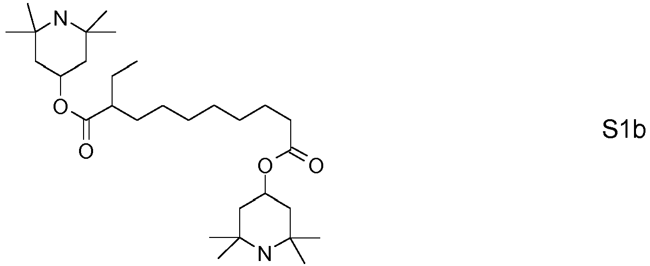

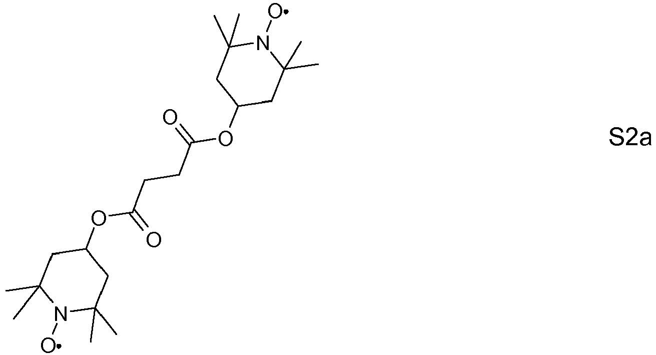

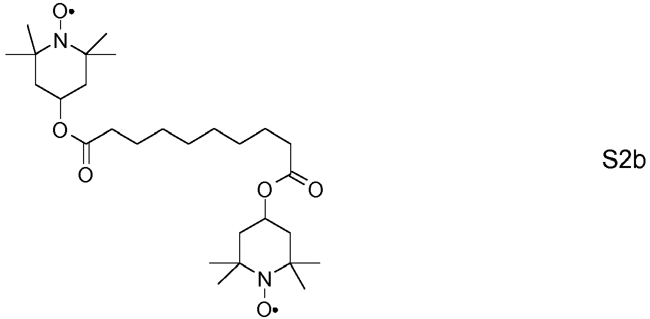

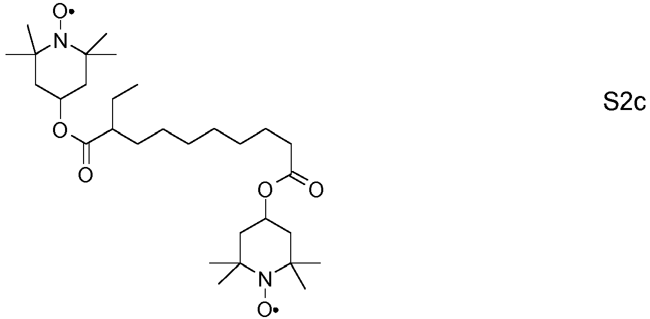

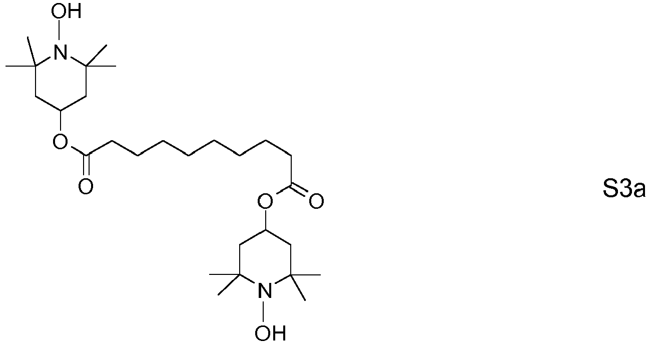

8. Milieu LC selon l'une quelconque des revendications 1 à 7, **caractérisé en ce qu'**il comprend un ou plusieurs composé(s) qui est/sont sélectionné(s) parmi les formules CY et PY : 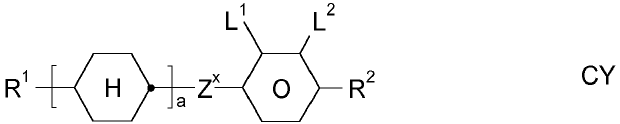 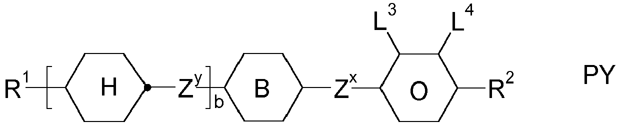 dans lesquelles :
a représente 1 ou 2 ;
b représente 0 ou 1 ; 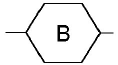
représente 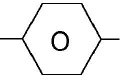 ou 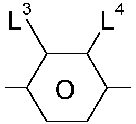
R¹ et R² représentent chacun, de manière indépendante l'un de l'autre, alkyle qui comporte de 1 à 12 atome(s) de C, où, en outre, un ou deux groupe(s) CH₂ non adjacents peut/peuvent être remplacé(s) par -O-, -CH=CH-, -CO-, -OCO- ou -COO- de telle sorte que des atomes de O ne soient pas liés directement les uns aux autres, de préférence alkyle ou alcoxy qui comporte de 1 à 6 atome(s) de C ;
Z^{x} et Z^{y} représentent chacun, de manière indépendante l'un de l'autre, -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- ou une liaison simple, de préférence une liaison simple ;
L¹⁻⁴ représentent chacun, de manière indépendante les uns des autres, F, Cl, OCF₃, CF₃, CH₃, CH₂F, CHF₂.

9. Milieu LC selon l'une quelconque des revendications 1 à 8, **caractérisé en ce qu'**il comprend un ou plusieurs composé(s) de la formule qui suit : 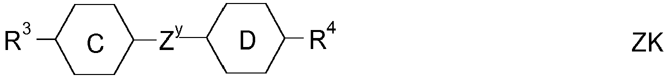 dans laquelle les radicaux individuels présentent les significations qui suivent : 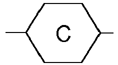 représente 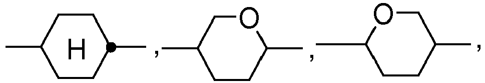 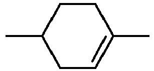 ou 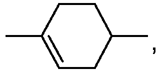 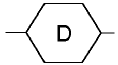 représente 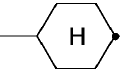 ou 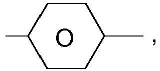
R³ et R⁴ représentent chacun, de manière indépendante l'un de l'autre, alkyle qui comporte de 1 à 12 atome(s) de C, où, en outre, un ou deux groupe(s) CH₂ non adjacents peut/peuvent être remplacé(s) par -O-, -CH=CH-, -CO-, -O-CO- ou -CO-O- de telle sorte que des atomes de O ne soient pas liés directement les uns aux autres ;
Z^{y} représente -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- ou une liaison simple, de préférence une liaison simple.

10. Affichage LC comprenant un milieu LC tel que défini selon l'une quelconque des revendications 1 à 9.

11. Affichage LC selon la revendication 10, lequel est un affichage VA, PSA, PS-VA, PA-VA, PALC, FFS, PS-FFS, IPS ou PS-IPS.
